# EUROPÄISCHE PATENTSCHRIFT

(11) **EP 3 793 345 B1**
(45) Veröffentlichungstag und Bekanntmachung des Hinweises auf die Patenterteilung: **05.07.2023**
(21) Anmeldenummer: 20751499.3
(22) Anmeldetag: 30.07.2020
(51) Int. Cl.: A01G 23/00

(54) **MITTELWALD, VERFAHREN ZU DESSEN BEGRÜNDUNG UND VERFAHREN ZU DESSEN ÜBERFÜHRUNG IN EINEN WIRTSCHAFTSDAUERWALD**
TIMBERLAND, METHOD FOR ITS PLANTING, AND METHOD FOR ITS TRANSFER INTO A SUSTAINED ECONOMIC FOREST
FUTAIE, PROCÉDÉ POUR SA PLANTATION ET PROCÉDÉ POUR SON TRANSFERT DANS UNE FORET ECONOMIQUE SOUTENUE

(30) Priorität: 31.07.2019 DE 102019120745
(43) Veröffentlichungstag der Anmeldung: 24.03.2021
(73) Patentinhaber: Nürnberger, Michael, 95615 Brand bei Marktredwitz (DE)
(72) Erfinder: Nürnberger, Michael, 95615 Brand bei Marktredwitz (DE)
(74) Vertreter: Viering, Jentschura & Partner mbB Patent- und Rechtsanwälte
(86) Internationale Anmeldenummer: PCT/EP2020/071494
(87) Internationale Veröffentlichungsnummer: WO 2021/019010

(56) Entgegenhaltungen:
- DE-B3-102016 111 120
- US-A1- 2012 145 056
- US-B1- 7 412 932

## Beschreibung

### Technisches Gebiet

Die vorliegende Erfindung betrifft einen Mittelwald, insbesondere einen streifenweise angelegten Mittelwald, mit mindestens drei Dauerwaldstreifen aufweisend Dauerwaldbäume und mindestens zwei Niederwaldstreifen aufweisend Niederwaldbäume, wobei Niederwaldstreifen und Dauerwaldstreifen abwechselnd angeordnet sind; ein Verfahren zum Begründen eines Mittelwalds; und ein Verfahren zur Überführung eines Mittelwalds in einen Wirtschaftsdauerwald.

### Stand der Technik

Ein Mittelwald ist eine bekannte Waldbauform. Ein Mittelwald ist ein zweischichtiger Wald, bestehend aus Unterholz und Oberholz. Das Unterholz ist eine niedrig bleibende Bestandsschicht von Bäumen, die aus Stockausschlägen oder Wurzelbrut hervorgeht. Das Unterholz wird regelmäßig in kürzeren Zeiträumen geerntet und meist als Brennholz verwertet. Das Oberholz besteht aus älteren Bäumen, die erst nach einer längeren Lebensdauer geerntet werden. Das Oberholz dient hauptsächlich zur Gewinnung von Bau- oder Möbelholz. Typische Baumarten in Mittelwälder sind Stiel- und Traubeneiche, Esche, Ahorn, Ulme und Linde.

Die Begründung dieser historischen Waldbauform erfolgt durch Stehenlassen von sogenannten Überhältern und Ernte des Unterholzes aus einem ursprünglich unstrukturierten Baumartenbestand. Die Ernte des Unterholzes ist aufgrund der unstrukturiert gewachsenen Waldstruktur und aufgrund der aufwändig anzulegenden Rückegassen im Wald derart kostenintensiv, dass diese Art der Waldbauform heutzutage kaum noch praktiziert wird, obwohl der Mittelwald eine besonders ökologische Art des Waldbaus darstellt.

Der Begriff "unstrukturierter Baumartenbestand" bezeichnet im Rahmen dieser Offenbarung einen Baumartenbestand der nicht gezielt (bzw. systematisch) angepflanzt wurde, sondern auf natürliche Art und Weise entstanden ist (z.B. ein Baumartenbestand aus Bäumen der sich von selbst begründet hat, beispielweise durch "angeflogenen Samen") oder angepflanzt wurde, ohne eine gezielte Auswahl der Baumarten nach Dauerwaldbäumen und Niederwaldbäumen zu treffen und diese streifenweise in Form von Dauerwaldstreifen und Niederwaldstreifen anzupflanzen.

Die Begründung eines Dauerwaldes erfolgt nach gängiger Praxis derart, dass die zur Verfügung gestellte Erstaufforstungsfläche homogen mit einer oder mehrerer Dauerwaldbaumarten bepflanzt wird. Niederwaldbaumarten werden aufgrund des schnellen Jugendwachstums nicht gepflanzt, da die Dauerwaldkultur aufgrund von Lichtmangel gefährdet werden könnte. Homogen heißt, dass die Reihenabstände der Dauerwaldbaumreihen über die gesamte Begründungsfläche gleichen Abstand zueinander aufweisen und damit gleich weit auseinanderliegen. Im Laufe der Zeit erfolgen Einzelentnahmen von Dauerwaldbäumen, jedoch werden keine ganzen Baumreihen entnommen, sondern lediglich die ertragsstärksten Dauerwaldbäume durch Entnahme von Bedrängern gefördert, so dass letztendlich 80 bis 600 Stück/ha Dauerwaldbäume schlagfähiges Alter erreichen. Eine systematische Ernte und wieder auf den Stock setzten, wie im traditionellen Niederwaldbetrieb üblich, wird bei dieser Anbaumethode nicht praktiziert. Bei der Erstaufforstung eines Dauerwaldes nach gängiger Praxis ist der Humusaufbau innerhalb der ersten 5 bis 10 Jahren aufgrund des in der Regel geringen Jugendwachstums der angepflanzten Bäume langsam, da anfangs aufgrund der kleinen Kronendurchmesser der jungen Dauerwaldbäume nur geringe Laubmengen zu Boden fallen und außerdem eine geringe Wurzeldichte im Oberboden vorherrscht. Weiterhin fallen innerhalb der ersten 20 Jahre vergleichsweise geringe Mengen an beispielsweise thermisch verwertbarer Biomasse an, da Dauerwaldbaumarten in der Regel erst ab einem Baumalter von 10 bis 20 Jahren erhöhte Holzzuwachsraten aufweisen.

Eine weitere gängige Methode zur Wiederbeforstung geernteter Wirtschaftswälder ist die Begründung eines Dauerwaldes mithilfe eines sogenannten Vorwaldes. In diesem Falle lässt man Pionierbaumarten, wie Birke, Vogelbeere oder Espe zuerst ohne menschliches Zutun auf der kahlgeschlagenen Waldfläche wild anfliegen und pflanzt anschließend Dauerwaldbäume in diesen zufällig angeordneten Pionierbaumvorwald. Für diese Methode geeignete Pionierbaumarten zeichnen sich durch ein durchlässiges Kronendach aus, so dass noch genügend Licht auf die frisch gepflanzten Dauerwaldbäume fallen kann. Die Pionierbaumarten des Vorwaldes können bei zu dichtem Aufwuchs schnell zu Bedrängern der Dauerwaldbäume werden. Die Ernte oder Einzelentnahme der Pionierbäume ist mühsam, da beispielsweise zuerst Rückegassen angelegt werden müssen. Ein streifenweise angelegter Pflanzplan mit Pionierbaumarten und Dauerwaldbaumarten ist nicht bekannt.

Eine gängige Methode zur Bewirtschaftung von landwirtschaftlichen Flächen ist die Begründung eines Niederwaldes mit schnellwachsenden Baumarten, welche im Kurzumtrieb - beispielsweise mit Umtriebs-Zeiten von 3 bis 5 Jahren - bewirtschaftet werden. Bei der Begründung und Bewirtschaftung von schnellwachsenden Baumarten im Kurzumtrieb handelt es sich nicht um Wald, sondern um eine landwirtschaftliche Dauerkultur. Die Anbaudauer der schnellwachsenden Bäume ist auf 20 bis 30 Jahre begrenzt. Der Grund für die limitierte Bewirtschaftungszeit ist das Nachlassen des Stockaustriebes mit zunehmendem Alter. Es handelt sich meist um Monokulturen mit nur einer Baumart, die nur für eine bestimmte Zeit bewirtschaftet wird. Der Kurzumtrieb mit schnellwachsenden Baumarten wird meist unter der Verwendung der Baumarten Pappel oder Weide durchgeführt. Der Grund dafür sind die geringen Begründungskosten, da im Falle der Baumarten Pappel oder Weide Steckhölzer anstelle von Stecklingen oder Saatgut zum Anpflanzen genutzt werden können. Stecklinge sind teuer im Einkauf und arbeitsaufwändig in der Begründung der Kultur. Das Saatgut selbst ist günstig und auch die Begründung mit Sämaschinen ist günstig, aber die Regulierung der Begleitvegetation ist sehr arbeitsaufwändig, da das Saatgut lange Zeit braucht, um einen 20 bis 80 cm langen Jungstamm auszubilden.

In der Regel werden die Wurzeln der Niederwaldbäume nach Ende der 20 bis 30-jährigen Kulturdauer mit einer Rodefräse bis zu einer Bodentiefe von 40 cm zerkleinert und anschließend das Feld für die nächste Bewirtschaftung vorbereitet. Dabei wird der während der Kurzumtriebs-Bewirtschaftung aufgebaute Dauerhumus nahezu vollständig wieder umgewandelt und der im Dauerhumus gebundene Kohlenstoff als CO₂ in die Umwelt abgegeben.

Im Prinzip ist es möglich, dass man aus dem Bestand mit Pappeln oder Weiden Überhälter durchwachsen lässt, um daraus einen Dauerwald zu begründen. Nachteile bei dieser Vorgehensart sind, dass es sich bei den schnellwachsenden Baumarten um Pionierbaumarten handelt, die sich durch eine kurze maximale Lebensdauer auszeichnen, dass das Holz in der Regel von geringerem Wert ist und dass es an einer Baumartendiversifizierung mangelt.

Die DE 10 2016 111 120 B3 beschreibt die Kultivierung schattenliebender Pflanzen, wobei eine Schattenkultur zwischen Baumreihen junger Bäume angepflanzt wurde. Wesentliches Merkmal der offenbarten Lehre ist, dass das Kronendach der Baumreihen der jungen Bäume zum Zeitpunkt des Anbaus der schattenliebenden Pflanzen mindestens 50% Schatten bei der Schattenanbaufläche erzeugt. Die schattenliebenden Pflanzen werden dabei zwischen 1 bis 8 m weit auseinanderliegenden Baumreihen (bzw. Baumstreifen) angebaut.

Weiterhin existieren noch sogenannte Agroforstsysteme, bei denen Baumreihen (bzw. Baumstreifen) in Abständen von 16 bis 100 m gepflanzt werden und zwischen den Baumreihen (bzw. Baumstreifen) herkömmliche Landwirtschaft betrieben wird. Eine starke Beschattung der zwischen den Baumreihen (bzw. Baumstreifen) angeordneten und landwirtschaftlich genutzten Fläche ist nicht erwünscht, da damit die landwirtschaftliche Nutzung zurückgedrängt würde. Der Kronenschluss zwischen Bäumen benachbarter Baumreihen (bzw. Baumstreifen), welcher zu einer starken Beschattung der landwirtschaftlich genutzten Fläche führen würde, wird durch die großen Abstände zwischen den Baumreihen (bzw. Baumstreifen) ausgeschlossen. Die landwirtschaftliche Nutzung der Zwischenfläche wirkt sich nachteilig auf den Humusaufbau aus, da der Boden wendend mit einem Pflug bearbeitet wird.

Innerhalb der Definition von landwirtschaftlichen Nutzflächen existiert auch der "Niederwald im Kurzumtrieb" als sogenannte Dauerkultur. Das heißt, dass theoretisch ein Agroforstsystem mit "Niederwald im Kurzumtrieb" (als landwirtschaftlich genutzter Streifen) zwischen Dauerwaldbaumreihen, welche im Abstand von z.B. 16 bis 100 m stehen, betrieben werden kann. Ein Agroforstsystem mit "Niederwald im Kurzumtrieb" bleibt als Ganzes eine landwirtschaftlich genutzte Fläche und wird kein Wald, da durch den weiten Abstand der Baumreihen (z.B. 16 bis 100 m) genau der waldbildende Kronenschluss nicht zustande kommt. Ganz im Gegenteil, hier wird der waldbildende Kronenschluss mit Absicht verhindert. Der landwirtschaftlich betriebene "Niederwald im Kurzumtrieb" -welcher sich z.B. auch zwischen agroforstlich betrieben Baumreihen befinden kann - wird nach einer bestimmten Nutzungsdauer von z.B. 20 oder 25 Jahren wieder vollständig gerodet.

Der Begriff "roden" bezeichnet im Rahmen dieser Offenbarung die Entfernung von Bäumen samt Wurzeln.

Der Begriff "Wald" bezeichnet im Rahmen dieser Offenbarung eine mit Bäumen bestockte Fläche von einem Hektar oder mehr, wobei zumindest einzelne Bäume so nah aneinander stehen, dass sich die Baumkronen im Adult-Alter (z.B. 50, 60 oder 80) Jahren zumindest teilweise berühren können.

Kein aktuell bekanntes Waldbaukonzept empfiehlt Oberwald-Zielabstände von mehr als 10 oder 11 m.

Aufgabe der vorliegenden Erfindung ist es ein praktikables und kostengünstiges System zum Begründen und Betreiben eines Mittelwaldes bereitzustellen, welcher mit fortschreitender Zeit in einen ökologisch sinnvollen Wirtschaftsdauerwald gewandelt werden kann. Aufgabe der Erfindung ist weiterhin durch den streifenweisen und zeitlich limitierten Anbau von schnellwachsenden Niederwaldbäumen relativ schnell einen hohen Biomasseertrag in Form von Holz zu produzieren und damit gleichzeitig einen schnellen Humusaufbau im Oberboden zu bewirken.

US 7,412,932 B1 offenbart ein Verfahren zur Bewirtschaftung von Waldflächen, wobei das Verfahren aufweist: das Pflanzen einer ersten Baumkultur in einer ersten und einer zweiten Reihe, mit einem Baumabstand zwischen benachbarten Bäumen und einem ersten Reihenabstand zwischen der ersten und zweiten Reihe; das Pflanzen einer ersten Energiepflanze innerhalb des ersten Reihenabstands; und das Pflanzen einer zweiten Baumkultur in einer dritten Reihe, mit einem Baumabstand zwischen benachbarten Bäumen und einem zweiten Reihenabstand zwischen der zweiten und dritten Reihe, wobei sich der erste Reihenabstand und der zweite Reihenabstand unterscheiden und wobei unter Berücksichtigung des Schattenwurfs der Baumkulturen sichergestellt wird, dass ausreichend Sonnenlicht die Energiepflanzen erreicht.

### Kurzdarstellung

Die vorliegende Erfindung betrifft einen Mittelwald gemäß Anspruch 1, ein Verfahren zur Begründung eines Mittelwalds gemäß Anspruch 8 und ein Verfahren zur Begründung eines Wirtschaftsdauerwalds gemäß Anspruch 10. Bevorzugte Ausführungsformen sind in den abhängigen Ansprüchen offenbart.

### Beschreibung der Zeichnungen

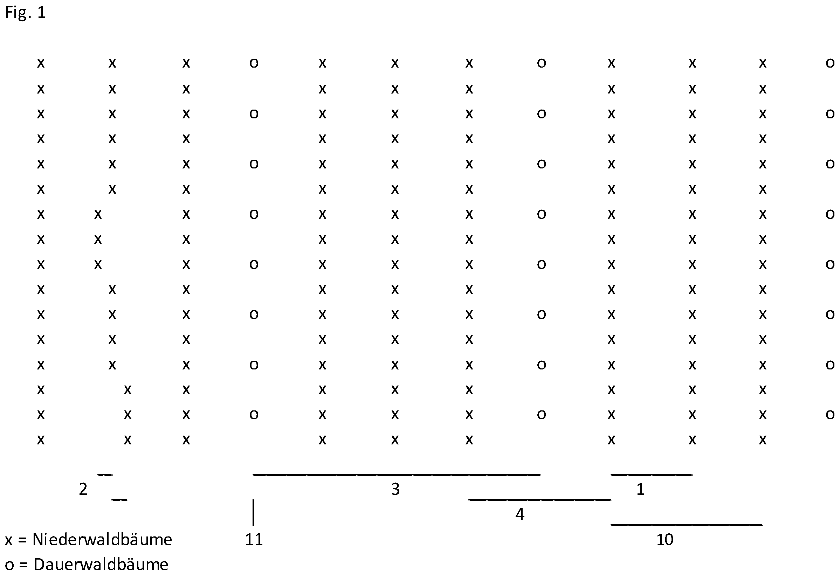

Fig. 1 zeigt einen Mittelwald bestehend aus einreihigen Dauerwaldstreifen im Wechseln mit dreireihigen Niederwaldstreifen. Ziffer 1 zeigt den Reihenabstand der Niederwaldreihen innerhalb eines Niederwaldstreifens. Ziffer 2 zeigt die Abweichung des Reihenabstandes innerhalb einer Niederwaldreihe in Bezug auf die Hauptpflanzachse. Ziffer 3 zeigt den kürzesten Abstand benachbarter Dauerwaldkorridore (o... o). Ziffer 4 zeigt den kürzesten Abstand benachbarter Niederwaldkorridore (x...x). Ziffer 10 zeigt die Breite des Niederwaldkorridors und Ziffer 11 zeigt die Breite des Dauerwaldkorridors.

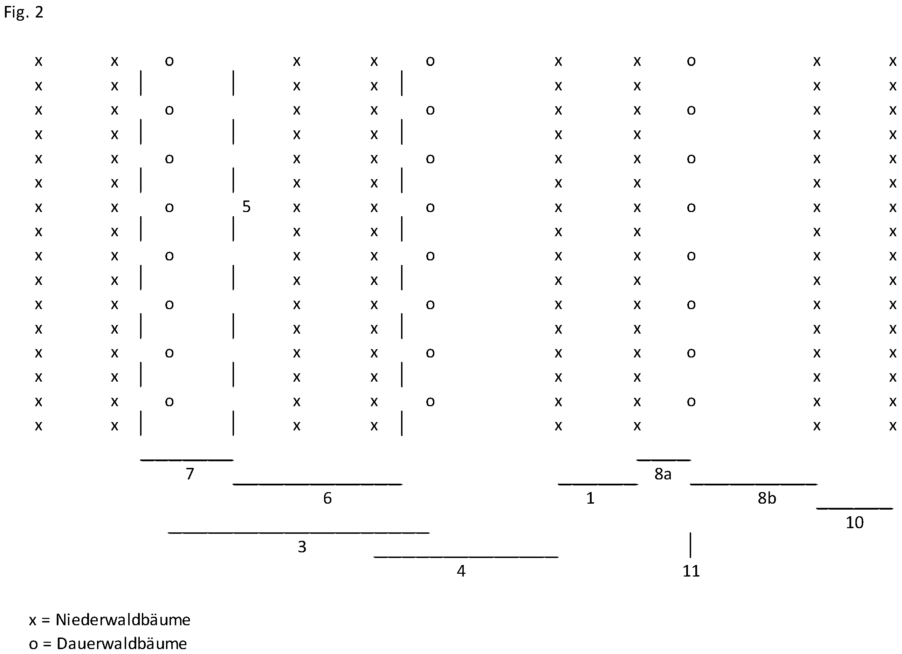

Fig. 2 zeigt einen Mittelwald bestehend aus einreihigen Dauerwaldstreifen im Wechseln mit zweireihigen Niederwaldstreifen. Ziffer 3 zeigt den kürzesten Abstand benachbarter Dauerwaldkorridore (o... o). Ziffer 4 zeigt den kürzesten Abstand benachbarter Niederwaldkorridore (x...x). Ziffer 5 zeigt den halben Abstand einer Dauerwaldreihe von der unmittelbar angrenzenden Niederwaldreihe. Ziffer 6 zeigt die Niederwaldstreifenbreite (BNW). Ziffer 7 zeigt die Dauerwaldstreifenbreite (BDW). Ziffern 8a und 8b zeigen den Außengrenze-Abstand zwischen einem Dauerwaldkorridor und einem unmittelbar angrenzenden Niederwaldkorridor. Ziffer 1 zeigt den Reihenabstand der Niederwaldreihen innerhalb eines Niederwaldstreifens. Ziffer 10 zeigt die Breite des Niederwaldkorridors und Ziffer 11 zeigt die Breite des Dauerwaldkorridors.

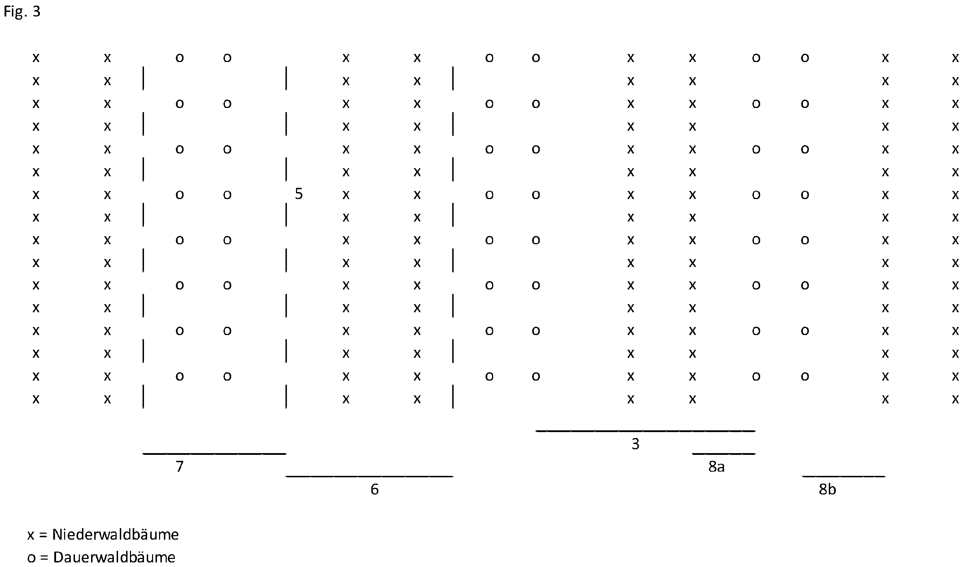

Fig. 3 zeigt einen Mittelwald bestehend aus zweireihigen Dauerwaldstreifen im Wechseln mit zweireihigen Niederwaldstreifen. Ziffer 3 zeigt den kürzesten Abstand benachbarter Dauerwaldkorridore (o... o). Ziffer 6 zeigt die Niederwaldstreifenbreite (BNW). Ziffer 7 zeigt die Dauerwaldstreifenbreite (BDW). Ziffern 8a und 8b zeigen den Außengrenze-Abstand zwischen einem Dauerwaldkorridor und einem unmittelbar angrenzenden Niederwaldkorridor.

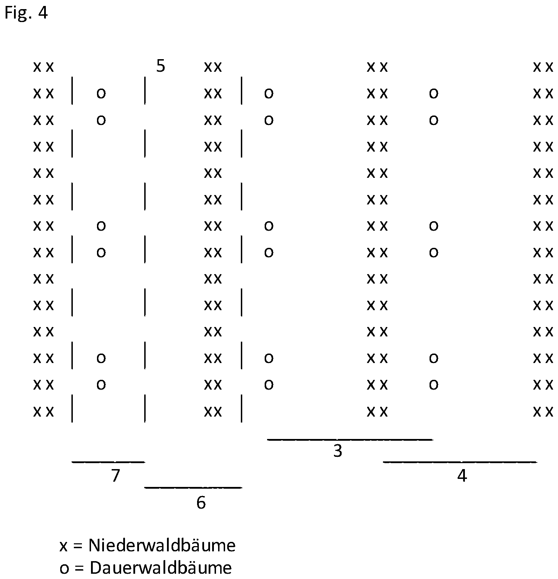

Fig. 4 zeigt einen Mittelwald bestehend aus einreihigen Dauerwaldstreifen im Wechseln mit doppelreihigen Niederwaldstreifen. Ziffer 3 zeigt den kürzesten Abstand benachbarter Dauerwaldkorridore (o... o). Ziffer 4 zeigt den kürzesten Abstand benachbarter Niederwaldkorridore (x...x). Ziffer 5 zeigt den halben Abstand einer Dauerwaldreihe von den benachbarten Niederwaldreihen. Ziffer 6 zeigt die Niederwaldstreifenbreite (BNW). Ziffer 7 zeigt die Dauerwaldstreifenbreite (BDW).

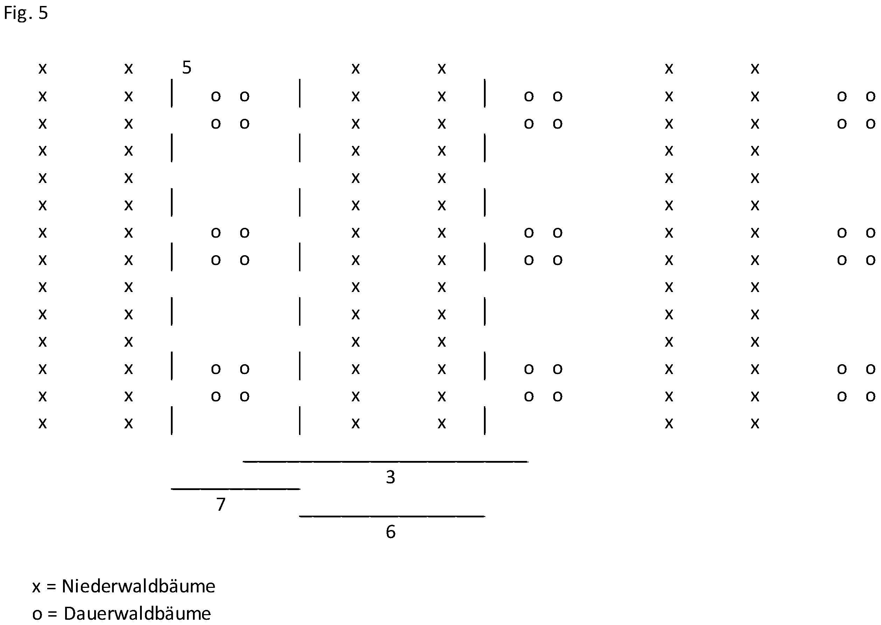

Fig. 5 zeigt einen Mittelwald bestehend aus zweireihigen Dauerwaldstreifen mit Gruppenweise angelegten Dauerwaldbäumen im Wechseln mit zweireihigen Niederwaldstreifen. Ziffer 3 zeigt den kürzesten Abstand benachbarter Dauerwaldkorridore (o... o). Ziffer 5 zeigt den halben Abstand einer Dauerwaldreihe von der unmittelbar angrenzenden Niederwaldreihe. Ziffer 6 zeigt die Niederwaldstreifenbreite (BNW). Ziffer 7 zeigt die Dauerwaldstreifenbreite (BDW).

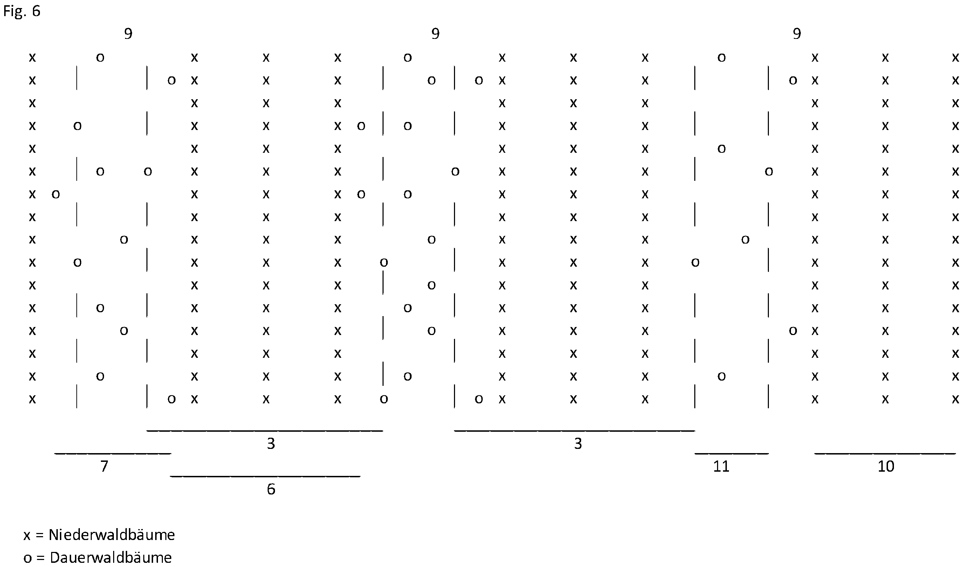

Fig. 6 zeigt einen Mittelwald bestehend aus unregelmäßig angelegten Dauerwaldstreifen im Wechsel mit dreireihigen Niederwaldstreifen. Ziffer 3 zeigt den kürzesten Abstand benachbarter Dauerwaldkorridore (o... o). Ziffer 6 zeigt die Niederwaldstreifenbreite (BNW). Ziffer 7 zeigt die Dauerwaldstreifenbreite (BDW). Ziffer 9 zeigt den 75% Dauerwaldkorridor mit Ausreißer-Eliminierung. Ziffer 10 zeigt die Breite des Niederwaldkorridors und Ziffer 11 zeigt die Breite des Dauerwaldkorridors.

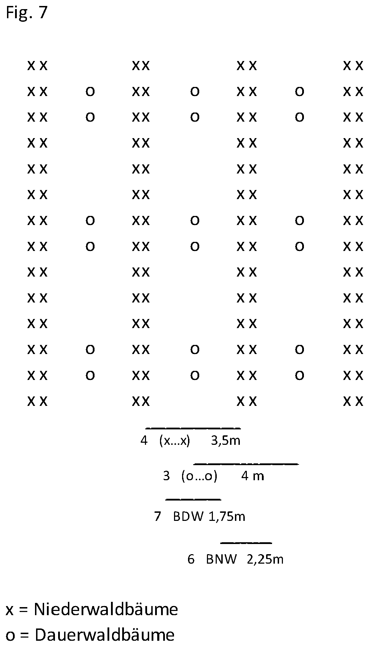

Fig. 7 zeigt einen Mittelwald, bestehend aus einreihigen Dauerwaldstreifen mit Gruppenweise angelegten Dauerwaldbäumen im Wechseln mit doppelreihigen Niederwaldstreifen. Ziffer 3 zeigt den kürzesten Abstand benachbarter Dauerwaldkorridore (o... o) in Meter und Ziffer 4 den kürzesten Abstand benachbarter Niederwaldkorridore (x...x) in Meter. Weiterhin zeigen Ziffer 7 die Dauerwaldstreifenbreite (BDW) und Ziffer 6 die Niederwaldstreifenbreite (BNW) jeweils in Meter.

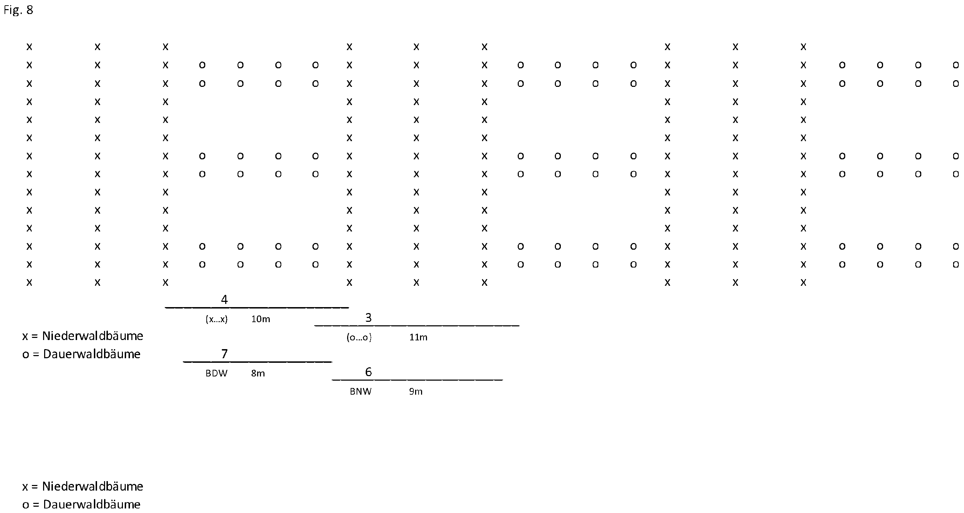

Fig. 8 zeigt einen Mittelwald, bestehend aus vierreihigen Dauerwaldstreifen mit Gruppenweise angelegten Dauerwaldbäumen im Wechseln mit dreireihigen Niederwaldstreifen. Ziffer 3 zeigt den kürzesten Abstand benachbarter Dauerwaldkorridore (o... o) in Meter und Ziffer 4 zeigt den kürzesten Abstand benachbarter Niederwaldkorridore (x...x) in Meter. Weiterhin zeigen Ziffer 7 die Dauerwaldstreifenbreite (BDW) und Ziffer 6 die Niederwaldstreifenbreite (BNW) jeweils in Meter.

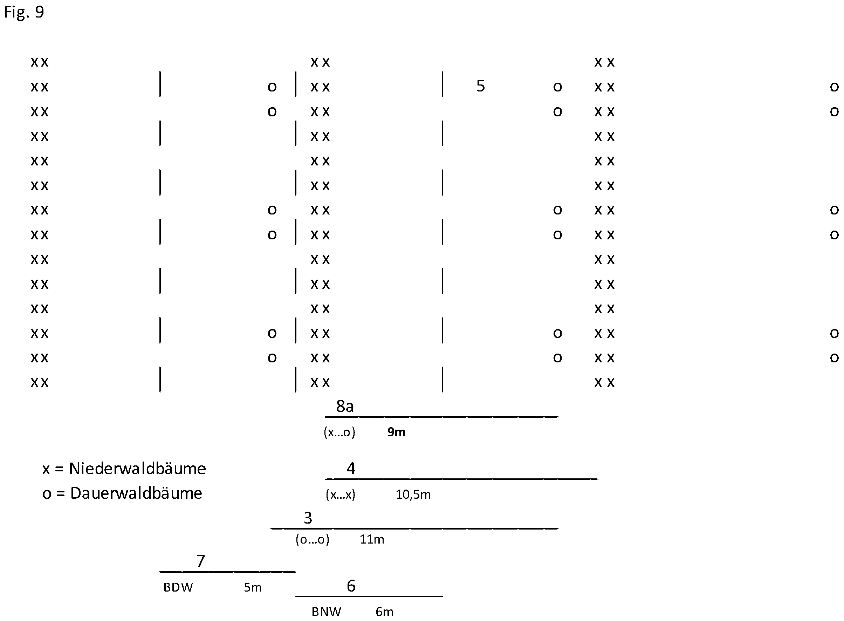

Fig. 9 zeigt einen Mittelwald bestehend aus einreihigen Dauerwaldstreifen mit Gruppenweise angelegten Dauerwaldbäumen im Wechseln mit doppelreihigen Niederwaldstreifen. Der kürzeste Abstand benachbarter Dauerwaldkorridore (o... o), der kürzeste Abstand benachbarter Niederwaldkorridore (x...x) und Ziffer 8a, der kürzeste Abstand zwischen dem Dauerwaldkorridor eines Dauerwaldstreifens und dem Niederwaldkorridor eines unmittelbar angrenzenden Niederwaldstreifens (x... o) sind in Meter angegeben. Weiterhin sind die Dauerwaldstreifenbreite (BDW) und die Niederwaldstreifenbreite (BNW) in Meter angegeben.

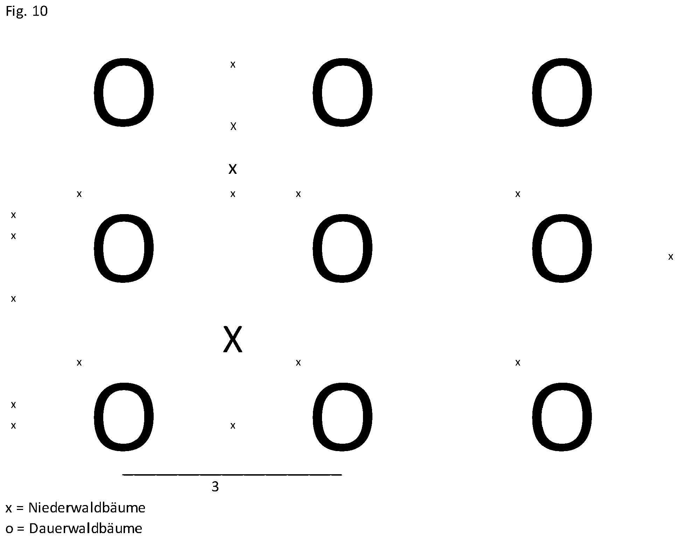

Fig. 10 zeigt einen Wirtschaftsdauerwald beispielsweise 40 Jahre nach Bestandsgründung und Umwandlung des Mittelwaldes. Im Wirtschaftsdauerwald dominieren die Dauerwaldbäume in Bezug auf den Holzvorrat in Volumenfestmeter Stammholz. Um diese Volumenfestmeterveränderung darzustellen wurden die Symbole für die Dauerwaldbäume vergrößert und die Symbole der Niederwaldbäume von Größe überwiegend verkleinert und nur sehr vereinzelt vergrößert. Fig. 10 zeigt, dass noch vereinzelte Niederwaldbäume unterschiedlicher Größe im Bestand verbleiben.

### Ausführliche Beschreibung

Die vorliegenden Erfindung betrifft einen strukturierten Mittelwald, der im Unterholz, durch den Anbau von schnellwachsenden Niederwaldbäumen in Form von Niederwaldstreifen (bzw. eines abgegrenzten Territoriums mit länglichem Grundriss das überwiegend Niederwaldbäume aufweist) einen erhöhten Biomasseertrag in Form von Holz produziert und gleichzeitig einen schnelleren Humusaufbau im Oberboden bewirkt und der im Oberholz, durch Anbau von Dauerwaldbäumen in Form von Dauerwaldstreifen (bzw. eines abgegrenzten Territoriums mit länglichem Grundriss das überwiegend Dauerwaldbäume aufweist) zur Grundlage für einen sich mit fortschreitender Zeit entwickelten ökologischen Wirtschaftsdauerwald wird.

Aus wirtschaftlicher Sicht liefert der beschriebene Mittelwald im Bereich der Niederwaldstreifen bereits frühzeitig hohe Holzmassenernten, welche deutlich über den Brennholzmassen herkömmlicher Mittelwälder liegen. Die frühen Erträge durch die Niederwaldstreifenbewirtschaftung stellen eine willkommene Zwischennutzung dar, während der Dauerwald noch keine Erträge erwirtschaftet. Bei den Dauerwaldbäumen wird bevorzugt die Verwertung als Bau- oder Möbelholz angestrebt, wobei sich die Dauerwaldbäume innerhalb der Dauerwaldstreifen durch den guten Zugang besonders leicht und effektiv, insbesondere maschinell pflegen lassen. Der Pflegeaufwand zur Erziehung der Dauerwaldbäume ist weiterhin aufgrund der verhältnismäßig geringen Anzahl der Dauerwaldbäume verringert.

Aus ökologischer Sicht stellt die Niederwaldbewirtschaftung innerhalb des streifenweise angelegten Mittelwaldes eine zeitlich begrenzte Übergangslösung dar. Die schnellwachsenden Niederwaldbäume produzieren in kurzen Umtriebs-Zeiten eine hohe Holzmasse, die zum Beispiel thermisch oder stofflich verwertet werden kann. Die Niederwaldbäume produzieren in kurzer Zeit viel Laub- und Wurzelstreu, welches als "Futter" für die Bodenorganismen und damit dem Dauerhumusaufbau dient. Innerhalb der unbestockten Übergangsflächen zwischen Dauerwaldkorridoren und Niederwaldkorridoren wächst Begleitvegetation, die ebenfalls den Dauerhumusaufbau beschleunigt. Wesentlich ist, dass die Niederwaldbäume nach einer Bewirtschaftungsdauer von beispielsweise 20 bis 35 Jahren von den nur teilweise bzw. einzeln entnommen Dauerwaldbäumen überwachsen und ausgedunkelt werden und während dieser Zeit bevorzugt keine Bodenbearbeitung im Niederwaldstreifen stattfindet. Somit ist gewährleistet, dass der zuvor geleistete Dauerhumusaufbau auch nachhaltig ist.

Insbesondere der gewünschte Wald-Typ bzw. die Baumartenmischung (Laub-, Nadel- oder Mischwald) kann durch die Auswahl der Baumarten innerhalb der Dauerwaldstreifen vom zuständigen Förster erfolgen. Hierbei können sowohl ökologische als auch forstwirtschaftliche Aspekte berücksichtigt werden.

Die Bewirtschaftung des streifenweise angelegten Mittelwaldes mit anschließender Umwandlung zum Wirtschaftsdauerwald wirkt sich mindernd auf die von Menschen generierte CO₂-Emission aus. Beispielweise ist es mithilfe der beschriebenen Niederwaldbewirtschaftung möglich relativ schnell und viel CO₂ aus der Atmosphäre zu binden, indem CO₂ über den Fotosyntheseprozess am Blattgrün zu Holz, Wurzeln und Laubstreu umgewandelt wird. Die Laubstreu verbleibt auf der Fläche und dient den Bodenorganismen als Futter um damit über einen mehrstufigen Prozess langzeitstabilen Dauerhumus zu bilden. Die sogenannte Wurzelstreu verhält sich ähnlich zur Laubstreu.

Das Holz der Niederwaldbäume kann zum Beispiel durch eine thermische Verwertung fossile Brennstoffe (z.B. Heizöl, Kohle oder Gas) substituieren oder stofflich (Spanplattenherstellung, Bioraffinerie) verwertet werden.

Insgesamt kann mit dem erfindungsgemäßen Waldbaukonzept eine wirtschaftliche und zugleich ökologisch attraktive Erweiterung des Waldanteils an der Landesfläche verwirklicht werden.

Insbesondere betrifft die vorliegenden Erfindung einen Mittelwald mit mindestens drei Dauerwaldstreifen aufweisend Dauerwaldbäume und mindestens zwei Niederwaldstreifen aufweisend Niederwaldbäume, wobei Niederwaldstreifen und Dauerwaldstreifen abwechselnd angeordnet sind, so dass wiederkehrend mindestens ein Niederwaldstreifen zwischen zwei unmittelbar an diesen angrenzenden Dauerwaldstreifen angeordnet ist, wobei die Dauerwaldbäume in den Dauerwaldstreifen jeweils einen Dauerwaldkorridor bilden und wobei die Niederwaldbäume in den Niederwaldstreifen jeweils einen Niederwaldkorridor bilden. Außerdem ist es vorteilhaft, wenn der kürzeste Abstand benachbarter Dauerwaldkorridore 4 bis 11 m beträgt, vorzugsweise 6 bis 10 m, insbesondere 8 bis 10 m ist. Bevorzugt ist die durchschnittliche Dauerwaldstreifenbreite des Mittelwalds kleiner als die durchschnittliche Niederwaldstreifenbreite des Mittelwalds.

Der Begriff "Mittelwald" bezeichnet im Rahmen dieser Offenbarung eine Waldbauform, in der Niederwald und Dauerwald kombiniert werden. Der Mittelwald besteht somit aus einem Altbestand in Form von Oberholz aus überwiegend Dauerwaldbäumen und einem Jungwuchs in Form von Unterholz aus überwiegend Niederwaldbäumen. Das Unterholz wird in regelmäßigen Abständen ganzflächig und vollständig geerntet und beispielsweise als Brennholz verwertet. Beim Unterholz handelt es sich in der Regel um Stockausschläge. Beim Oberholz erfolgen nach der Bestandsbegründung lediglich Einzelentnahmen von Dauerwaldbäumen, so dass zum einen einzelne Oberholz-Zielbäume gefördert werden und zum anderen noch ein geschlossenes waldbildendes Kronendach aufgebaut werden kann.

In einer Ausführungsform erfolgt die Begründung des beschriebenen Mittelwalds auf landwirtschaftlich genutzten Flächen, durch eine abwechselnde Bepflanzung von Streifen in Niederwaldbewirtschaftung (bzw. Niederwaldstreifen; bzw. eines abgegrenzten Territoriums mit länglichem Grundriss das überwiegend Niederwaldbäume aufweist) und Streifen in Dauerwaldbewirtschaftung (bzw. Dauerwaldstreifen, bzw. eines abgegrenzten Territoriums mit länglichem Grundriss das überwiegend Dauerwaldbäume aufweist). In anderen Worten zeichnet sich der beschriebene Mittelwald dadurch aus, dass sich Streifen die überwiegend mit Niederwaldbäumen bepflanzt sind und Streifen, die überwiegend mit Dauerwaldbäumen bepflanzt sind, abwechseln, insbesondere wiederkehrend abwechseln.

Die Begründung des Mittelwaldes erfolgt auf landwirtschaftlichen Flächen. Diese haben vorzugsweise eine Fläche von mindestens 1 Hektar (ha), besonders bevorzugt eine Fläche von mindestens 3 ha, insbesondere eine Fläche von mindestens 5 ha.

In einer Ausführungsform weist der Mittelwald mindestens fünf Dauerwaldstreifen auf, die überwiegend mit Dauerwaldbäumen bepflanzt sind und mindestens fünf Niederwaldstreifen, die überwiegend mit Niederwaldbäumen bepflanzt sind, welche sich wiederkehrend abwechseln.

In einer Ausführungsform weist der Mittelwald mindestens zehn Dauerwaldstreifen auf, die überwiegend mit Dauerwaldbäumen bepflanzt sind und mindestens zehn Niederwaldstreifen, die überwiegend mit Niederwaldbäumen bepflanzt sind, welche sich wiederkehrend abwechseln.

In einer Ausführungsform weist der Mittelwald mindestens zwanzig Dauerwaldstreifen auf, die überwiegend mit Dauerwaldbäumen bepflanzt sind und mindestens zwanzig Niederwaldstreifen, die überwiegend mit Niederwaldbäumen bepflanzt sind, welche sich wiederkehrend abwechseln.

Der Begriff "überwiegend mit Niederwaldbäumen bepflanzt" bezeichnet im Rahmen dieser Offenbarung eine Bepflanzung bei der, bezogen auf die Gesamtanzahl der angepflanzten Baumarten, mindestens 50 % Niederwaldbäume gepflanzt werden, vorzugsweise mindestens 75 %, weiter bevorzugt mindestens 85 %, insbesondere mindestens 95 %.

Der Begriff "überwiegend mit Dauerwaldbäumen bepflanzt" bezeichnet im Rahmen dieser Offenbarung eine Bepflanzung bei der, bezogen auf die Gesamtanzahl der angepflanzten Baumarten, mindestens 50 % Dauerwaldbäume gepflanzt werden, vorzugsweise mindestens 75 %, weiter bevorzugt mindestens 85 %, insbesondere mindestens 95 %.

In anderen Worten sind im Niederwaldstreifen Niederwaldbäume in hoher Stückzahl vertreten, welche im Kurzumtrieb geerntet werden, wobei bei der Begründung der Niederwalstreifen, bezogen auf die Gesamtanzahl der angepflanzten Baumarten, mindestens 50 % Niederwaldbäume gepflanzt werden, vorzugsweise mindestens 75 %, weiter bevorzugt mindestens 85 %, insbesondere mindestens 95 % und wobei die Umtriebs-Zeiten 1 bis 20 Jahre betragen, vorzugsweise 2 bis 8 Jahre, insbesondere 3 bis 5 Jahre.

In einer Ausführungsform werden, bezogen auf die Gesamtanzahl der angepflanzten Baumarten bei der Begründung der Niederwalstreifen mindestens 75 % Niederwaldbäume gepflanzt, welche anschließend vorzugsweise mit Umtriebs-Zeiten von 3 bis 5 Jahren geerntet werden.

In einer Ausführungsform werden, bezogen auf die Gesamtanzahl der angepflanzten Baumarten bei der Begründung der Niederwaldstreifen 100 % Niederwaldbäume gepflanzt, welche anschließend vorzugsweise mit Umtriebs-Zeiten von 3 bis 5 Jahren geerntet werden.

Im Dauerwaldstreifen sind Dauerwaldbäume in hoher Stückzahl vertreten, welche im Langumtrieb geerntet werden, wobei bei der Begründung der Dauerwaldstreifen, bezogen auf die Gesamtanzahl der angepflanzten Baumarten, mindestens 50 % Dauerwaldbäume gepflanzt werden, vorzugsweise mindestens 75 %, weiter bevorzugt mindestens 85 %, insbesondere mindestens 95 % und wobei die Umtriebs-Zeiten mehr als 20 Jahre betragen, vorzugsweise mehr als 40Jahre, insbesondere mehr als 60 Jahre. In einer Ausführungsform werden, bezogen auf die Gesamtanzahl der angepflanzten Baumarten mindestens 75 % Dauerwaldbäume gepflanzt, welche anschließend vorzugsweise mit Umtriebs-Zeiten von 40 bis 80 Jahren oder nach Erreichen eines Brusthöhendurchmessers (BHD) von 30 bis 60 cm bevorzugt vollständig geerntet werden.

In einer Ausführungsform werden, bezogen auf die Gesamtanzahl der angepflanzten Baumarten bei der Begründung der Dauerwaldstreifen 100 % Dauerwaldbäume gepflanzt, welche anschließend vorzugsweise im Langumtrieb nach Erreichen des Adult-Alters geerntet werden.

Die Begriffe "Umtrieb" bzw. "Umtriebs-Zeit(en)", bezeichnen im Rahmen dieser Offenbarung die Zeitspanne von der Bestandsbegründung bis zur ersten Ernte in einem Baumstreifen (Niederwaldstreifen oder Dauerwaldstreifen) bzw. die Zeitspanne bis bereits geerntete Bäume in einem Baumstreifen erneut geerntet werden. In anderen Worten bezeichnen die Begriffe "Umtrieb" bzw. "Umtriebs-Zeit(en)", im Rahmen dieser Offenbarung die Zeit, die Bäume seit der Begründung wachsen bevor sie das erste Mal bevorzugt geerntet werden bzw. die Zeit, die vergeht, bis bereits geernteten Bäume erneut geerntet werden.

Bei einer Ernte werden mindestens 85% des Baumbestands geerntet, vorzugsweise wird der Baumbestand vollständig geerntet. Vollständig heißt, dass mindestens 95 % aller Bäume im Baumstreifen während eines Umtriebs geerntet werden. Die Ernte der Bäume bei einem Umtrieb findet während einer Zeitspanne von weniger als 18 Monaten, bevorzugt von weniger als 6 Monaten statt.

Insbesondere in den Dauerwaldstreifen kann bereits ab 8 bis 15 Jahren eine Einzelentnahme von Dauerwaldbäumen zur Förderung des Wachstums benachbarter Dauerwaldbäume stattfinden. Eine Einzelentnahme ist gekennzeichnet durch die Entnahme oder die Fällung einzelner Bäume innerhalb eines Baumstreifens. Eine Einzelentnahme ist darum nicht mit einer Ernte gleichzusetzen. Mehrere Einzelentnahmen von Dauerwaldbäumen innerhalb von Dauerwaldstreifen, welche zum Beispiel in zeitlichen Einzelentnahmeabständen von 3 bis 5 Jahren durchgeführt werden, können in Summe zu einer Reduzierung des Dauerwaldwaldbaumbestands auf weniger als 15% (mehr als 85 % der Bäume werden entnommen) des anfänglichen Bestandes führen, ohne dass es sich dabei um einen Umtrieb bzw. Ernte handelt. Mit anderen Worten stellt die über mehrere Jahre stattfindende Einzelentnahme der Dauerwaldbäume, bis dass die Dauerwaldbäume zumindest noch im Oberholz-Zielabstand von 4 bis 11 m stehenbleiben, keinen Umtrieb und keine Ernte dar.

Die Dauerwaldbäume werden bevorzugt erst dann geerntet, wenn das Oberholz im Adult-Alter (z.B. 40 bis 80 Jahre nach Bestandsbegründung) gefällt wird.

Der Begriff Brusthöhendurchmesser (BHD) ist eine in der Forstwirtschaft gebräuchliche Größe zur Angabe der Baumdicke. Zur Bestimmung des BHD wird der Umfang des stehenden Baumes in 1,40 m Höhe gemessen und durch die Zahl π geteilt.

In einer Ausführungsform werden bei der Ernte bzw. dem Umtrieb bevorzugt alle Niederwaldbäume in einer Bodenhöhe von 5 bis 25 cm abgesägt (geerntet) und anschließend abtransportiert. Nach der Ernte treiben aus den geernteten Niederwaldstümpfen wieder neue Triebe aus (der sog. Stockaustrieb), die innerhalb von weiteren 3 bis 5 Jahren wieder geerntet werden. Während die Niederwaldstreifen regelmäßig geerntet werden, erfolgen im Dauerwaldstreifen lediglich Einzelentnahmen von Dauerwaldbäumen, so dass zum einen einzelne Oberholz-Zielbäume gefördert werden und zum anderen noch ein geschlossenes waldbildendes Kronendach aufgebaut wird. Nach einer bestimmten Zeit, zum Beispiel nach 20 bis 35 Jahren, erzeugt das Kronendach der Dauerwaldbäume derart viel Schatten, dass die Niederwaldbäume kaum mehr wachsen und ausgedunkelt werden. Außerdem ist ab etwa 20 bis 35 Jahre nach Bestandbegründung der Stockaustrieb durch die häufige Ernte der Niederwaldbäume stark geschwächt, so dass auch aus diesem Grunde der Dauerwald dominieren kann. Der Kurzumtrieb des Niederwaldstreifens ist damit beendet und die Dauerwaldbäume dominieren und bilden einen Wirtschaftsdauerwald.

Die Erstaufforstungsfläche ist also im ersten Schritt ein Mittelwald mit vorwiegender Niederwaldwirtschaft. Nachdem die Leistung der Niederwaldstreifen nachlässt bzw. zurückgedrängt wird, beispielsweise nach 20 bis 35 Jahren, wird der Mittelwald in einem zweiten Schritt durch die Dominanz der Dauerwaldbäume in einen Wirtschaftsdauerwald überführt.

Bei der Bestandbegründung des beschriebenen Mittelwalds werden also zwei unterschiedliche Baumstreifen gepflanzt (Niederwaldstreifen und Dauerwaldstreifen), die sich durch ihre Art der Bewirtschaftung und durch die bei der Begründung überwiegend verwendeten Baumarten unterscheiden.

Die Bestandbegründung der beiden unterschiedlichen Baumstreifen erfolgt im stetigen Wechsel. Der Wechsel der beiden unterschiedlichen Baumstreifen vollzieht sich mehr als zweimal, vorzugsweise mehr als zehnmal, insbesondere mehr als fünfzigmal. Der Wechsel der beiden unterschiedlichen Baumstreifen kann über die gesamte Begründungsfläche erfolgen. In einer Ausführungsform werden mindestens 75% der Begründungsfläche im stetigen Wechsel von Niederwaldstreifen und Dauerwaldstreifen angelegt, vorzugsweise mindestens 85%. In einer Ausführungsform wird die gesamte Begründungsfläche im stetigen Wechsel von Niederwaldstreifen und Dauerwaldstreifen angelegt.

Die Begründung der Dauerwaldstreifen und die Begründung der Niederwaldstreifen können zur selben Zeit erfolgen, beispielsweise innerhalb desselben Jahres, insbesondere innerhalb desselben Monats. In diesem Fall wird bei der Begründung der Dauerwaldstreifen durch die Niederwaldbäume in den Niederwaldstreifen, insbesondere durch das Kronendach der Niederwaldbäume in den Niederwaldstreifen, zur Zeit der Bestandbegründung überwiegend kein Schatten erzeugt.

Vorzugsweise wird bei der Begründung der Dauerwaldstreifen durch die Niederwaldbäume in den Niederwaldstreifen, insbesondere durch das Kronendach der Niederwaldbäume in den Niederwaldstreifen weniger als 50 % Schatten auf die Dauerwaldbäume in den Dauerwaldstreifen geworfen, vorzugsweise weniger als 20 %, insbesondere weniger als 10 %.

Schatten lässt sich gut mithilfe der physikalischen Größe der Beleuchtungsstärke definieren und messen. Die Beleuchtungsstärke beschreibt den Lichtstrom in Lumen, der pro Flächeneinheit in m² auf ein Objekt fällt. Im vorliegenden Fall ist das Objekt Dauerwaldbäume in einem Dauerwaldstreifen. Die Beleuchtungsstärke hat die Maßeinheit 1 Lux. 1 Lux entspricht 1 Lumen/m².

Bei der Schattenangabe handelt es sich um einen relativen Wert. Der relative Wert vergleicht die Beleuchtungsstärke während der Vegetationszeit, die ohne die Niederwaldbäume, insbesondere ohne das Kronendach der Niederwaldbäume, auf Dauerwaldbäume in einem Dauerwaldstreifen trifft mit der Beleuchtungsstärke unter den Einfluss der Niederwaldbäume, insbesondere unter Einfluss des Kronendachs der Niederwaldbäume, auf Dauerwaldbäume in einem Dauerwaldstreifen trifft. Es gilt hierbei zu bedenken, dass die ohne die Niederwaldbäume, insbesondere ohne das Kronendach der Niederwaldbäume auf die Dauerwaldbäume in einem Dauerwaldstreifen gelangte Beleuchtungsstärke abhängig ist von Wolken, Nebel und Erdrotation (Dunkelheit). Die Beleuchtungsstärke, verursacht durch Sonnenstrahlung, beträgt bei klarem Himmel in Deutschland zur Mittagszeit im Sommer ca. 90.000 lx. Der Einstrahlwinkel beträgt hierbei ca. 60°. Bei 60° Einstrahlwinkel und bewölktem Himmel ist die Beleuchtungsstärke z. B. nur ca. 19.000 lx. Die Beleuchtungsstärke wird mit einem Luxmeter gemessen.

0% Schatten liegt vor, wenn die von der Sonne ausgesandte Beleuchtungsstärke während der Vegetationszeit, welche z. B. durch Wolken, Nebel oder die Erdrotation (Tag, Nacht) gemindert sein kann, auf die Dauerwaldbäume in einem Dauerwaldstreifen fällt, ohne dass eine zusätzliche Abschirmung erfolgt. 50% Schatten liegt vor, wenn die von der Sonne ausgesandte Beleuchtungsstärke während der Vegetationszeit, welche z. B. durch Wolken, Nebel oder die Erdrotation (Tag, Nacht) gemindert sein kann, nur zu 50% auf die auf die Dauerwaldbäume in einem Dauerwaldstreifen fällt, weil z. B. Niederwaldbäume, insbesondere Kronendächer von Niederwaldbäumen in benachbarten Niederwaldstreifen 50% der auftreffenden Beleuchtungsstärke absorbieren oder reflektieren. 100% Schatten bedeutet, dass sämtliche Lichtabstrahlung der Sonne daran gehindert wird zu den Dauerwaldbäumen in einem Dauerwaldstreifen zu gelangen.

Die Menge der Lichteinstrahlung kann, wie oben beschrieben, anhand eines Luxmeters gemessen werden. Die Angabe von "[%] Schatten" bezieht sich auf eine gegebene Fläche. Im vorliegenden Fall ist diese Fläche in der Regel die Fläche, auf der die Dauerwaldbäume wachsen. Die Prozentangabe des Schattens ist ein mittlerer Wert über die Fläche von Interesse. So wird beispielsweise für eine Fläche die vollständig im Halbschatten liegt, der Wert 50% Schatten angegeben. Der gleiche Wert ergibt sich, wenn eine Hälfte der Fläche keinen Schatten aufweist, während die andere Hälfte vollständig beschattet ist.

Die Angaben zum Schatten in [%] beziehen sich ausschließlich auf den Schatten während der Vegetationszeit der Dauerwaldbäume. In Mitteleuropa ist die Vegetationszeit vom ersten Mai bis zum 31. Oktober. Auf der Südhalbkugel ist die Vegetationszeit vom ersten November bis zum 30. April.

In einer Ausführungsform sind bei der Begründung des Mittelwaldes mindestens 60% aller bei der Begründung des Mittelwalds angepflanzten Bäume Niederwaldbäume und höchstens 40% der bei der Begründung des Mittelwalds angepflanzten Bäume sind Dauerwaldbäume. Beispielsweise sind von den bei der Begründung des Mittelwalds angepflanzten Bäumen mindestens 70% Niederwaldbäume, vorzugsweise mindestens 80%, insbesondere mindestens 90%.

Eine hohe Anzahl von Niederwaldbäumen verbessert die anfängliche Humusbildung im Oberboden und erhöht die anfängliche Wurzelmasse sowie den Holzmasseertrag signifikant. Eine niedrige Anzahl von Dauerwaldbäumen verringert die Erstbegründungskosten, da das Pflanzgut der Dauerwaldbäume in der Regel viel teurer in der Beschaffung und bei der Bepflanzung selbst ist als dies bei Pflanzgut der Niederwaldbäumen der Fall ist. Niederwaldbäume können z.B. mittels günstiger Steckhölzer mit Steckmaschinen gepflanzt werden, wohingegen die Dauerwaldbäume herkömmlich mittels teurer bewurzelter Stecklinge per Handbepflanzung mit dem Spaten gesetzt werden.

### Niederwaldstreifen

In den Niederwaldstreifen werden überwiegend Niederwaldbaumarten angepflanzt, welche nach einer Umtriebs-Zeit von 1 bis 20 Jahren, vorzugsweise von 2 bis 8 Jahren, insbesondere 3 bis 5 Jahren, beispielsweise mit einem Feldhäcksler als Hackschnitzel geerntet werden und thermisch oder stofflich verwertet werden. Die Niederwaldbäume im Niederwaldstreifen bilden das Unterholz des Mittelwaldes. Die Erntedurchmesser in Brusthöhe (BHD) sind vorzugsweise kleiner als 30 cm, weiter bevorzugt kleiner als 20 cm, insbesondere kleiner als 10 cm.

Geometrisch ist ein Niederwaldstreifen durch die Länge sowie die Breite des Niederwaldstreifens und des darin befindlichen Niederwaldkorridors" definiert.

Der Begriff "Niederwaldkorridor" oder auch "Aufenthaltskorridor des Niederwaldstreifens" bezeichnet im Rahmen dieser Offenbarung einen Korridor in Form eines Steifens (bzw. eines abgegrenzten Territoriums mit länglichem Grundriss) mit geradlinigen Außengrenzen innerhalb des Niederwaldstreifens, der sich entlang der länglichen Ausdehnungsrichtung des Niederwaldstreifens erstreckt.

Für den Fall dass die Bepflanzung bei der Begründung des Niederwaldstreifens mit Niederwaldbäumen in Reihen erfolgt, welche sich im Wesentlichen entlang der länglichen Ausdehnungsrichtung des Niederwaldstreifens erstrecken (z.B. wenn die Niederwaldbäume bei der Begründung des Niederwaldstreifens in regelmäßigen Abständen in einer oder mehreren Reihen, welche sich im Wesentlichen entlang der länglichen Ausdehnungsrichtung des Niederwaldstreifens erstrecken, angepflanzt werden, so dass durchgängige Reihen von Niederwaldbäumen oder Gruppen von Niederwaldbäumen gebildet werden), weist der Aufenthaltskorridor 100 % der bei der Begründung gepflanzten Niederwaldbäume auf. Bei dieser Definition des Niederwaldkorridors erstreckt sich der Aufenthaltskorridor des Niederwaldstreifens zwischen den jeweils äußersten Reihen an Niederwaldbäumen (bzw. zwischen den beiden außenliegenden Reihen an Niederwaldbäumen).

Für den Fall dass die Bepflanzung bei der Begründung des Niederwaldstreifens mit Niederwaldbäumen nicht ausschließlich in Reihen erfolgt, welche sich im Wesentlichen entlang der länglichen Ausdehnungsrichtung des Niederwaldstreifens erstrecken (z.B. wenn die Niederwaldbäume bei der Begründung des Niederwaldstreifens unregelmäßig angepflanzt werden oder sowohl in Reihen als auch unregelmäßig), weist der Aufenthaltskorridor mindestens 75 % der bei der Begründung gepflanzten Niederwaldbäume auf, wobei der Aufenthaltskorridor so gewählt wird, dass der Aufenthaltskorridor eine möglichst geringe Breite aufweist. Bei dieser Definition des Niederwaldkorridors werden vereinzelte am Rand des Niederwaldstreifens angeordnete Niederwaldbäume (sog. Ausreißer) nicht bei der Bestimmung des Aufenthaltskorridors berücksichtigt.

In einer Ausführungsform ist die Breite der Niederwaldkorridore 0,4 bis 7,5 m oder 0,4 bis 7 m, insbesondere 2 bis 3 m. Diese ist beispielsweise in den Figuren mit der Ziffer 10 angegeben.

Eine weitere wichtige Eigenschaft des Mittelwalds betrifft die Abstände der Niederwaldkorridore zueinander, insbesondere die kürzesten Abstände der Korridoraußengrenzen benachbarter Niederwaldkorridore. Der kürzeste Abstand der Korridoraußengrenzen benachbarter Niederwaldkorridore wird definiert als "der kürzeste Abstand benachbarter Niederwaldkorridore".

Der Begriff "kürzester Abstand benachbarter Niederwaldkorridore" bezeichnet im Rahmen dieser Offenbarung den kürzesten Abstand zwischen den Niederwaldkorridoren von zwei an einen Dauerwaldstreifen unmittelbar angrenzenden Niederwaldstreifen, wobei der Abstand zwischen den Niederwaldkorridoren von zwei an einen Dauerwaldstreifen unmittelbar angrenzenden Niederwaldstreifen (d.h. der Abstand zwischen den Niederwaldkorridoren von zwei Niederwaldstreifen, welche zusammen mit einem Dauerwaldsteifen die Abfolge Niederwaldstreifen-Dauerwaldstreifen-Niederwaldstreifen bilden) über den mittleren Abstand zwischen zwei sich gegenüberliegenden Außengrenzen der Niederwaldkorridore, welche sich in Längsrichtung der Niederwaldstreifen erstecken, bestimmt wird (d.h. zwischen den Außengrenzen der Niederwaldkorridore, die jeweils dem Dauerwaldstreifen am nächsten gelegen sind).

Die kürzesten Abstände benachbarter Niederwaldkorridore können in Abhängigkeit von der Niederwaldbaumart variieren. In einer Ausführungsform liegen die kürzesten Abstände benachbarter Niederwaldkorridore in einem Bereich von 3 bis 10,6 m, vorzugsweise in einem Bereich von 3,5 bis 9,6 m, insbesondere in einem Bereich von 5 bis 8 m.

Die Breite des Niederwaldstreifens (BNW) ist die mittlere Breite des Niederwaldkorridors zuzüglich des jeweils halben mittleren Abstands von den Außengrenzen des Niederwaldkorridors, welche sich in Längsrichtung des Niederwaldstreifens erstecken, zu den jeweils am nächsten gelegen Außengrenzen der angrenzenden Dauerwaldkorridore, welche sich in Längsrichtung der Dauerwaldstreifen erstecken. In anderen Worten ergibt sich die Breite eines Niederwaldstreifens (BNW) der zwischen einem ersten und einem zweiten Dauerwaldstreifen angeordnet ist, aus der gemittelten Breite des Niederwaldkorridors zuzüglich des gemittelten halben Abstands von der ersten Außengrenze des Niederwaldkorridors (z.B. in Längsrichtung links davon gelegen) zu der dieser Außengrenze am nächsten gelegen Außengrenzen des angrenzenden ersten Dauerwaldkorridors (in Längsrichtung ebenfalls links davon gelegen) und des gemittelten halben Abstands von der zweiten Außengrenze des Niederwaldkorridors (z.B. in Längsrichtung rechts davon gelegen) zu der dieser Außengrenze am nächsten gelegen Außengrenzen des angrenzenden zweiten Dauerwaldkorridors (in Längsrichtung ebenfalls rechts davon gelegen).

In einer Ausführungsform ist die Breite des Niederwaldstreifens (BNW) 2,25 bis 9 m, vorzugsweise 2,25 bis 8 m.

Für den Fall, dass die Dauerwaldstreifen zeitlich nach den Niederwaldstreifen begründet werden ist der kürzeste Abstand zwischen benachbarten Niederwaldkorridoren vorzugsweise größer als 8 m. Alternativ dazu kann die Begründung der Dauerwaldstreifen im Jahr nach einer Ernte der Niederwaldbäume der Niederwaldstreifen erfolgen, da so zum Begründungszeitpunkt der Dauerwaldstreifen kein oder nur wenig Schatten durch die noch nicht wieder ausgetriebenen Stockaustriebe der Niederwaldbäume erzeugt wird.

In einer Ausführungsform werden im Niederwaldstreifen bei der Begründung die Niederwaldbäume in mindestens zwei Baumreihen angelegt, vorzugsweise in mindestens drei Baumreihen, so dass ein bestimmter Reihenabstand zwischen den Sämlingen, Stecklingen oder Steckhölzer entsteht. Beispielsweise werden bei der Begründung der Niederwaldstreifen für jeden Niederwaldstreifen 2 bis 10 Reihen an niederwaldbäumen Baumreihen angelegt, vorzugsweise 2 bis 4, insbesondere 2 bis 3.

Die Ausbringung des Pflanzgutes im Niederwaldstreifen erfolgt vorzugsweise mit einem bestimmten Reihenabstand. In einer beispielhaften Ausführungsform beträgt der Reihenabstand zwischen zwei benachbarten Reihen an Niederwaldbäumen in einem Niederwaldstreifen 0,4 bis 5,0 m, vorzugsweise 2,40 bis 3,20 m. Außerdem können die einzelnen Reihen auch in Form von Doppelreihen angelegt werden, wobei der Abstand zwischen einer Doppelreihe und den benachbarten Reihen an Niederwaldbäumen in einem Niederwaldstreifen (bzw. den benachbarten Doppelreihen an Niederwaldbäumen in einem Niederwaldstreifen) vorzugsweise 2 bis 5 m beträgt, bezogen auf den Abstand zwischen der Doppelreihenmitte der Doppelreihe und der benachbarten Reihe, bzw. bezogen auf den Abstand zwischen der Doppelreihenmitte der Doppelreihe und die Doppelreihenmitte der benachbarten Doppelreihe.

Der Begriff "Doppelreihe" in Bezug auf Reihen an Niederwaldbäumen in dem Niederwaldstreifen, bezeichnet im Rahmen dieser Offenbarung zwei Reihen an Niederwaldbäumen die einen deutlich kleineren Reihenabstand zueinander aufweisen als zu den jeweils benachbarten Reihen (bzw. benachbarten Doppelreihen) an Niederwaldbäumen in dem Niederwaldstreifen. Vorzugsweise ist der Abstand innerhalb einer Doppelreihe höchstens halb so groß wie der Abstand zu einer angrenzenden Reihe oder einer angrenzenden Doppelreihe. Beispielsweise beträgt der Reihenabstand zwischen den beiden Reihen an Niederwaldbäumen der Doppelreihe 0,4 bis 1 m, während der Reihenabstand zwischen der Doppelreihe und den benachbarten Reihen (bzw. benachbarten Doppelreihe) an Niederwaldbäumen in dem Niederwaldstreifen 2 bis 5 m, bezogen auf die Doppelreihenmitte der Doppelreihe und die benachbarte Reihe, bzw. bezogen auf die Doppelreihenmitte der Doppelreihe und die Doppelreihenmitte der benachbarten Doppelreihe.

Der Reihenabstand zweier Niederwaldbaumreihen kann bei einer Betrachtungslänge von 10 m um +/- 0,30 m von der Hauptpflanzachse abweichen, vorzugsweise um nicht mehr +/- 0,15 m. In Fig. 1 Ziffer 2 ist die Abweichung des Reihenabstands zweier Niederwaldbaumreihen dargestellt.

In einer Ausführungsform betragen die Abstände der Niederwaldbäume innerhalb einer Reihe (also in Längsrichtung) an Niederwaldbäumen in dem Niederwaldstreifen, 0,20 bis 1,5 m, vorzugsweise 0,30 bis 1 m, insbesondere 0,30 bis 0,50 m. Die Abstände der Niederwaldbäume innerhalb einer Reihe an Niederwaldbäumen können allerdings auch variieren und dabei zumindest teilweise größer sein als die vorgenannten Abstände, insbesondere, wenn Gruppen von Niederwaldbäumen gebildet werden.

In einer Ausführungsform beträgt die Gesamtlänge einer Reihe an Niederwaldbäumen in dem Niederwaldstreifen mindestens 20 m, vorzugsweise mindestens 50 m, insbesondere mindestens 100 m, beispielsweise kann die Gesamtlänge einer Reihe an Niederwaldbäumen in dem Niederwaldstreifen in einem Bereich von 20 bis 1.000 m liegen, vorzugsweise in einem Bereich von 50 bis 500 m, insbesondere in einem Bereich von 50 bis 250 m.

In einer Ausführungsform werden innerhalb einer Reihe an Niederwaldbäumen in dem Niederwaldstreifen mindestens 50 Niederwaldbäume angepflanzt, vorzugsweise mindestens 100, insbesondere mindestens 150.

In einer Ausführungsform ist die Pflanzdichte der Niederwaldbäume bei der Begründung des Mittelwalds 1.500 bis 10.000 ST/ha (Stück/Hektar), vorzugsweise 2.000 bis 6.000 ST/ha, insbesondere 2.500 bis 5.000 ST/ha, bezogen auf die Gesamtfläche des Mittelwalds.

Die relativ hohe Flächenbelegung kombiniert mit dem schnellen Wachstum der Niederwaldbäume bewirkt eine hohe Laubstreu- und Feinwurzelproduktion, welche sich positiv auf den Dauerhumusaufbau auswirken.

In einer Ausführungsform ist der Abstand der Niederwaldbäume innerhalb einer Reihe an Niederwaldbäumen in einem Niederwaldstreifen 0,4 m und der Reihenabstand zwischen zwei benachbarten Reihen an Niederwaldbäumen in dem Niederwaldstreifen 2,4 m. In einer weiteren Ausführungsform ist der Abstand der Niederwaldbäume innerhalb einer Reihe an Niederwaldbäumen in einem Niederwaldstreifen 0,5 m und der Reihenabstand zwischen zwei benachbarten Reihen an Niederwaldbäumen in dem Niederwaldstreifen 2,8 m. In einer weiteren Ausführungsform ist der Abstand der Niederwaldbäume innerhalb einer Reihe an Niederwaldbäumen in einem Niederwaldstreifen 0,4 m und der Reihenabstand zwischen zwei benachbarten Reihen an Niederwaldbäumen in dem Niederwaldstreifen 3,0 m.

Bevorzugt zeichnen sich die Niederwaldbaumarten durch ein schnelles Wachstum, Stockaustrieb und leichte Streuzersetzung aus und bilden bereits nach kurzer Zeit viel Streu und Feinwurzeln. Vorzugsweise zeigen die eingesetzten Niederwaldbaumarten keine Wurzelbrut auf und können mittels Steckhölzern angepflanzt werden.

In einer Ausführungsform werden zur Bestandsbegründung für die Niederwaldbäume Laubbäume verwendet, welche relativ schnell hohe Mengen an Laub und Feinwurzeln ausbilden, eine leicht zersetzbare Streu haben, zum Stockaustrieb befähigt sind und bevorzugt keine Wurzelbrut ausbilden, wie z.B. die Baumarten Pappel (Populus spec. mit Ausnahme von Pappeln aus dem Genus und Leuce/Weiß- oder Zitterpappeln, auch als Espen bezeichnet), Weide (Salix spec.), Vogelbeere (Sorbus aucuparia), Birke (Betula spec.), Holunder (Sambucus spec.), Goldregen (Laburnum spec.) und vorzugsweise für tropische und subtropische Anbaugebiete Baumarten, wie z.B. Purgiernuss (Jatropha curcas), Akazien (Acazia spec.), Albizien (Alabizia spec.), Weißkopfmimosen (Leucaena spec.) und Papiermaulbeerbaum (Morus papyrifera).

Besonders hohe Holzzuwachsraten besitzen ebenfalls die zur Wurzelbrut neigenden Baumarten Espe (Pappel aus dem Genus Leuce/Weiß- oder Zitterpappel wie z.B. Populus alba, Populus tremula, Populus tremuloides), Erle (Alnus spec.), Edelkastanie (Castanea spec.) und in Deutschland fremde und als invasiv geltende Baumarten, wie z.B. Robinie (Robinia spec.), Paulownie (Paulownia spec.), Eschenahorn (Acer negundo), Götterbaum (Ailanthus altissima), Rotesche (Fraxinus pennsylvanica), Spätblühende Traubenkirsche (Prunus serotina), Eukalyptus (Eukalyptus spec.), Gleditschie (Gleditsia triacanthos) und Essigbaum (Rhus typhina). Allerdings eignen sich diese zur Wurzelbrut neigenden Baumarten nicht zur Begründung des Niederwaldstreifens und werden im Rahmen der vorliegenden Offenbarung nicht als Niederwaldbaumart verstanden.

Der Grund hierfür ist, dass sich die Wurzelbrut ausbildenden Baumarten vom Niederwaldstreifen aus in den Dauerwaldstreifen hinein ausbreiten kann und die Wurzelschösslinge der "Wurzelbrutbaumart" die jungen Dauerwaldbäume dominieren und diese unterdrücken.

Der Begriff "Wurzelbrut" bezeichnet im Rahmen dieser Offenbarung die Vermehrung einer Baumart durch Wurzelschösslinge im Umkreis von 1 bis 5 Meter vom verletzten oder unverletzten Hauptbaum, wobei in diesem Umkreis pro Jahr mindestens 5 Wurzelschösslinge aus jedem Hauptbaum erwachsen.

Bevorzugt ist die Bestandsbegründung der Niederwaldbäume mittels Steckhölzer oder per Saat. Pappeln (ohne Espen), Weiden und Holunder lassen sich insbesondere mit Steckhölzern begründen. Birke, Vogelbeere und Goldregen lassen sich insbesondere durch Saat begründen. Alternativ lassen sich die Baumarten Birke, Vogelbeere, Holunder und Goldregen relativ leicht und kostengünstig auch über bewurzelte Stecklinge begründen. Besonders bevorzugt ist die Bestandbegründung mit Pappeln und Weiden, da es sich um Baumarten handelt die (i) über Steckhölzer begründet werden können, (ii) schnell wachsen und im Kurzumtrieb bewirtschaftet werden können, (iii) krankheitsunempfindlich sind, (iv) keine Wurzelbrut bilden, (v) viel mittelschnell zersetzbare Streu bilden und (vi) einen hohen Feinwurzelanteil ausbilden.

Die Baumart Weide stellt außerdem durch die im zeitigen Frühjahr eisetzende Blüte für Bienen und Hummeln die erste Nahrung nach dem Winter dar und ist damit auch für die oberirdisch lebende Tierwelt ein Gewinn.

In einer Ausführungsform werden bei der Begründung des Niederwaldstreifens schnellwachsende Baumarten mit Kurzumtriebs-Bewirtschaftung angepflanzt. Schnellwachsenden Baumarten mit Kurzumtriebs-Bewirtschaftung sind gekennzeichnet durch einen Holzmasseertrag von mehr als 6 Tonnen/(Hektar*Jahr) Trockenmasse während der zweiten Umtriebs-Periode (i.e. der Zeitraum zwischen dem ersten und dem zweiten Umtrieb, z.B. 5 bis 9 Jahre nach Bestandbegründung) bei einer Ackerzahl des Bodens von mindestens 50 und einer Jahresniederschlagsmenge von mindestens 600 mm sowie bei einer Pflanzanzahl bei Bestandbegründung von 10.000 Stück pro Hektar, bezogen auf die Niederwaldstreifen. Bevorzugt liegt der Trockenmasseholzertrag bei 8 Tonnen/(Hektar*Jahr) oder mehr. Einen besonders hohen Holzmasseertrag haben Pappel und Weide. Der Holzmasseertrag der Niederwaldbäume bzw. der schnellwachsenden Baumarten mit Kurzumtriebs-Bewirtschaftung ist innerhalb der ersten 10 Jahre nach Bestandbegründung bevorzugt größer als oder zumindest gleich groß wie die der Dauerwaldbäume.

Die schnellwachsenden Baumarten mit Kurzumtriebs-Bewirtschaftung, bilden nach der Bestandsgründung bereits in kurzer Zeit relativ viel Laub und Feinwurzelmasse. Bevorzugt liegt der Trockensubstanzgehalt der Laubstreu (der schnellwachsenden Baumarten) am Ende der zweiten Umtriebs-Periode innerhalb des Niederwaldstreifens bei 2 bis 7 Tonnen/ha, vorzugsweise bei 3 bis 5 Tonnen/ha und der Trockensubstanzgehalt der abgestorbenen Feinwurzeltrockenmasse bzw. Wurzelstreu liegt bei 60 bis 95 % der Laubtrockenmasse.

Bei der Baumart Pappel können Pappelarten und Pappelhybride aus dem Genus *Aigeiros* oder Schwarzpappel, wie z.B. *Populus nigra, Populus deltoides, Tacamahaca* oder Balsampappeln, wie z.B. *Populus trichocarpa, Populus maximowicii* angepflanzt werden. Dies umfasst auch Pappelklone bzw. -hybride wie beispielsweise Max 1, Max 3, Max 4, Max 5, Hybride 275, Matrix 11, Matrix 24, Matrix 49, Muhle Larsen, Fritzy Pauly, Androscoggin, Pannonia, Oxford, Rochester, AF2 und AF6. Die Pappelarten und -hybride können sortenrein, aber auch gemischt mit anderen Pappelarten und anderen Baumarten verwendet werden.

Bei der Baumart Weide können Weidearten und Weidehybride von z.B. *Salix viminalis* (Korbweide), *Salix pupurea* (Purpurweide), *Salix cinerea* (Aschweide), *Salix caprea* (Salweide), *Salix daphnoides* (Reifweide), *Salix alba* (Silberweide), *Salix schwerinii* (Schmalblättrige Weide), *Salix dasyclados* (Filzast-Weide), *Salix rubens* (Fahlweide) oder *Salix triandra* (Mandelweide) angepflanzt werden. Dies umfasst auch Weideklone bzw. Weidehybride wie beispielsweise Jorr, Tora, Sven, Zieverich, Olof, Gudrun, Tordis, Inger, Schwedenklon 683, DA 50, DA 92 und DA 176. Die Weidearten und -hybride können sortenrein aber auch gemischt mit anderen Weidearten und/oder anderen Baumarten, insbesondere Pappeln, verwendet werden.

Weiden neigen dazu, dass der Austrieb nach dem beschneiden oder absägen sehr buschig ist bzw. dass eine große Anzahl Neutriebe pro Stamm auftreten. Die Sorte Olof (Salix viminalis x (Salix viminalis x Salix Schwerinii) hingegen zeigt nur wenige Neutriebe nach dem Schnitt und eignet sich daher besonders zur Mischung mit Pappeln, da die Pappeln alle ebenfalls wenige Neutriebe nach dem Schnitt zeigen.

Die Begründung der Niederwaldstreifen kann mit einer einzigen Niederwaldbaumart, wie z.B. Pappel, erfolgen. Die Begründung der Niederwaldstreifen kann auch mit zwei oder mehr Niederwaldbaumarten erfolgen, insbesondere wenn die Fläche des Ackers mehr als 3 ha beträgt, insbesondere wenn die Fläche des Ackers mehr als 5 ha oder mehr als 10 ha oder mehr als 20 ha beträgt. Mehrere Baumarten bilden stabilere Bestände und vermeiden Monokulturproblematiken.

In einer Ausführungsform werden bei der Begründung des Niederwaldstreifens mindestens zwei verschiedenen Niederwaldbaumarten angepflanzt.

Bevorzugt können Pappeln, Weiden, Holunder oder Goldregen als Baumartenmischung innerhalb der Niederwaldstreifen angepflanzt werden, da so verschieden schnelle Zersetzungsraten der Laubstreu genutzt werden und die Artenvielfalt steigt.

In einer Ausführungsform werden bei der Begründung des Niederwaldstreifens mindestens zwei verschiedenen Niederwaldbaumarten angepflanzt ausgewählt aus der Gruppe bestehend aus Pappeln, Weiden, Holunder oder Goldregen.

Eine Baumartenmischung liegt vor, wenn mindestens zwei verschiedenen Baumarten in einer Anzahl auftreten, welche mindestens 10% der Gesamtanzahl an berücksichtigten Bäumen ausmacht, vorzugsweise mindestens 25%, insbesondere mindestens 30%. Die Art und Weise der Baumartenmischung ist flexibel. So können zum Beispiel ein Niederwaldstreifen zu 100 % mit Pappel begründet werden und der angrenzende Niederwaldstreifen zu 100 % mit Weide oder Holunder. Es kann auch eine Mischung von zwei Niederwaldbaumarten innerhalb eines Niederwaldstreifens erfolgen. Beispielsweise können innerhalb eines Niederwaldsteifens eine Reihe zu 100% aus Pappel und eine andere Reihe zu 100% aus Weide oder Holunder bestehen. Alternativ können im Niederwaldstreifen auch Baumarten auch innerhalb einer Reihe gemischt werden.

Die Bestandsbegründung erfolgt bevorzugt mit Niederwaldbaumarten, welche eine schnelle oder eine mittlere Zersetzungsrate des Laubes aufweisen, da damit eine gleichmäßige Nährstoffversorgung der Bodenlebewesen zwischen zwei Laubfallperioden gewährleistet werden kann. Die Zersetzungsrate der Laubstreu von Holunder ist sehr schnell, die Zersetzungsrate der Laubstreu von Goldregen ist schnell und die Zersetzungsrate der Laubstreu von Pappel, Weide, Birke und Vogelbeerbaum ist mittelschnell.

Bei sommergrünen Bäumen fällt das Laub alljährlich im Herbst zu Boden, bei immergrünen Bäumen, wie z.B. Nadelbäumen, findet der Laubfall bzw. Nadelfall über das ganze Jahr hinweg statt. In Abhängigkeit von der Baumart und der Größe des Kronendaches können pro Jahr bis zu 7 Tonnen Trockensubstanz an Laub zu Boden fallen. Darum ist es besonders bevorzugt, dass die Niederwaldstreifen des Mittelwaldes breiter sind als die Dauerwaldstreifen, denn der Niederwaldstreifen liefert schon früh viel leicht zersetzbare Trockensubstanz an Laubstreu während die Dauerwaldbäume noch wenig Kronenfläche besitzen. Die Niederwaldbäume wirken als Wegbereiter in Bezug auf die Humifizierung. Sobald das Laub oder Nadeln vom Baum fällt werden sie als Streu bezeichnet. Bei Bäumen konzentrieren sich die Mineralstoffe im Laub und in der Baumrinde. Das Stammholz enthält kaum Mineralstoffe. Laub enthält im Vergleich zu herkömmlichen grünen Pflanzen (mit kurzen Wurzeln) besonders viele und hochkonzentrierte Mineralstoffe, wie z.B. Kalium, Calcium, Magnesium und Phosphor, da Bäume die Nährstoffe über tiefgreifende Wurzelsysteme aus tieferen Bodenschichten generieren können. Laub ist im Gegensatz zur sonstigen Begleitvegetation der Erstaufforstungsfläche bereits vor dem Laubfall geringfügig mit zersetzungsfördernden Bakterien und Pilzen besiedelt, welche die Humifizierung fördern. Mit zunehmender Liegedauer erhöht sich die Anzahl der zersetzungsfördernden Bakterien und Pilze in der Streu schnell, so dass die Streu als "Futter" für die Bodenorganismen dient. Jedoch gibt es Baumarten bezogene Unterschiede in der chemischen Zusammensetzung der Streu. Es gibt Baumarten mit leicht zersetzbarer Streu, Baumarten mit mittelschwerer zersetzbarer Streu und Baumarten mit schwer zersetzbarer Streu. Eine leicht bis mittelschwer zersetzbare Streu ist bevorzugt. Die Streuzersetzung ist abhängig vom chemischen Verhältnis von Kohlenstoff zu Stickstoff. Je kleiner das Verhältnis, desto leichter und schnelle lässt sich die Streu von den Bodenorganismen verstoffwechseln. Die Stoffwechselprodukte werden einerseits vom Baum wieder als Nährstoffe aufgenommen und andererseits als langzeitstabiler Dauerhumus im Boden gespeichert.

### Dauerwaldstreifen

In dem Dauerwaldstreifen werden überwiegend Dauerwaldbaumarten angepflanzt, welche nach einer Umtriebs-Zeit von mehr als 20 Jahren geerntet werden, vorzugsweise von mehr als 40 Jahren, insbesondere von mehr als 60 Jahren. Die geernteten Dauerwaldbäume werden bevorzugt als Bau- oder Möbelholz verwertet. Die Dauerwaldbäume im Dauerwaldstreifen bilden das Oberholz des Mittelwaldes. Die Erntedurchmesser in Brusthöhe (BHD) eines Dauerwaldzielbaums ist vorzugsweise größer als 30 cm, weiter bevorzugt größer als 45 cm, insbesondere größer als 60 cm.

Die Begründung des Mittelwaldes erfolgt in optimierter und systematischer Weise, derart, dass der Abstand der Dauerwaldstreifen von Anfang an den späteren Oberholz-Zielabstand berücksichtigt. In dem Dauerwaldstreifen werden mehr Bäume als nötig gepflanzt, um Ausfälle zu kompensieren, um eine Auslese durch Einzelentnahmen zu gewährleisten und um ausreichend Schatten zum Ausdunkeln der Niederwaldbäume zu generieren. Der Oberholz-Zielabstand ist zum Beispiel 4 bis 11 m.

Geometrisch ist der Dauerwaldstreifen durch die Länge sowie die Breite der Dauerwaldstreifen und des darin befindlichen "Dauerwaldkorridors" definiert.

Der Begriff "Dauerwaldkorridor" oder auch "Aufenthaltskorridor des Dauerwaldstreifens" bezeichnet im Rahmen dieser Offenbarung einen Korridor in Form eines Steifens (bzw. eines abgegrenzten Territoriums mit länglichem Grundriss) mit geradlinigen Außengrenzen innerhalb des Dauerwaldstreifens, der sich entlang der länglichen Ausdehnungsrichtung des Dauerwaldstreifens erstreckt.

Für den Fall dass die Bepflanzung bei der Begründung des Dauerwaldstreifens mit Dauerwaldbäumen in Reihen erfolgt, welche sich im Wesentlichen entlang der länglichen Ausdehnungsrichtung des Dauerwaldstreifens erstrecken (z.B. wenn die Dauerwaldbäume bei der Begründung des Dauerwaldstreifens in regelmäßigen Abständen in einer oder mehreren Reihen, welche sich im Wesentlichen entlang der länglichen Ausdehnungsrichtung des Dauerwaldstreifens erstrecken, angepflanzt werden, so dass durchgängige Reihen von Dauerwaldbäumen oder Gruppen von Dauerwaldbäumen gebildet werden), weist der Aufenthaltskorridor 100 % der bei der Begründung gepflanzten Dauerwaldbäume auf. Bei dieser Definition des Dauerwaldkorridors erstreckt sich der Aufenthaltskorridor des Dauerwaldstreifens zwischen den jeweils äußersten Reihen an Dauerwaldbäumen (bzw. zwischen den beiden außenliegenden Reihen an Dauerwaldbäumen).

Für den Fall dass die Bepflanzung bei der Begründung des Dauerwaldstreifens mit Dauerwaldbäumen nicht ausschließlich in Reihen erfolgt, welche sich im Wesentlichen entlang der länglichen Ausdehnungsrichtung des Dauerwaldstreifens erstrecken (z.B. wenn die Dauerwaldbäume bei der Begründung des Dauerwaldstreifens unregelmäßig angepflanzt werden oder sowohl in Reihen als auch unregelmäßig), weist der Aufenthaltskorridor mindestens 75 % der bei der Begründung gepflanzten Dauerwaldbäume auf, wobei der Aufenthaltskorridor so gewählt wird, dass der Aufenthaltskorridor eine möglichst geringe Breite aufweist. Bei dieser Definition des Dauerwaldkorridors werden vereinzelte am Rand des Dauerwaldstreifens angeordnete Dauerwaldbäume (sog. Ausreißer) nicht bei der Bestimmung des Aufenthaltskorridors berücksichtigt.

In einer Ausführungsform ist die Breite der Dauerwaldkorridore 0 bis 6,5 m, vorzugsweise 0 bis 6 m, insbesondere 0 bis 3 m. die Breite der Dauerwaldkorridore ist beispielsweise in den Figuren mit der Ziffer 11 angegeben.

In diesem Zusammenhang sei darauf hingewiesen, dass im Falle, dass der Mittelwald mit einreihigen Dauerwaldstreifen begründet wird (wie beispielsweise in den Figuren 1, 2, 4, 7 und 9 dargestellt), die Breite der Dauerwaldkorridore 0 m beträgt.

Eine weitere wichtige Eigenschaft des Mittelwalds betrifft die Abstände der Dauerwaldkorridore zueinander, insbesondere die kürzesten Abstände der Korridoraußengrenzen benachbarter Dauerwaldkorridore. Der kürzeste Abstand der Korridoraußengrenzen benachbarter Dauerwaldkorridore wird definiert als "der kürzeste Abstand benachbarter Dauerwaldkorridore".

Der Begriff "kürzester Abstand benachbarter Dauerwaldkorridore" bezeichnet im Rahmen dieser Offenbarung den kürzesten Abstand zwischen den Dauerwaldkorridoren von zwei an einen Niederwaldstreifen unmittelbar angrenzenden Dauerwaldstreifen, wobei der Abstand zwischen den Dauerwaldkorridoren von zwei an einen Niederwaldstreifen unmittelbar angrenzenden Dauerwaldstreifen (d.h. der Abstand zwischen den Dauerwaldkorridoren von zwei Dauerwaldstreifen, welche zusammen mit einem Niederwaldsteifen die Abfolge Dauerwaldstreifen-Niederwaldstreifen-Dauerwaldstreifen bilden) über den mittleren Abstand zwischen zwei sich gegenüberliegenden Außengrenzen der Dauerwaldkorridore, welche sich in Längsrichtung der Dauerwaldstreifen erstecken, bestimmt wird (d.h. zwischen den Außengrenzen der Dauerwaldkorridore, die jeweils dem Niederwaldstreifen am nächsten gelegen sind).

Die kürzesten Abstände benachbarter Dauerwaldkorridore variieren in Abhängigkeit von der Dauerwaldbaumart zwischen 4 und 11 m, vorzugsweise zwischen 4 und 10 m, weiter bevorzugt zwischen 6 und 10 m, noch weiter bevorzugt zwischen 8 und 10 m, insbesondere zwischen 9 und 10 Meter. Bei diesen kürzesten Abständen benachbarter Dauerwaldkorridore kann zum einen ein optimales Dickenwachstums-Zeit-Verhältnis der Dauerwaldbäume erreicht werden und zum andern kann auch innerhalb von 20 bis 35 Jahren eine ausreichende Beschattung durch das Kronendach der Dauerwaldbäume stattfinden, so dass die dazwischenliegenden Niederwaldbäume durch Lichtmangel zurückgedrängt werden.

Bei einem kürzesten Abstand benachbarter Dauerwaldkorridore von mehr als 11 m ist das Ausdunkeln der Niederwaldbäume innerhalb von 20 bis 35 Jahren nicht möglich.

Der Begriff "Ausdunkeln" bezeichnet im Rahmen dieser Offenbarung die Bereitstellung von mindestens 50% Schatten in einem Niederwaldstreifen, wobei der Schatten durch das Kronendach von Dauerwaldbäumen erzeugt wird, welche sich in zwei unmittelbar angrenzenden Dauerwaldstreifen zum beschatteten Niederwaldstreifen befinden.

Weiterhin ist es bei einem kürzesten Abstand benachbarter Dauerwaldkorridore von mehr als 11 m nicht möglich innerhalb von 20 bis 35 Jahren nach der Bestandbegründung ein funktionierendes unterirdisches Mykorrhiza-Netzwerk zwischen den Dauerwaldbäumen aufzubauen, welches für die Dauerstabilität des Waldes wichtig ist.

Die Breite des Dauerwaldstreifens (BDW) ist die mittlere Breite des Dauerwaldkorridors zuzüglich des jeweils halben mittleren Abstands von den Außengrenzen des Dauerwaldkorridors, welche sich in Längsrichtung des Dauerwaldstreifens erstecken, zu der jeweils am nächsten gelegen Außengrenzen der angrenzenden Niederwaldkorridore, welche sich in Längsrichtung der Niederwaldstreifen erstrecken. In anderen Worten ergibt sich die Breite eines Dauerwaldstreifens (BDW) der zwischen einem ersten und einem zweiten Niederwaldstreifen angeordnet ist aus der gemittelten Breite des Dauerwaldkorridors zuzüglich des gemittelten halben Abstands von der ersten Außengrenze des Dauerwaldkorridors (z.B. in Längsrichtung links davon gelegen) zu der dieser Außengrenze am nächsten gelegen Außengrenzen des angrenzenden ersten Niederwaldkorridors (in Längsrichtung ebenfalls links davon gelegen) und des gemittelten halben Anstands von der zweiten Außengrenze des Dauerwaldkorridors (z.B. in Längsrichtung rechts davon gelegen) zu der dieser Außengrenze am nächsten gelegen Außengrenzen des angrenzenden zweiten Niederwaldkorridors (in Längsrichtung ebenfalls rechts davon gelegen).

In einer Ausführungsform ist die Breite des Dauerwaldstreifens (BDW) 1,75 bis 8 m, vorzugsweise 1,75 bis 7 m.

Bei der Begründung des Dauerwaldstreifens können die Dauerwaldbäume in Reihen angepflanzt werden, welche sich im Wesentlichen entlang der länglichen Ausdehnungsrichtung des Dauerwaldstreifens erstrecken (z.B. können die Dauerwaldbäume bei der Begründung des Dauerwaldstreifens in regelmäßigen Abständen in einer oder mehreren Reihen, welche sich im Wesentlichen entlang der länglichen Ausdehnungsrichtung des Dauerwaldstreifens erstrecken, angepflanzt werden, so das durchgängige Reihen von Dauerwaldbäumen oder Gruppen von Dauerwaldbäumen gebildet werden). Allerdings können die Dauerwaldbäume bei der Begründung des Dauerwaldstreifens auch ungeordnet angepflanzt werden oder sowohl in Reihen als auch ungeordnet angepflanzt werden.

In einer Ausführungsform betragen die kürzesten Abstände der Dauerwaldbäume innerhalb einer Reihe an Dauerwaldbäumen in einem Dauerwaldstreifen 0,5 bis 11 m, vorzugsweise 1 bis 8 m. Die kürzesten Abstände der Dauerwaldbäume innerhalb einer Reihe an Dauerwaldbäumen können variieren. Auf diese Weise ist es möglich Gruppen von Dauerwaldbäumen zu bilden.

Wie in Fig. 1 und in Fig. 2 gezeigt, kann eine gleichmäßige Verteilung der Dauerwaldbäume in einer Reihe an Dauerwaldbäumen in einem Dauerwaldstreifen erfolgen, so dass die Dauerwaldbäume innerhalb einer Reihe an Dauerwaldbäumen in einem Dauerwaldstreifen einen kürzesten Abstand von 1 bis 3 m aufweisen. Es ist allerdings auch möglich, die kürzesten Abstände der Dauerwaldbäume innerhalb einer Reihe an Dauerwaldbäumen variieren, so dass Gruppen von Dauerwaldbäumen gebildet werden. Wie in Fig. 5 gezeigt, können die Abstände der Dauerwaldbäume innerhalb einer Reihe an Dauerwaldbäumen variieren, so dass alle 4 bis 11 m Gruppen von Dauerwaldbäumen gebildet werden.

Die Anlage der Dauerwaldbäume in einer Baumreihe ist bevorzugt, weil damit später (z.B. 20 bis 35 Jahre nach Bestandbegründung des beschriebenen Mittelwaldes) ein gleichmäßiges Ausdunkeln der Niederwaldbäume stattfinden kann. Ein Dauerwaldstreifen kann aus einer einzelnen Reihe an Dauerwaldbäumen bestehen (Fig. 1 und Fig. 2) oder aus mehreren Reihen an Dauerwaldbäumen, welche nebeneinander angelegt werden (Fig. 3).

In einer Ausführungsform ist die Anpflanzdichte der Dauerwaldbäume bei der Begründung des Mittelwalds 150 bis 3.000 ST/ha (Stück/Hektar), vorzugsweise 300 bis 2.000 ST/ha, insbesondere 400 bis 1.000 ST/ha, bezogen auf die Gesamtfläche des Mittelwalds.

Die Pflanzdichte der Dauerwaldbäume ist bezogen auf die Gesamtfläche des Mittelwalds bevorzugt gering, z.B. 400 bis 1.000 ST/ha, da einerseits ein Einzelschutz für die frisch gepflanzten Dauerwaldbäume gegen Fegen oder Wildverbiss wirtschaftlich erschwinglich ist und andererseits noch genügend viele Oberholz-Zielbäume bzw. Oberholz-Auswahlbäume zur Verfügung stehen, um später (z.B. nach 80 Jahren) besonders geradwüchsige Dauerwaldbäume zu erhalten.

In einer Ausführungsform beträgt die Länge einer Reihe an Dauerwaldbäumen in dem Dauerwaldstreifen mindestens 20 m, vorzugsweise mindestens 50 m, insbesondere mindestens 100 m, beispielsweise kann die Länge einer Reihe an Dauerwaldbäumen in dem Dauerwaldstreifen in einem Bereich von 20 bis 1.000 m liegen, vorzugsweise in einem Bereich von 50 bis 500 m, insbesondere in einem Bereich von 50 bis 250 m.

Zur Begründung eines Dauerwaldstreifens wird mindestens eine Dauerwaldbaumart angepflanzt. In einer Ausführungsform werden bei der Begründung eines Dauerwaldstreifen ausschließlich Dauerwaldbaumarten angepflanzt. Es können bei der Begründung eines Dauerwaldstreifens allerdings auch Dauerwaldbaumarten zusammen mit Niederwaldbaumarten angepflanzt werden, auch wenn dies keine besonders bevorzugte Ausführungsform darstellt. Ausgeschlossen ist allerdings das ausschließliche Anpflanzen von Niederwaldbaumarten bei der Begründung eines Dauerwaldstreifens.

Unter den eben genannten Rahmenbedingungen können also prinzipiell alle existierenden Baum- und Straucharten bei der Begründung eines Dauerwaldstreifens angepflanzt werden, solange mindestens eine Dauerwaldbaumart vertreten ist.

Der Begriff "Dauerwaldbaumart" bezeichnet im Rahmen dieser Offenbarung Baumarten innerhalb der Dauerwaldstreifen, die nach Ende der Niederwaldbewirtschaftung (z.B. 20 bis 35 Jahre nach Bestandbegründung) als Oberholz im Dauerwaldstreifen verbleiben. Der Kronendurchmesser der Dauerwaldbäume muss im Adult-Alter so bemessen sein, dass sie ein Kronenschluss der Dauerwaldbäume benachbarter Dauerwaldstreifen möglich ist.

Der Begriff "Adult-Alter" bezeichnet im Rahmen dieser Offenbarung einen Baum, der mindestens einen Brusthöhendurchmessers BHD von mindestens 30 cm aufweist oder einen Baum, der ein Alter von mindestens 40 Jahren hat.

Ein Brusthöhendurchmesser (BHD) von 30 cm kann beispielsweise bereits 20 Jahre nach Bestandbegründung erreicht werden. Somit kann das Adult-Alter bereits 20 Jahre nach Bestandbegründung erreicht werden.

Insbesondere schlanke Baumarten mit zugleich relativ großen Kronendurchmessern können im "Adult-Alter" einen geringeren BHD als 30 cm aufweisen und dennoch geeignet sein einen Kronenschluss benachbarter Dauerwaldstreifen zu generieren, insbesondere dann, wenn der kürzeste Abstand benachbarter Dauerwaldkorridore gering, z.B. 4 bis 6 m, ist. Schlanke Baumarten mit einem relativ großen Kronendach sind z.B. Birnbaum, Haselnussbaum, Apfelbaum oder Vogelbeerbaum.

Die Begründung der Dauerwaldstreifen kann mit einer einzigen Dauerwaldbaumart erfolgen. Die Begründung der Dauerwaldstreifen kann auch mit zwei oder mehr Dauerwaldbaumarten erfolgen, insbesondere wenn die Fläche des Ackers mehr als 3 ha beträgt, insbesondere wenn die Fläche des Ackers mehr als 5 ha oder mehr als 10 ha oder mehr als 20 ha beträgt. Mehrere Baumarten bilden stabilere Bestände und vermeiden Monokulturproblematiken.

In einer Ausführungsform werden bei der Begründung des Dauerwaldstreifens mindestens zwei verschiedenen Dauerwaldbaumarten angepflanzt.

Dauerwaldbaumarten sind z.B. Ahorn (Acer spec.), Rosskastanie (Aesculus hippocastanum), Erle (Alnus spec.), Birke (Betula spec.), Hainbuche (Carpinus spec.), Hickory (Carya spec.), Esskastanie (Castania spec.), Hasel/Baumhasel (Corylus spec.), Buche (Fagus spec.), Esche (Fraxinus spec.), Walnuss (Juglans spec.), Tulpenbäume (Liriodentron spec), Apfelbäume (Malus spec.), Platane (Platanus spec.), Kirsche (Prunus spec.), Birne (Pyrus spec.), Eiche (Quercus spec.), Mehlbeere/Elsbeere/Speierling (Sorbus spec.), Linde (Tilia spec), Ulme (Ulmus spec.), Robinie (Robinia spec.), Amur-Korkbaum (Phellodendron amurense), Amberbaum (Liquidamber spec.), Lederhülsenbäume (Gledisia spec.), Trompetenbäume (Catalpa spec.) Kampferbaum (Cinnamomum camphora ), Gummiulme (Eucommia ulmoides) Baummagnolie (Magnolia kobus), Bambus (Bambusoidea mit den Unterarten Arundinarieae, Bambuseae und Olyreae, z.B. Moso-Bambus = Phyllostachys edulis), Gliricidia (Gliricidia sepium), Nadelbäume (Abies spec., Cedrus spec., Calocedrus spec., Chamaecyparis spec., Cupressocyparis spec., Cupressus spec., Ginkgo biloba, Juniperus spec., Larix spec., Metasequoia glyptostroboides, Pinus spec., Picea spec, Pseudotsuga spec., Sequoiadendron spec., Taxus spec., Thuja spec., Tsuga spec).

Niederwaldbaumarten können unter bestimmten Umständen ebenfalls bei der Bestandsbegründung im Dauerwaldstreifen angepflanzt werden. Im Besonderen ist hierbei die Baumart Birke zu nennen, da sie sowohl eine gute Niederwaldbaumart als auch eine gute Dauerwaldbaumart ist. In den Dauerwaldstreifen sind neben der Niederwaldbaumart, wie z.B. Birke, noch mindestens eine oder zwei weitere Baumarten vorhanden, die nicht der Gruppe der Niederwaldbaumarten angehört, wie z.B. eine oder mehrere Baumarten aus der Gruppe der Dauerwaldbaumarten. Im Allgemeinen gilt, dass im Dauerwaldstreifen mindestens eine Baumart angepflanzt ist, die nicht den Niederwaldbaumarten angehört, z.B. eine oder mehrere Dauerwaldbaumarten.

Es werden bei der Begründung des Dauerwaldstreifens vorzugsweise zumindest teilweise Dauerwaldbaumarten mit einer leicht zersetzbaren Streu oder einer mittelschwer zersetzbaren Streu angepflanzt. In einer Ausführungsform haben mindestens 33 %, vorzugsweise mindestens 50 %, der bei der Begründung des Dauerwaldstreifens angepflanzten Dauerwaldbäume eine leicht zersetzbare Streu oder mittelschwer zersetzbare Streu, bezogen auf die Gesamtanzahl der angepflanzten Dauerwaldbäume. Baumarten mit einer leicht zersetzbaren Streu sind beispielsweise Robinie, Erle, Ulme, Esche, Holunder, Pappel und Espe, Weide, Ahorn, Vogelbeere, Birne, Apfel. Baumarten mit einer mittelschwerzersetzbaren Streu sind beispielsweise Kirsche, Mehlbeere, Elsbeere, Hasel und Baumhasel, Birke, Linde und Hainbuche.

Dauerwaldbaumarten mit einer schwer zersetzbaren Streu werden bei der Begründung des Dauerwaldstreifens im Verhältnis zu Dauerwaldbaumarten mit einer leicht zersetzbaren Streu oder einer mittelschwer zersetzbaren Streu vorzugsweise in Unterzahl angepflanzt. In einer Ausführungsform haben weniger als 50 %, vorzugsweise weniger als 34 %, der bei der Begründung des Dauerwaldstreifens angepflanzten Dauerwaldbäume eine schwer zersetzbare Streu, bezogen auf die Gesamtanzahl der angepflanzten Dauerwaldbäume. Baumarten mit einer schwer zersetzbaren Streu sind z.B. Nadelbäume, Eiche, Buche, Walnuss, Esskastanie, Rosskastanie und Platane.

Ein weiterer wichtiger Punkt in Bezug auf den unterirdischen Waldbau ist die Aktivität der mit den Baumwurzeln in Symbiose lebenden Ekto- und Endomykorrhizapilze. Die Symbiose-Pilze siedeln sich an den Feinwurzel der Bäume an und Verlängern über die fadenförmigen Pilzhyphen die Wurzeln. Dieses quasi verlängerte Wurzelwerk kann mehr Wasser und Spurenelemente aus dem Boden herauslösen und dem Baum zum Zwecke der Photosynthese zur Verfügung stellen. Im Gegenzug erhält der Pilz vom Baum Nährstoffe in Form von Zucker, welcher aus der Photosynthese stammt. Die Pilze erhalten vom Baum bis zu 25 % seiner Zuckerproduktion. Der Pilz stellt dem Baum außerdem ein unterirdisches Informationssystem bereit, welches den Baum beispielsweise vor Schädlingen warnt. Weiterhin dient das unterirdische zusammenhängende Pilzgeflecht als Nährstofftransportsystem von Baum zu Baum. Damit können Kleinbäume auch ohne entsprechendes Lichtangebot durch Unterstützung von umliegenden Großbäumen überleben und im Sinne des Gesamtbestandes wachsen. Allerdings sterben die Feinwurzeln inkl. Symbiose-Pilze immer wieder ab und werden auch immer wieder neu gebildet. Die abgestorbenen Feinwurzeln werden ebenfalls wieder in Nährstoffe für den Baum und in Dauerhumus umgewandelt. Darum ist eine möglichst aktive oder starke Endo- oder Ektomykorrhizaausbildung bevorzugt. Zum langfristigen Funktionieren der Wurzel-Pilz-Symbiose ist es wesentlich, dass sich insbesondere die Dauerwaldbäume nach z.B. 30 bis 40 Jahren in einem kürzesten Abstand von 4 bis 11 m befinden und nicht weiter voneinander entfernt stehen. Es werden bei der Begründung des Dauerwaldstreifens vorzugsweise hauptsächlich Dauerwaldbaumarten angepflanzt, die eine mittelstarke bis hohe Neigung zur Ausbildung von Endo- oder Ektomykorrhiza aufweisen.

In einer Ausführungsform weisen weniger als 34 %, vorzugsweise weniger als 25 %, der bei der Begründung des Dauerwaldstreifens angepflanzten Dauerwaldbäume eine geringe Neigung zur Ausbildung von Endo- oder Ektomykorrhiza auf.

Eine geringe Neigung zur Ausbildung von Mykorrhiza weisen z.B. die Dauerwaldbaumarten Robine, Rosskastanie und Walnuss auf. Die meisten anderen Baumarten haben eine mittelstarke bis starke Neigung zur Ausbildung von Mykorrhiza und können daher ohne Einschränkung angepflanzt werden. Eine besonders starke Neigung zur Ausbildung von Mykorrhiza zeigen z.B. Nadelbäume, Birke, Buche, Baumhasel und Eiche.

Es werden bei der Begründung des Dauerwaldstreifens vorzugsweise zumindest teilweise Dauerwaldbaumarten mit der Fähigkeit zum Stockaustrieb angepflanzt. In einer Ausführungsform haben mindestens 50 %, vorzugsweise mindestens 75 %, der bei der Begründung des Dauerwaldstreifens angepflanzten Dauerwaldbäume die Fähigkeit zum Stockaustrieb, bezogen auf die Gesamtanzahl der angepflanzten Dauerwaldbäume.

Die Fähigkeit zum Stockaustrieb aus adulten Baumstümpfen ist bevorzugt, da die adulte Wurzel nach der Baumernte der Dauerwaldbäume nicht abstirbt und damit die unterirdischen Bodenfunktionen und der Bodenschutz nicht zerstört werden. Aus der adulten Wurzel treiben neue Triebe aus, die den Wirtschaftsdauerwald erneuern. Stockaustrieb aus adulter Wurzel bilden beispielsweise die Dauerwaldbaumarten Ahorn, Esche, Robinie, Hainbuche, Linde, Pappel, Espe, Weide, Ulme, Esskastanie, Vogelbeere, Hasel und Baumhasel, Platane, und weniger stark ausgeprägt Eiche, Buche, Speierling, Elsbeere, Mehlbeere, Kirschen, Birke, Eibe und Mammutbaum.

Die bei der Begründung des Dauerwaldstreifens angepflanzten Dauerwaldbaumarten können zumindest teilweise die Fähigkeit zur Wurzelbrut aufweisen. Bevorzugt ist die Erneuerung des Wirtschaftsdauerwalds nach dessen Beerntung über Wurzelbrut, wenn die betroffene Baumart auch zukünftig in dem Bestand vertreten sein soll. Vorzugsweise wird in diesem Fall eine zweite Dauerwaldbaumart anpflanzt, die ebenfalls zur Wurzelbrut befähigt ist, damit die Baumartendiversifizierung aufrechterhalten werden kann. Zur Wurzelbrut befähigte Baumarten bilden aus unterirdischen Wurzelausläufern neue Triebe, die in großer Anzahl im Umkreis von bis zu 30 m zum alten Baumstumpf erscheinen. Meist ist diese unkontrollierte, explosive Art der Erneuerung nicht bevorzugt, da die Bestandsfläche leicht zur Monokultur "kippen" kann.

In einer Ausführungsform werden bei der Begründung des Dauerwaldstreifens zumindest teilweise Dauerwaldbaumarten angepflanzt, die zur Wurzelbrut befähigt sind. In diesem Fall weisen vorzugsweise weniger als 34 %, vorzugsweise weniger als 25 %, der bei der Begründung des Dauerwaldstreifens angepflanzten Dauerwaldbäume die Fähigkeit zur Wurzelbrut auf, bezogen auf die Gesamtanzahl der angepflanzten Dauerwaldbäume.

Zur Wurzelbrut befähigte Dauerwaldbaumarten sind beispielsweise Robine, Erle, Espe, Esskastanie und Speierling.

Die bei der Begründung des Dauerwaldstreifens angepflanzten Dauerwaldbaumarten sind vorzugsweise keine invasiven Dauerwaldbaumarten. In Deutschland sind beispielsweise die Baumarten Eschenahorn, Götterbaum, Rotesche, Spätblühende Traubenkirsche und Paulownia als invasiv eigenstuft. In anderen Gebieten sind die eben genannten Baumarten durchaus heimisch und können dort auch angepflanzt werden.

Die bei der Begründung des Dauerwaldstreifens angepflanzten Dauerwaldbaumarten sind vorzugsweise keine schadanfälligen Dauerwaldbaumarten.

In einer Ausführungsform werden bei der Begründung eines Dauerwaldstreifens zumindest teilweise Dauerwaldbaumarten angepflanzt die schadanfällig sind. In diesem Fall sind vorzugsweise höchstens 25 %, vorzugsweise höchstens 10 %, der bei der Begründung des Dauerwaldstreifens angepflanzten Dauerwaldbäume schadanfällig, bezogen auf die Gesamtanzahl der angepflanzten Dauerwaldbäume.

Besonders schadanfällig sind beispielsweise Esche, Ulme, Fichte, Sorbusarten (Vogelbeere, regional), Esskastanie, Rosskastanie, Lärche und Birne. Besonders schadunanfällig sind beispielsweise Robinie, Douglasie, Kiefer, Ahorn, Birke, Hainbuche, Hasel, Baumhasel, Linde, Buche und Eiche.

Die bei der Begründung des Dauerwaldstreifens angepflanzten Dauerwaldbaumarten sind vorzugsweise schnellwüchsige Dauerwaldbaumarten. Auf diese Weise ist es möglich in kurzer Zeit große Mengen an Humus aufzubauen. Alternativ können Dauerwaldbaumarten angepflanzt werden, die eine hohe Schattentoleranz aufweisen.

Die bei der Begründung des Dauerwaldstreifens angepflanzten Dauerwaldbaumarten werden gemäß der Boden- und Klimaverhältnisse und örtlicher Gegebenheiten und gemäß forstlicher Praxis ausgewählt und kombiniert.

Die bei der Begründung eines Dauerwaldstreifens angepflanzten Dauerwaldbaumarten erreichen im Adult-Alter vorzugsweise Baumhöhen von mindestens 5 m, weiter bevorzugt von mindestens 15 m, insbesondere von mindestens 20 m. Besonders bevorzugt sind Dauerwaldbäume die im Adult-Alter eine Baumhöhe von 20 bis 25 m erreichen.

Bei Bäumen deren Baumhöhe im Adult-Alter 25 m übersteigen haben eine erhöhte Windbruchgefahr aufgrund der stärkeren Hebelkräfte, die der Wind auf den Baum ausüben kann. Dies ist insbesondere aufgrund der in Zukunft häufiger auftretenden Starkwinde ein wichtiger Nachhaltigkeitsaspekt. Zu niedrige Dauerwaldbaumendhöhen benötigen eventuell zu lange, um den Kronenschluss herzustellen.

In einer Ausführungsform werden bei der Begründung der Dauerwaldstreifen zumindest teilweise Dauerwaldbaumarten angepflanzt, deren Baumhöhe im Adult-Alter bei 20 bis 25 m liegt.

In einer Ausführungsform werden bei der Begründung der Dauerwaldstreifen ausschließlich Dauerwaldbaumarten angepflanzt, deren Baumendhöhe bei 20 bis 25 m liegt.

Dauerwaldbaumarten die im Adult-Alter eine Baumendhöhe von 20 bis 25 m erreichen sind beispielsweise Ahorn (z.B. Spitzahorn Acer platanoides), Rosskastanie (Aesculus hippocastanum), Erle (Alnus spec.), Birke (Betula spec.), Hainbuche (Carpinus spec.), Baumhasel (Corylus colurna), Walnuss (Juglans spec.), Kirschen (Prunus spec.), Ulmen (Ulmus spec.), Robinien (Robinia spec.), Amur-Korkbaum (Phellodendron amurense), Amberbaum (Liquidamber spec.), Lederhülsenbaumarten (Gledisia spec.), Trompetenbäume (Catalpa spec.), Kampferbaum (Cinnamomum camphora), Gummiulme (Eucommia ulmoides), Bambus (Bambusoidea mit den Unterarten Arundinarieae, Bambuseae und Olyreae, z.B. Moso-Bambus = Phyllostachys edulis), Ginkgo (Ginkgo biloba), Kiefer (Pinus spec.), Eibe (Taxus spec.), Lebensbäume (Thuja spec). und Hemlocktanne (Tsuga spec.).

Vorzugsweise ist die Baumhöhe von mindestens 50% der bei der Begründung des Dauerwaldstreifens angepflanzten Dauerwaldbäume im Adult-Alter mindestens 20 m oder mindestens doppelt so groß wie der kürzeste Abstand benachbarter Dauerwaldkorridore.

Dauerwaldbaumarten, die im Adult-Alter Baumhöhen von mindestens 20 m erreichen sind beispielsweise Ahorn (z.B. Spitzahorn Acer platanoides), Rosskastanie (Aesculus hippocastanum), Erle (Alnus spec.), Birke (Betula spec.), Hainbuche (Carpinus spec.), Baumhasel (Corylus colurna), Walnuss (Juglans spec.), Kirschen (Prunus spec.), Ulmen (Ulmus spec.), Robinien (Robinia spec.), Amur-Korkbaum (Phellodendron amurense), Amberbaum (Liquidamber spec.), Lederhülsenbaumarten (Gledisia spec.), Trompetenbäume (Catalpa spec.), Kampferbaum (Cinnamomum camphora), Gummiulme (Eucommia ulmoides), Bambus (Bambusoidea mit den Unterarten Arundinarieae, Bambuseae und Olyreae, z.B. Moso-Bambus = Phyllostachys edulis), Tanne (Abies spec.), Zeder (Cedrus spec., Calocedrus spec)., Scheinzypresse (Chamaecyparis spec)., Zypressen (Cupressocyparis spec., Cupressus spec)., Ginkgo (Ginkgo biloba), Wacholder (Juniperus spec.), Lärche (Larix spec.), Urweltmammutbaum (Metasequoia glyptostroboides), Kiefer (Pinus spec.), Fichte (Picea spec), Douglasie (Pseudotsuga spec.), Mammutbaum (Sequoiadendron spec.), Lebensbaum (Thuja spec.), und Hemlocktanne (Tsuga spec.).

Dauerwaldbaumarten, die im Adult-Alter Baumhöhen von weniger als 20 m erreichen sind beispielsweise Apfelbaum, Birnbaum, Eibe, die meisten Sorbus-Arten (Elsbeere, Mehlbeere, Speierling) und Haselnussbaum. Diese Baumarten eignen sich zur Begründung des Dauerwaldstreifens, wenn der kürzeste Abstand benachbarter Dauerwaldkorridore kleiner als 11 m, z.B. 4 bis 8 m ist oder als Mischbaumart.

Die Kombination von Baumarten - insbesondere die Kombination von Baumarten innerhalb einzelner Dauerwaldstreifen - erfolgt bevorzugt derart, dass Bestände mit ähnlichen Baumhöhen im Adult-Alter resultieren.

In einer Ausführungsform ist der bei der Bestandsbegründung gewählte kürzeste Abstand benachbarter Dauerwaldkorridore (vorzugsweise 4 bis 11 m) auch gleichzusetzten mit dem Oberholz-Zielabstand des bestandsbildenden Oberholzes. Vorzugsweise ist der Abstand der Dauerwaldbäume innerhalb einer Reihe an Dauerwaldbäumen bei der Bestandbegründung geringerer als der für das bestandsbildende Oberholz (Oberholz-Zielabstand) vorgesehene Abstand der Dauerwaldbäume innerhalb einer Reihe an Dauerwaldbäumen. Mit anderen Worten ist bei der Bestandbegründung der Abstand der Dauerwaldbäume innerhalb einer Reihe an Dauerwaldbäumen bei der Bestandbegründung geringerer als der Oberholz-Zielabstand. Auf diese Weise ist im späteren Verlauf noch eine Selektion der Zielbäume möglich und Mortalitätsverluste verursachen später keine Bestandslücken. Zum Ausdunkeln des Niederwaldstreifens nach 20 bis 35 Jahren sind die Dauerwaldbaumarten und deren Abstände zueinander so zu wählen, dass ein Kronenschluss zumindest innerhalb einer Reihe an Dauerwaldbäumen in den jeweiligen Dauerwaldstreifen erfolgen kann.

In einer Ausführungsform betragen die Abstände der Dauerwaldbäume innerhalb einer Reihe an Dauerwaldbäumen in den Dauerwaldstreifen 2 bis 10 m, vorzugsweise 2 bis 6 m. Die Abstände der Dauerwaldbäume innerhalb einer Reihe an Dauerwaldbäumen kann allerdings auch variieren und dabei zumindest teilweise größer sein als die in den vorgenannten Bereichen genannten Abstände, insbesondere wenn Gruppen von Dauerwaldbäumen gebildet werden.

In einer Ausführungsform betragen die Abstände der Dauerwaldbäume innerhalb einer Reihe an Dauerwaldbäumen in den Dauerwaldstreifen 20 bis 35 Jahre nach der Bestandsgründung 2 bis 10 m, vorzugsweise 2 bis 6 m.

Der notwendige Kronendurchmesser der Dauerwaldbäume zum Ausdunkel bzw. Unterdrücken der Niederwaldbäume hängt unter anderem vom kürzesten Abstand der Dauerwaldkorridore, von den kürzesten Abständen der Dauerwaldbäume innerhalb einer Dauerwaldreihe, von der Aktivität des Stockaustriebs der Niederwaldbäume und von der Höhe der Dauerwaldbäume ab.

Innerhalb eines Dauerwaldstreifens sollten zumindest 50 % der bei der Begründung des Dauerwaldstreifens angepflanzten Dauerwaldbäume im Adult-Alter (beispielsweise in einem Alter von 40 Jahren oder bei einem BHD von mindestens 30 cm) einen Kronendurchmesser aufweisen, der mindestens so groß ist wie der kürzeste Abstand benachbarter Dauerwaldkorridore. Dauerwaldbaumarten, die einen besonders großen Kronendurchmesser ausbilden können, sind beispielsweise die Baumarten Walnuss, Eiche, Buche, Ahorn, Esche, Ulme, Esskastanie, Rosskastanie, und Platane.

Vorzugsweise erfolgt die Begründung des Dauerwaldstreifens zumindest teilweise mit Dauerwaldbaumarten die einen großen Kronendurchmesser ausbilden können, insbesondere wenn der kürzeste Abstand benachbarter Dauerwaldkorridore besonders groß ist, beispielsweise 10,0 m oder 11,0 m.

Damit das Ausdunkeln der Niederwaldbäume Erfolg versprechend realisiert werden kann, werden bei der Begründung des Dauerwaldstreifens vorzugsweise Dauerwaldbaumarten angepflanzt, welche im Adult-Alter Baumkronen ausbilden, die wenig lichtdurchlässig sind.

In einer Ausführungsform werden bei der Begründung des Dauerwaldstreifens, bezogen auf die Gesamtanzahl der angepflanzten Dauerwaldbäume, vorzugsweise weniger als 50 %, insbesondere weniger als 33 %, Dauerwaldbäume angepflanzt, die stark lichtdurchlässige Baumkronen ausbilden. Dauerwaldbaumarten, die stark lichtdurchlässige Baumkronen bilden, sind beispielsweise Birke, Kiefer, Espe (Zitterpappel), Robinie, Vogelbeere und Esche.

Bevorzugt wird eine maschinelle Bearbeitung des Bodens zur Reduzierung der Begleitvegetation innerhalb der ersten beiden Vegetationsperioden (gerechnet ab der Bestandsbegründung) durchgeführt. Die Bearbeitung wird z.B. mit einem Grubber oder einer Egge, wenn möglich zwischen den Baumreihen, bevorzugt aber zumindest in den unbestockten Übergangsflächen (Fläche zwischen Dauerwaldkorridor und Niederwaldkorridor; gemäß Ziffer 8a und 8b) durchgeführt. Die Bearbeitung wirkt sich vorteilhaft auf den Wachstumsfortschritt der Jungbäume in den Baumreihen aus. Nach der zweiten Vegetationsperiode (gerechnet ab der Bestandsbegründung) erfolgt bevorzugt keine maschinelle Unkrautbehandlung mehr.

### Mittelwald

Bevorzugt findet die Bestandsbegründung des Mittelwaldes auf z.B. landwirtschaftlich genutzten Feldern, Wiesen oder Äckern statt, deren Fläche mehr als 1 ha misst, bevorzugt mehr als 3 ha, insbesondere mehr als 5 ha.

Bevorzugt zeichnet sich die landwirtschaftlich genutzte Fläche durch einen niedrigen Gehalt an organischem Kohlenstoff (C_{org}.) bzw. Humus im Oberboden aus. Niedrig ist beispielsweise weniger als 3%, bevorzugt weniger als 2% und besonders bevorzugt weniger als 1% an C_{org}. in den oberen 70 cm des Oberbodens. Ein anfangs niedriger Gehalt an C_{org}. bzw. Humus ermöglicht im Laufe der Mittelwaldwirtschaft eine größere Zunahme des C_{org}. und damit ein höheres Potential der Bodenverbesserung und letztendlich auch der CO₂-Speicherung im Boden in Form von Humus.

Der Humusgehalt umfasst die Gesamtheit der organischen Bodensubstanz (ohne Grobanteile) und damit auch die noch nicht von Bodenorganismen umgesetzte tote Biomasse. Organisch ist alles, was irgendwann einmal gelebt hat. Der Humusgehalt ist daher identisch dem C_{org}. Der Humusgehalt wird in Gew.-% angegeben und wird meist auf eine bestimmte Bodentiefe bezogen, wie z.B. von 0 bis 30 cm (die ober 30 cm des Bodenhorizontes sind damit gemeint) oder 0 bis 70 cm. Die Bestimmung des Humusgehaltes erfolgt dabei über DIN ISO 10694 (1996), wobei die Probenahme gemäß DIN ISO 10381-4 (1995) durchgeführt wird. Ökologisch interessant ist die Menge an Dauerhumus, die im Oberboden durch die Aktivität von Bodenorganismen, wie z.B. Regenwürmern, Asseln, Milben, Springschwänzen, Pilzen und Bakterien aus organischer Substanz umgewandelt bzw. verstoffwechselt wird. Gerade dieser Dauerhumus ist über Jahrzehnte bzw. Jahrhunderte stabil und kann ein Depot zur Speicherung von CO₂ aus der Atmosphäre sein, bei dem nicht nur das klimaschädliche Gas CO₂ aus der Luft über den Fotosyntheseprozess der Bäume bzw. Begleitvegetation eliminiert wird, sondern zugleich der Oberboden fruchtbarer gemacht wird. Es findet eine C-Sequestrierung in Form von Dauerhumus im Boden statt.

Bei der Umsetzung toter organischer Substanz wird neben Dauerhumus auch Nährhumus gebildet. Nährhumus ist der Teil der umgesetzten organischen Substanz, der den Bäumen bzw. Pflanzen als sofortige Nährstoffquelle dient, z.B. in Form von Mineralstoffen, Stickstoff- oder Phosphorquelle. Nährhumus wird zum Teil auch in Dauerhumus umgewandelt.

Die organisch zersetzte Substanz des Dauerhumus und Nährhumus lässt sich proben- und messtechnisch schlecht erfassen. Darum wird bei quantitativen Aussagen auf die oben genannten DIN ISO Messverfahren des Humusgehaltes bzw. C_{org}. zurückgegriffen.

Vorzugsweise ist der Pflanzplan des Mittelwaldes gekennzeichnet durch mindestens drei Dauerwaldstreifen und mindestens zwei Niederstreifen, insbesondere durch mindestens 5 Dauerwaldstreifen und mindestens 4 Niederwaldstreifen.

Vorzugsweise ist in dem beschriebenen Mittelwald die durchschnittliche Dauerwaldstreifenbreite (DBDW) kleiner als die durchschnittliche Niederwaldstreifenbreite (DBNW). Die durchschnittliche Dauerwaldstreifenbreite (DBDW) bzw. die durchschnittliche Niederwaldstreifenbreite (DBNW) bezieht sich auf die Erstaufforstungsfläche und ist definiert als die Summe der Dauerwaldstreifenbreiten (BDW) geteilt durch die Anzahl der jeweiligen Dauerwaldstreifen bzw. die Summe der Niederwaldstreifenbreiten (BNW) durch die Anzahl der jeweiligen Niederwaldstreifen.

In einer Ausführungsform ist das Verhältnis der durchschnittlichen Breite der Niederwaldstreifen (DBNW) zu der durchschnittlichen Breite der Dauerwaldstreifen (DBDW) in einem Bereich von größer 1,0 bis 4,0, vorzugsweise in einem Bereich von 1,5 bis 2,0.

Vorzugsweise ist auch die Breite eines Dauerwaldstreifens (BDW) kleiner als die Breite eines angrenzenden Niederwaldstreifens (BNW). Die Niederwaldstreifen werden vorzugsweise breiter angelegt als die Dauerwaldstreifen, da diese aufgrund des hohen Jugendwachstums schneller eine Jungwaldstruktur erreicht wird, welche mehr leicht zersetzbare Laubstreu zum Humusaufbau liefert. Außerdem wird mehr Holzbiomasse gebildet.

Vorzugsweise werden die Breiten der Niederwaldstreifen (BNW) und die Breiten der Dauerwaldstreifen (BDW) insgesamt relativ schmal gewählt, so dass die Erstaufforstungsfläche möglichst viele Übergänge von Niederwaldstreifen zu Dauerwaldstreifen aufweist.

In einer Ausführungsform ist die durchschnittliche Breite der Dauer- und Niederwaldstreifen (DBDWNW) kleiner als 10 m, vorzugsweise kleiner als 8 m, insbesondere kleiner als 6 m. Die durchschnittliche Breite der Dauer- und Niederwaldstreifen (DBDWNW) bezieht sich auf die Erstaufforstungsfläche und ist definiert als die Summe der Dauerwaldstreifenbreiten (BDW) und Niederwaldstreifenbreiten (BNW) geteilt durch die Anzahl der jeweiligen Dauerwaldstreifen und Niederwaldstreifen. Je kleiner die durchschnittliche Breite der Dauer- und Niederwaldstreifen (DBDWNW) ist, umso häufiger können sich Dauerwaldstreifen mit Niederwaldstreifen abwechseln, was zu einem verbesserten Humusaufbau führt.

Vorzugsweise ist auch der kürzeste Abstand benachbarter Niederwaldkorridore kleiner als der kürzeste Abstand benachbarter Dauerwaldkorridore.

Vorzugsweise ist auch die durchschnittliche Breite der Dauerwaldkorridore (wie beispielsweise in den Figuren mit Ziffer 11 dargestellt) kleiner als die durchschnittlich Breite der Niederwaldkorridore (wie beispielsweise in den Figuren mit Ziffer 10 dargestellt).

Die Breite der Dauerwaldkorridore ist bevorzugt 0 bis 6,5 m und die Breite der Niederwaldkorridore ist bevorzugt 0,4 bis 7,5 m.

Die Breiten der Niederwaldkorridore und die Breiten der Dauerwaldkorridore sind insgesamt relativ schmal gewählt, so dass die Erstaufforstungsfläche möglichst viele Übergänge von Niederwaldstreifen zu Dauerwaldstreifen aufweist.

Erfindungsgemäß ist der Außengrenze-Abstand zwischen einem Dauerwaldkorridor und einem unmittelbar angrenzenden Niederwaldkorridor 2,0 bis 7 m, insbesondere 2,8 bis 6,2 m.

Eine weitere wichtige Eigenschaft des Mittelwalds betrifft die Abstände zwischen Niederwaldkorridoren und Dauerwaldkorridoren, insbesondere der kürzeste Abstand zwischen der Korridoraußengrenze eines Niederwaldkorridors und der Korridoraußengrenze eines benachbarten Dauerwaldkorridors. Der kürzeste Abstand zwischen der Korridoraußengrenze eines Niederwaldkorridors und der Korridoraußengrenze eines benachbarten Dauerwaldkorridors wird definiert als "Außengrenze-Abstand".

Der Begriff "Außengrenze-Abstand", bezeichnet im Rahmen dieser Offenbarung den kürzesten Abstand zwischen dem Dauerwaldkorridor eines Dauerwaldstreifens und dem Niederwaldkorridor eines unmittelbar angrenzenden Niederwaldstreifens, wobei der Abstand zwischen dem Dauerwaldkorridor des Dauerwaldstreifens und dem Niederwaldkorridor des unmittelbar angrenzenden Niederwaldstreifens (d.h. der Abstand zwischen dem Aufenthaltskorridor eines Dauerwaldstreifens und dem Aufenthaltskorridor eines Niederwaldstreifens, welche die Abfolge Dauerwaldstreifen-Niederwaldstreifen bilden) über den mittleren Abstand zwischen einer Außengrenze des Dauerwaldkorridors, welche sich in Längsrichtung des Dauerwaldstreifens erstreckt und der am nächsten gelegenen Außengrenze des Niederwaldkorridors des unmittelbar angrenzenden Niederwaldstreifens, welche sich in Längsrichtung des Niederwaldsteifens erstreckt, bestimmt wird (d.h. zwischen einer Außengrenze des Aufenthaltskorridors des Dauerwaldstreifens und der am nächsten gelegen Außengrenze des Aufenthaltskorridors eines unmittelbar angrenzenden Niederwaldsteifens).

In einer Ausführungsform ist der Außengrenze-Abstand zwischen dem Dauerwaldkorridor eines Dauerwaldstreifens und dem Niederwaldkorridor eines ersten unmittelbar angrenzenden Niederwaldstreifen anders als der Außengrenze-Abstand zwischen dem Dauerwaldkorridor des Dauerwaldstreifens und dem Niederwaldkorridor eines zweiten unmittelbar angrenzenden Niederwaldstreifens. Dabei beträgt der Außengrenze-Abstand zwischen dem Dauerwaldkorridor und dem Niederwaldkorridor des ersten unmittelbar angrenzenden Niederwaldstreifen 2,0 bis 4,0 m und der Außengrenze-Abstand zwischen dem Dauerwaldkorridor und dem Niederwaldkorridor des zweiten unmittelbar angrenzenden Niederwaldstreifen 4,0 bis 6,0 m.

Dieser unterschiedliche Außengrenze-Abstand führt dazu das den Dauerwaldbäumen mehr Licht zum ungestörten Jugendwachstum zur Verfügung steht und erleichtert außerdem die maschinelle Ernte der Niederwaldbäume, da ein neben dem Häcksler fahrender Traktor inkl. Anhänger (zumindest im breiteren Teil) Platz findet. Weiterhin wird auch der Bodenbereich um die Dauerwaldbäume bei der Ernte der Niederwaldbäume geschont.

Die Dauerwaldbäume erhalten durch den bevorzugten großen Außengrenze-Abstand (z.B. 4 bis 6 m zusammen mit 2 bis 4 m) vor allem in der Jugendphase auch mehr Wasser aus bodennahen Schichten, denn die Niederwaldbäume wachsen vor allem in den ersten 10 bis 20 Jahren viel stärker als die Dauerwaldbäume und verbrauchen somit auch mehr Wasser. Weiterhin erhalten die Dauerwaldbäume durch den bevorzugten großen Außengrenze-Abstand (z.B. 4 bis 6 m zusammen mit 2 bis 4 m) ausreichend Licht für das Wachstum.

Bei Verwendung von schnellwachsenden Pappeln als Niederwaldbäume ist dieser relativ große Abstand besonders wichtig, denn Pappeln können innerhalb einer Umtriebs-Zeit von 4 bis 5 Jahren bis zu 10 Meter hochwachsen und dabei ein relativ dichtes Kronendach ausbilden.

In einer bevorzugten Ausführung ist die Summe der beiden Außengrenze-Abstände eines Niederwaldkorridors zu den Dauerwaldkorridoren, welche dem Niederwaldkorridor benachbart sind, größer, als die Breite des zwischen den beiden Dauerwaldkorridoren liegenden Niederwaldkorridors.

Dies ist beispielsweise in der Figur 2 dargestellt, wobei die Summe der als Ziffer 8a und 8b bezeichneten Abständen größer ist als der als Ziffer 10 bezeichnete Abstand.

Die unbestockten Übergangsflächen zwischen den Dauerwaldkorridoren und den Niederwaldkorridoren enthalten sowohl Begleitvegetation als auch Laubstreu und es gelangt genügend Licht und Regenwasser auf den Oberboden, so dass eine schnelle Verstoffwechselung der Laubstreu und der Begleitvegetation durch die Aktivität der Bodenorgansimen stattfinden kann, welches als Futter für die Bodenorganismen dient und die Dauerhumusbildung beschleunigt. Die Begleitvegetation hat im Verhältnis zur Laubstreu ein geringeres Verhältnis von Kohlenstoff zu Stickstoff (C/N-Verhältnis) und ist damit durch die Bodenorganismen schneller verstoffwechselbar. Somit ist von Beginn an ein vielfältiges und schnell verwertbares Futterangebot für die Bodenorganismen gewährleistet. Die Wurzeltiefe der Begleitvegetation ist in der Regel niedriger als die Wurzeltiefe der Niederwaldbäume. In Summe wird der obere Bodenhorizont durch die Kombination von Niederwaldbäumen und Begleitvegetation stärker durchwurzelt, was zu einer effektiveren Gesamtbiomassebildung führt. Die Kombination von Laubstreu und abgestorbener Begleitvegetation ist hinsichtlich der Qualität und Quantität der zur Verfügung gestellten Biomasse zum Zwecke der Verstoffwechselung durch die Bodenorganismen besonders bevorzugt. Weiterhin reicht das "Futter" wegen der unterschiedlichen C/N-Verhältnisse für die Bodenorganismen über das ganze Jahr hinweg. Durch den großen Abstand von Niederwaldkorridor zu Dauerwaldkorridor (Summe der Ziffern 8a und 8b) entsteht weiterhin zwischen Dauerwaldbäumen und Niederwaldbäumen nur eine geringe Konkurrenz um Ressourcen wie Wasser, Licht und Bodennährstoffe. Außerdem wird aufgrund der großen Laub- und Wurzelstreubildung der Niederwaldbäume sowie der vorhandenen Begleitvegetation ein schneller Humusaufbau erzielt.

Bodenorganismen z.B. Regenwürmern, Springschwänzen, Hornmilben, Tausendfüßler und Asseln, aber auch organische Substanz zersetzende Pilze (Saprophyten) und Bakterien, sind an der Verstoffwechslung des Laubes beteiligt. Ein intakter und richtig strukturierter Waldboden enthält 20 bis 25 Tonnen pro Hektar Lebendmasse an Bodenorganismen. Das entspricht dem Lebendgewicht von 4 ausgewachsenen Elefanten. Es sind alleine bis zu 2 Tonnen pro Hektar an Regenwürmern tätig, die im besonderen Maße für eine Dauerhumusbildung stehen. Zum Vergleich: Ein Hektar Ackerland kommt selten über 5 Tonnen Lebendgewicht pro Hektar an Boden lebewesen.

Es können bei zu starker Beschattung der Dauerwaldbäume auch Einzelreihen des Niederwaldes entnommen werden, so dass mehr Licht zu den Dauerwaldbäumen gelangt. Die Beschattung der Dauerwaldbäume ist über die Umtriebs-Zeit der Niederwaldbäume nicht konstant. Während kurz vor der Ernte das Kronendach der Niederwaldbäume relativ viel Licht absorbiert trifft in der Vegetationsperiode nach einer Aberntung der Niederwaldbäume nahezu volles Licht auf die Dauerwaldbäume.

Streifenbreite, Streifenabstand und Pflanzdichte sind nicht zwangsläufig starr und können innerhalb einer Erstaufforstungsfläche im Rahmen der festgelegten Bereiche variieren.

In einer Ausführungsform ist die Pflanzdichte der Niederwaldbäume 2.500 bis 5.000 Stück pro Hektar und die Pflanzdichte der Dauerwaldbäume 400 bis 1.000 Stück pro Hektar beträgt, bezogen auf die Gesamtfläche des Mittelwalds.

Es wird außerdem ein Verfahren zur Begründung des beschrieben Mittelwalds beschrieben, insbesondere ein Verfahren zur Begründung eines Mittelwalds welches das Bereitstellen von mindesten drei Dauerwaldstreifen aufweisend Dauerwaldbäume und das Bereitstellen von mindestens zwei Niederwaldstreifen aufweisend Niederwaldbäume aufweist, wobei Niederwaldstreifen und Dauerwaldstreifen abwechselnd angeordnet werden, so dass ein Niederwaldstreifen zwischen zwei unmittelbar an diesen angrenzenden Dauerwaldstreifen angeordnet ist.

Die durchschnittliche Breite der Dauerwaldstreifen kann dabei schmaler sein als die durchschnittliche Breite der Niederwaldstreifen. Außerdem ist es vorteilhaft, wenn der kürzeste Abstand benachbarter Dauerwaldkorridore 4,0 bis 11,0 m beträgt, vorzugsweise 6,0 bis 10,0 m, insbesondere 8,0 bis 10,0 m.

Weiterhin wird ein Verfahren zur Begründung eines Wirtschaftsdauennraldes offenbart, wobei zunächst der beschriebene Mittelwald begründet wird und anschließend die Niederwaldbäume der Niederwaldstreifen wiederkehrend mit Umtriebs-Zeiten von 3 bis 5 Jahren geerntet werden, wobei die in dem Mittelwald angesiedelten Dauerwaldbäume während dem Verfahren zur Begründung des Wirtschaftsdauerwalds nicht vollständig geerntet, sondern maximal einzeln entnommen werden, so dass die Dauerwaldbäume zumindest noch im Oberholz-Zielabstand von 4 bis 11 m stehenbleiben, so dass mit zunehmender Zeit die Niederwaldwaldbäume durch die Dominanz der Dauerwaldbäume ausgedunkelt werden und das Verhältnis des Holzvorrates in Volumenfestmeter (Vfm) von Dauerwaldbäumen zu Niederwaldbäumen mindestens 1 ist, so dass ein Wirtschaftsdauerwald begründet wird.

Ab dem zweiten Herbst nach der Bestandbegründung sammeln sich bereits nennenswerte Mengen abfallendes Laub am Oberboden des Niederwaldstreifens und zwischen Dauerwald- und Niederwaldkorridor an (also im unbestockten Übergangsbereich gemäß Ziffer 8a und 8b). Die Laubstreumengen der Dauerwaldbäume sind zu diesem Zeitpunkt vernachlässigbar gering, die Laubstreumengen der Niederwaldbäume sind zu diesem Zeitpunkt bereits hoch. Die akkumulierte Laubstreu ist bevorzugt leicht zersetzbar und fällt in möglichst großen Mengen und nach kurzer Anlaufzeit an. Weiterhin wächst ab dem zweiten Jahr die Begleitvegetation bevorzugt in der Übergangsfläche zwischen Niederwald- und Dauerwaldkorridoren. Die Begleitvegetation zeichnet sich durch ein niedriges C/N-Verhältnis aus und bewirkt eine schnelle Zersetzungsgeschwindigkeit von z.B. 4 bis 8 Monaten durch die Bodenorganismen. Laubstreu hat in einer Ausführungsform ein C/N-Verhältnis von 25 und wird innerhalb von 1 bis 1,5 Jahren von den Bodenorganismen zersetzt.

In einer Ausführungsform findet der erste Umtrieb der Niederwaldbäume nach 2 bis 20 Jahren statt, vorzugsweise nach 3 bis 5 Jahren. Bei dem Umtrieb werden mindestens 85% der Niederwaldbäume geerntet, vorzugsweise wird der Baumbestand vollständig geerntet. Vollständig heißt, dass mindestens 95 % aller Niederwaldbäume im Niederwaldstreifen während eines Umtriebs geerntet werden.

In einer Ausführungsform liegen die Umtriebs-Zeiten der Niederwaldstreifen bei 2 bis 10 Jahren, vorzugsweise bei 3 bis 6 Jahren, insbesondere bei 3 bis 5 Jahren.

Die bevorzugte Umtriebs-Zeit hängt im Wesentlichen von der gewählten Baumart und deren Wachstumsgeschwindigkeit, insbesondere vom Dickenwachstum in Bodennähe und der Geschwindigkeit zur Ausbildung des Kronenschlusses ab. Kurze Ernteintervalle von 3 bis 5 Jahren fördern die Laubstreuzersetzung und verhindern eine Laubstreubodenauflage. Der Grund dafür ist, dass die Beschattung durch das Kronendach der Niederwaldbäume immer wieder unterbrochen wird und somit mehr Licht und Regen auf den Boden treffen, welche die Laubzersetzungsprozesse beschleunigen.

Bis zu einem Baumdurchmesser von 20 cm in einer bodennahen Höhe von 5 bis 25 cm können zur Ernte wirtschaftlich arbeitende Mähhäcksler eingesetzt werden. Die maschinelle Ernte mit einem Mähhäcksler erfolgt kontinuierlich. Bäume werden in der Fahrt abgeschnitten, eingezogen und anschließend gehäckselt. Das Häckselgut wird auf einen parallel fahrenden Überladewagen geblasen. Die Ernte erfolgt bevorzugt außerhalb der Vegetationszeit der Bäume. Es verbleiben auf dem Feld Baumstöcke (Baumstümpfe mit einer Höhe von etwa 5 bis 25 cm) und eine Laubauflage (hervorgerufen durch den Laubfall ab der 2. Vegetationsperiode).

Der Niederwaldumtrieb ist gekennzeichnet durch ein sogenanntes Stockaustriebsverhalten, d.h. dass aus den geernteten Niederwaldbaumstümpfen neue Triebe bzw. Bäume austreiben. Da die frisch austreibenden Bäume bzw. Triebe die bestehende Wurzel nutzen, ist die Wachstumsgeschwindigkeit im zweiten Umtrieb schneller als im ersten Umtrieb. Die Bäume des Dauerwaldstreifens werden innerhalb der ersten 4 bis 7 Jahre bevorzugt nicht oder nur in kleiner Anzahl geerntet, d.h. es erfolgen lediglich Einzelentnahmen nach Bedarf. Vorzugsweise werden keine ganzen Dauerwaldbaumreihen entnommen. Die Niederwaldbäume werden im Kurzumtrieb geerntet (beispielsweise alle 3-5 Jahre) und wieder auf den Stock gesetzt, wobei Dauerwaldbäume weiterwachsen, ohne dass wesentliche Mengen dieser geerntet werden.

Die periodische Ernte der Niederwaldbäume bewirkt zeitweise eine erhöhte Lichtzufuhr auf den Oberboden. Die erhöhte Lichtzufuhr findet dabei sowohl innerhalb der Fläche der Niederwaldstreifen als auch innerhalb der Fläche der Dauerwaldstreifen statt. Die erhöhte Lichtzufuhr erhöht die Bodentemperatur, was sich positiv auf die Umwandlung in Dauerhumus auswirkt. Auf der anderen Seite bildet sich nach einer gewissen Zeit wieder stark verschattete Bereiche zwischen den Baumreihen innerhalb der Niederwaldbäume, welche zu einer hohen Bodenfeuchtigkeit führen. Genau diese Wechsel zwischen Licht/Temperatur und Schatten/Feuchtigkeit beschleunigen den Humusaufbau. Derartige Bedingungen lassen sich einem üblichen Forst oder Wald nicht gut steuern.

Einzelne Bäume innerhalb einer Dauerwaldbaumreihe können mit fortschreitender Zeit, beispielsweise nach 7 bis 25 Jahren, insbesondere nach 7 bis 20 Jahren zur Förderung von bestimmten Dauerwaldbäumen entnommen werden. Die Eingriffe sind bevorzugt im geringen Stückzahlanteil durchzuführen, da für die spätere Überführung in einen Wirtschaftsdauerwald noch genügend Schattendruck durch das Kronendach der Dauerwaldbäume auf die Niederwaldstreifen ausgeübt werden soll.

In einer Ausführungsform werden innerhalb der ersten 12 Jahre nach der Begründung der Dauerwaldstreifen höchstens 50 % der angepflanzten Dauerwaldbäume entnommen und innerhalb der ersten 20 Jahre nach der Begründung der Dauerwaldstreifen höchstens 75 % der angepflanzten Dauerwaldbäume, bezogen auf die Gesamtzahl der Dauerwaldbäume in einem Dauerwaldstreifen. Bei einer Pflanzdichte der Dauerwaldbäume zum Zeitpunkt der Begründung des Mittelwaldes von z.B. 300 bis 2.000 ST pro Hektar Gesamtfläche verbleiben nach 12 Jahren mindestens 150 bis 1.000 Stück Dauerwaldbäume auf einem Hektar Gesamtfläche und nach 20 Jahren verbleiben mindestens 83 bis 500 Stück Dauerwaldbäume auf einem Hektar Gesamtfläche.

Rein rechnerisch würde sich bei einer anfänglichen Pflanzdichte von 300 ST/ha und einer 75%igen Einzelentnahmerate ein Restbestand an Dauerwaldbäumen von 75 ST/ha ergeben. Bei einer Baumdichte von 75 ST/ha würde allerdings die Baumdichte von 83 ST/ha, die aus dem maximalen Oberholz-Zielabstand resultiert, unterschritten. Der maximale Oberholz-Zielabstand ist 11 m innerhalb der Dauerwaldreihe und 11 m in Bezug auf benachbarte Dauerwaldkorridore, so dass rechnerisch eine Baumdichte von 100/11 * 100/11 = 82,6 ST/ha resultiert.

Beispielsweise 20 bis 35 Jahre nach der Bestandsbegründung sind die Dauerwaldbäume stark in die Höhe und Breite gewachsen, so dass die Baumkronen der Dauerwaldbäume benachbarter Dauerwaldstreifen mindestens 50% Schatten bereitstellen. Dieser Schatten bewirkt, dass der Stockaustrieb (nach einem Umtrieb) der Niederwaldbäume des dazwischenliegenden Niederwaldstreifens aufgrund des fehlenden Lichtes überwiegend ins Stoppen gerät.

Die Niederwaldbäume wurden in den vorangegangenen 20 bis 35 Jahren im Kurzumtrieb bewirtschaftet und beispielsweise 5 bis 8 Mal vollständig geerntet, was ebenfalls ein vermindertes Stockaustriebsverhalten zur Folge hat. Vor diesem Hintergrund (ausdunkeln und vermindertes Stockaustriebsverhalten) können die Dauerwaldbäume gegenüber den Jungtrieben der Niederwaldbäume dominieren.

In einer Ausführungsform werden 20 Jahre nach der Bestandsbegründung, bezogen auf die Gesamtzahl der angepflanzten Niederwaldbäume, mindestens 50 % der bei der Begründung der Niederwaldstreifen angepflanzten Niederwaldbäume ausgedunkelt, vorzugsweise mindestens 75% und besonders bevorzugt mindestens 85 %. Bei einer Pflanzdichte der Niederwaldbäume von 1.500 bis 5.000 ST/ha (bezogen auf die gesamte Begründungsfläche) bedeutet das im Falle einer 85% igen Ausdunkelungsrate, dass noch 225 bis 750 ST Niederbäume pro Hektar und Gesamtfläche überleben. Die Zahl erscheint recht hoch. Man muss sich jedoch vor Augen führen, dass es sich um relativ kleine Niederwaldbäume handelt, die sich auf mit vorschreitender Zeit nicht etablieren können und überwiegend absterben.

In einer vorteilhaften Ausgestaltung verbleiben, bezogen auf die Gesamtzahl der angepflanzten Niederwaldbäume bis zu 15 % der bei der Begründung der Niederwaldstreifen angepflanzten Niederwaldbäume in dem Wirtschaftsdauerwald bis zu einem Bestandsalter von 25 bis 40 Jahren erhalten. Auf diese Weise können die verbleibenden Niederwaldbäume das unterirdische Mykorrhiza-Netz solange überbrücken bis das Dauerwaldwurzelwerk und Mykorrhiza-Netzwerk weitreichend genug ist, um von einem Dauerwaldstreifen zum nächsten zu reichen. Die verbleibenden Niederwaldbäume können im Verlauf weiterer Jahre geerntet werden, so dass überwiegend Dauerwaldbäume verbleiben.

Neben der Anzahlbetrachtung kann ab 20 bis 35 Jahren nach der Bestandsbegründung des Mittelwaldes die Betrachtung nach Stammholzvolumen in Volumenfestmeter [Vfm] zweckmäßig sein, denn es ist durchaus möglich und auch erwünscht, dass neben volumenstarken Dauerwaldbäumen eine Vielzahl von kleinwüchsigen Niederwaldbäumen im Halbschatten der Dauerwaldbäume existieren.

Im Adult-Alter der Dauerwaldbäume, z.B. 40 Jahre nach Bestandsbegründung, ist das überwiegende Stammholzvolumen den Dauerwaldbäumen zuzuschreiben, während die Niederwaldbäume weniger als 50%, bevorzugt 2 bis 20%, des Stammholzvolumens darstellen.

Bis zum Adult-Alter der Dauerwaldbäume können weitere Dauerwaldbäume von bedrängenden Dauerwald- oder Niederwaldbäumen freigestellt werden, so dass auch innerhalb einer Dauerwaldreihe ein Abstand der Dauerwaldbäume im Sinne des Oberholz-Zielabstands von z.B. 4 bis 11 m, vorzugsweise von 6 bis 10 m, resultiert.

Die Einzelentnahme der Dauerwaldbäume wird derart ausgeführt, dass im Adult-Alter ca. 83 bis 625 Stück Dauerwaldbäume pro Hektar Gesamtfläche verbleiben. Ein Restbestand im Adult-Alter von 83 Stück Dauerwaldbäumen entspricht einen Oberholz-Zielabstand von 11 m und ein Restbestand im Adult-Alter von 625 Stück Dauerwaldbäumen entspricht einen Oberholz-Zielabstand von 4 m. Bevorzugt verbleiben 100 bis 625 Stück Dauerwaldbäume pro Hektar Gesamtfläche im Adult-Alter im Bestand.

Der Begriff "Oberholz-Zielabstand" bezeichnet im Rahmen dieser Offenbarung den kürzesten Abstand von Dauerwaldbäumen sowohl innerhalb einer Reihe als auch in Bezug auf benachbarte Dauerwaldreihen.

Zum Beispiel können die im Oberholz-Zielabstand stehenden Dauerwaldbäume nach einer Umtriebs-Zeit von 40 bis 120 Jahren oder nach Erreichen eines Brusthöhendurchmessers von 30 bis 60 cm durch Fällen bevorzugt vollständig (mindestens zu 85 %) geerntet werden. Die geernteten Dauerwaldbäume können sich beispielsweise durch einen wipfelschaftigen, geradwüchsigen und astarmen unteren Stammabschnitt auszeichnen und zur Möbel- oder Furnierholzherstellung Verwendung finden. Alternativ können die Dauerwaldbäume als Bauholz verwendet werden.

Der umgewandelte Wirtschaftsdauerwald umfasst mindestens eine Baumart außerhalb der Gruppe der Niederwaldbaumarten. Besonders bevorzugt umfasst der Wirtschaftsdauerwald zwei oder mehr Dauerwaldbaumarten.

Aus ökologischer Sicht wird durch den speziellen streifenweisen Aufbau aus Niederwaldstreifen und Dauerwaldstreifen ein schneller Aufbau der unterirdischen Bodenweit erreicht, wobei die Ausrichtung nicht nur auf der Schnelligkeit liegt, sondern durch die Überführung in den Wirtschaftsdauerwald auch dauerhafter Natur ist.

In Summe werden aus der Laub- und Wurzelstreu sowie der Streu der Begleitvegetation im Mittel über einen Zeitraum von z.B. 80 Jahren 1,6 bis 2,3 Tonnen Kohlenstoff (C) pro Hektar und Jahr [t C/ha*J) oder insgesamt 128 bis 184 t C/ha (über einen Zeitraum von 80 Jahren) in Form von C_{org}, insbesondere in Form von Dauerhumus gebunden. Dies entspricht einem rechnerischen CO₂-Äquivalent von 5,9 bis 8,4 Tonnen CO₂ pro Hektar und Jahr. Die Bindung des CO₂'s in Form von oberirdischer Biomasse (vorwiegend Holz) und in Form von unterirdischer Wurzelmasse ist dabei noch nicht berücksichtigt.

Die Speicherung des Kohlenstoffs in den oberen 70 cm des Bodenhorizonts findet dabei nicht linear statt, sondern beginnt bei der Bestandsbegründung durch die Bodenbearbeitung mit dem Flug erstmal mit einem Verlust an Kohlenstoff im Boden. Ab dem 3. Jahr nach Bestandbegründung steigt die Speicherung des Kohlenstoffs im Boden innerhalb von 20 Jahren bis zu Werten von 3,3 t C/ha*J (berechnet aus der Summe der Werte der C-Akkumulierung in [t C/ha*J] nach 8 Jahren aus Tabelle 1 und 2) an. Innerhalb der ersten 20 Jahre nach Bestandgründung können insgesamt 45,7 t C/ha oder durchschnittlich 2,3 t C/ha*J an Kohlenstoff im Boden akkumuliert werden (berechnet aus den aufsummierten Werten der C-Akkumulierung in [t C/ha*J] nach 20 Jahren aus Tabelle 1 (26,0 t C/ha*J) und Tabelle 2 (19,7 t C/ha*J)). Diese hohen C-Akkumulationswerte von 45,7 t C/ha innerhalb der ersten 20 Jahre nach Bestandsbegründung sind auf den hohen Biomasseeintrag in den Boden in Form von Laubstreu, Begleitvegetation und der abgestorbenen Feinwurzeln in Kombination mit der Aktivität der Bodenorganismen, welche die Biomasse in Nähr- und Dauerhumus umwandeln, zurückzuführen.

In die C-Bilanz geht weiterhin die unterirdische Wurzelmasse ein. Das Verhältnis von Wurzelmasse zu oberirdischer Baummasse ist nach KRAMER 1:4, d.h. 20 Gew.-% des Baums wächst unterirdisch und 80% wächst oberirdisch. Insbesondere die Niederwaldbäume bilden innerhalb der ersten 20 Jahre der Nutzung sehr viel Wurzelmasse. Durch den Engstand der Niederwaldbäume wird der Bodenhorizont besonders schnell und umfassend durchwurzelt. Die Kurzumtriebs-Bewirtschaftung kann die Wurzelmassebildung noch begünstigen. Im Falle, dass 60% der Gesamtfläche mit Niederwaldreihen begründet sind, können mit der Niederwaldbaumart Pappel z.B. 6 t/ha*J an Holztrockenmasse über einen Zeitraum von 20 Jahren und bezogen auf die Gesamtfläche produziert werden, so dass man von bei einem Verhältnis von 1:4 auf 1,5 t TS/ha*J an Wurzelmassezuwachs gelangen kann. Auf 20 Jahre KurzumtriebsBewirtschaftung bilden sich somit im Niederstreifen 30 t TS/ha an Wurzelmasse, bezogen auf die Gesamtfläche. Bei einem C-Anteil der Wurzeltrockenmasse von 50 % entspricht das einem C-Äquivalent von 0,75 t C/ha*J und 15 t C/ha (über 20 Jahre hinweg).

Insbesondere die von den schnell wachsenden Niederwaldbäumen in den ersten 20 bis 35 Jahren heranwachsende Holzbiomasse kann als Ersatz fossiler Energieträger dienen und damit zu einer Reduzierung bzw. Emissionsminderung des Treibhausgases CO₂ beitragen. Die jährliche Zuwachsrate an oberirdischer Biomasse der Niederwaldbäume beträgt z.B. durchschnittlich 6 t TS/ha*J an Holztrockenmasse über einen Zeitraum von 25 Jahren bezogen auf die Gesamtfläche. Die 6 t TS/ha*J entsprechen einem C-Äquivalent von 3 t C/ha*J oder 60 t C/ha auf einen Zeitraum von 20 Jahren betrachtet.

Weiterhin binden die Dauerwaldbäume Kohlenstoff in Form von Holzbiomasse. Geht man z.B. von einem mittleren Holzzuwachs über 80 Jahre von 5 Volumenfestmetern pro Hektar und Jahr (Vfm/ha*J) aus, so ergibt sich ein C-Äquivalent von 1,5 t C/ha*J. Während der Niederwaldbewirtschaftung, z.B. in den ersten 20 Jahren, ist der Holzzuwachs der Dauerwaldbäume geringer als 5 Vfm/ha*J, danach ist der Zuwachs größer. Der Zuwachs ist natürlich unter anderen von den gewählten Baumarten und den Standortbedingungen abhängig. Darum können die Zuwachsangaben stark schwanken und dienen lediglich als Anhaltpunkt und zur Komplettierung der Kohlenstoffbilanzierung. Innerhalb der ersten 20 Jahre nach Bestandsbegründung liegt der Holzzuwachs z.B. bei 2,5 Vfm/ha*J oder bei insgesamt 50 Vfm/ha. Bei einer Holzdichte von 0,6 t/Vfm ergibt sich eine Holztrockenmasse an Dauerwaldbäumen von 30 t/ha innerhalb der ersten 20 Jahre. Bei einem C-Anteil der Holztrockenmasse von 50% ergibt sich eine C-Akkumulation in Bezug auf die Dauerwaldbiomasse innerhalb der ersten 20 Jahre nach Bestandsbegründung von 15 t C/ha.

Betrachtet man die Summen der C-Akkumulierung und die C-Emissionsminderung des beschriebenen Mittelwaldes über einen Zeitraum von 0 bis 20 Jahre, so werden in Form von Humus 45,7 t C/ha, in Form von Wurzelmasse 15 t C/ha, in Form von Dauerwaldholzmasse 15 t C/ha akkumuliert, also insgesamt 75,7 t C/ha akkumuliert. 60 t C/ha können C-emissionsmindert in Form von Niederwaldbiomasse wirken. Alles zusammen sind es in den Ersten 20 Jahren 135,7 t C/ha oder 6,785 t C/ha*J.

Extrapoliert man die C-Akkumulierung des beschriebenen Mittelwaldes über einen Zeitraum von 80 Jahren weiter, wobei man die C-Emissionsminderung aufgrund der Niederwaldbewirtschaftung nur für die ersten 20 Jahre berücksichtigt, ergibt sich in Summe eine mögliche C-Akkumulierung (inkl. C-Emissionsminderung) von 300 bis 500 t C/ha (im Mittel 400 t C/ha oder 5 t C/ha*J) innerhalb von 80 Jahren.

In den ersten 20 Jahren ist die durchschnittlich jährliche C-Akkumulationsrate höher als im 80-jährigen Mittel, das heißt, dass mit dem offenbarten Mittelwald sehr schnell (innerhalb der ersten 20 Jahre) und sehr viel C akkumuliert wird.

Bei der Begründung eines Dauerwaldes nach herkömmlichen Verfahren sind die Verhältnisse genau umgekehrt, das heißt, dass hier die durchschnittliche jährliche C-Akkumulationsrate ab einem Bestandsalter von mehr als 20 Jahren ansteigt.

Durch die großflächige Umwandlung von Ackerland in Wirtschaftsdauerwald können durch die Arbeit der Bodenorganismen signifikante Mengen an C beziehungsweise CO₂ in Form von Dauerhumus in den Boden gebunden werden. Außerdem können durch die Verwertung als Brennholz fossile Brennstoffe eingespart werden.

Ein Vorteil des erfindungsgemäßen Waldbaukonzeptes gegenüber einer Begründung eines Dauerwaldes nach herkömmlicher Art liegt in der erhöhten Geschwindigkeit der Biomassegewinnung. Ein Vorteil des erfindungsgemäßen Waldbaukonzeptes gegenüber einer Begründung eines Niederwaldes nach herkömmlicher Art liegt in der Nachhaltigkeit bezüglich des gebundenen Dauerhumus (kein Umbruch des Bodens) und in der Diversifizierung der Baumarten (keine Monokulturproblematik).

### Beispiele

### Beispiel 1:

Beispiel 1 ist in Fig. 2 dargestellt und betrifft einen streifenweise angelegten Mittelwald, bestehend aus einem einreihigen Streifen aus Dauerwaldbäumen im Wechseln mit einem zweireihigen Streifen aus Niederwaldbäumen.

Der Mittelwald mit einer Flächengröße von einem Hektar wurde auf einen lehmigen Sandboden mit der Ackerzahl 30-40 angelegt, wobei in 60 bis 80 cm Grundwasseranschluss vorherrscht.

Der Pflanzplan zeigt von links beginnend zunächst einen zweireihigen Niederwaldstreifen, einen einreihigen Dauerwaldstreifen, einen zweireihigen Niederwaldstreifen, einen einreihigen Dauerwaldstreifen, einen zweireihigen Niederwaldstreifen, einen einreihigen Dauerwaldstreifen und einen zweireihigen Niederwaldstreifen. Der Abstand zweier Niederwaldreihen innerhalb eines Niederwaldstreifens beträgt 3 m (Ziffer 1). Die Abstände der Niederwaldbäume innerhalb einer Reihe an Niederwaldbäumen in einem Niederwaldstreifen betragen 0,40 m. Auf der Gesamtfläche sind 5.000 ST Niederwaldbäume pro Hektar Gesamtfläche gepflanzt. Der Außengrenze-Abstände zwischen einem Dauerwaldkorridor und zwei benachbarten Niederwaldkorridoren sind ungleich und betragen 2 m und 5 m (Ziffern 8 a und 8 b). Die Abstände der Dauerwaldbäume innerhalb einer Reihe an Dauerwaldbäumen in einem Dauerwaldstreifen betragen 2 m. Umgerechnet wurden 500 Stück Dauerwaldbäume pro Hektar Gesamtfläche gepflanzt.

Von links nach rechts gesehen ergibt sich ein Abstandsbild bei dem der Abstand der ersten Niederwaldreihe zu der zweiten Niederwaldreihe 3 m beträgt, der Abstand der zweiten Niederwaldreihe zu der ersten Dauerwaldreihe 2 m beträgt und der Abstand der ersten Dauerwaldreihe zu der dritten Niederwaldreihe 5 m beträgt. Die Niederwaldstreifenbreite (BNW) beträgt 6,5 m (Ziffer 6). Die Dauerwaldstreifenbreite (BDW) beträgt 3,5 m (Ziffer 7). Die Niederwaldstreifen sind somit um den Faktor 1,86 breiter als die Dauerwaldstreifen. Die durchschnittliche Breite der Dauer- und Niederwaldstreifen (DBDWNW) beträgt 5 m. Der kürzeste Abstand benachbarter Dauerwaldkorridore beträgt 10 m (Ziffer 3). Der kürzeste Abstand benachbarter Niederwaldkorridore beträgt 7 m (Ziffer 4). Der kürzeste Abstand benachbarter Niederwaldkorridore (Ziffer 4) ist kürzer als der kürzeste Abstand benachbarter Dauerwaldkorridore (Ziffer 3). Die Breiten der Niederwaldkorridore sind 3 m (Ziffer 10) und die Breiten der Dauerwaldkorridore sind 0 m (Ziffer 11). Die Breite eines Niederwaldkorridors ist kleiner als die Summe der Außengrenze-Abstände zwischen einem Dauerwaldkorridor und zwei unmittelbar angrenzenden Niederwaldkorridoren (Summe aus 8a und 8b ist gleich 7 m).

Die Niederwaldbäume bestehen aus einer Mischung von zwei Pappelsorten und einer Weidensorte. Die Pappelsorten sind Max4 und Hybride 275 und die Weidensorte ist Olof. Die Weidensorte Olof zeichnet sich dadurch aus, dass sie wie Pappeln nur wenige Neutriebe (Stockaustriebe) nach der Ernte aufweist. Die Pappelsorten und die Weidensorte wurden in Form von 20 cm langen Steckhölzern, jeweils sortenrein innerhalb eines Niederwaldstreifens in die Erde eines zuvor aufgelockerten Ackerbodens gesteckt.

Die Dauerwaldbäume bestehen aus einer Mischung aus den Baumarten Walnuss (Juglans major x Juglans regia; Handelsbezeichnung Garavel-Hybide "MJ 209"), Baumhasel (Corylus colurna) und Wildkirsche (Prunus avium). Die gewählten Bäume zählen zu den Edelhölzern und erreichen alle eine Baumhöhe im Adult-Alter von 20 bis 25 m. Das Pflanzmaterial besteht bei Walnuss und Baumhasel aus 2-jährigen Stecklingen mit einer Anfangshöhe von 50 bis 80 cm, bei der Wildkirsche wurden 3-jährige Stecklinge mit einer Anfangshöhe von 150 bis 180 cm verwendet. Jeder Dauerwaldsteckling erhält nach dem Bepflanzen eine Fege-Schutzhülle. Wildverbiss findet bei der Walnuss nicht und bei der Baumhasel nur vereinzelt statt, so dass keine weiteren Schutzvorkehrungen getroffen wurden. Die Wildkirsche ist stark verbissgefährdet. Darum wurden die Stecklinge mit einer Mindesthöhe von 150 cm ausgewählt, damit Rehe die Triebspitzen nicht mehr abfressen können. Der Pflanzverbund der Dauerwaldbäume erfolgte nicht sortenrein, es wurde in jeder Dauerwaldreihe je 2 Dauerwaldbaumarten im Wechsel angebaut. Wildkirsche und Walnuss werden jeweils im Verhältnis 1:1 mit Baumhasel gemischt, so dass 50% der Dauerwaldbäume Baumhasel und je 25% der Dauerwaldbäume Walnuss und Wildkirsche sind. Die Gründe für das Übergewicht zugunsten der Baumhasel liegen in der besonders guten Mykorrhizaausbildung, den Stockaustrieb aus adulter Wurzel, der leicht zersetzbaren Streu und der guten Schattentoleranz der Baumhasel.

Die Baumhöhe der bei der Begründung des Dauerwaldstreifens angepflanzten Dauerwaldbäume sind im Adult-Alter mindestens doppelt so groß, wie der kürzeste Abstand benachbarter Dauerwaldkorridore. Da der kürzeste Abstand benachbarter Dauerwaldkorridore 10 m ist und die Adult-Alter-Baumhöhen der gewählten Dauerwaldbaumarten zwischen 20 und 25 m liegen, ist im Adult-Alter ein waldbildender Kronenschluss zwischen Dauerwaldbäumen benachbarter Dauerwaldkorridore gewährleistet.

Es ergibt sich folgendes Pflanzbild bei einer Betrachtung von links nach rechts:
Max4 / Max4 / Walnuss und Baumhasel (1:1) / Olof / Olof / Wildkirsche und Baumhasel (1:1) / Hybrid 275 / Hybride 275 / Walnuss und Baumhasel (1:1) / Max4 / Max4

Innerhalb der ersten beiden Vegetationsperioden nach der Begründung wurde eine maschinelle Bearbeitung des Bodens zur Reduzierung der Begleitvegetation durchgeführt. Die Bearbeitung wurde mit einem Grubber zwischen den Baumreihen durchgeführt. Die Bearbeitung wirkte sich vorteilhaft auf die Etablierung der Jungbäume in den Baumreihen aus. Weiterhin wurde in der ersten Vegetationsperiode innerhalb der Reihen mit der Hacke eine Begleitvegetationsregulierung vorgenommen.

Im Winter nach der vierten Vegetationsperiode wurden erstmals die Niederwaldreihen mit den ca. 6 m hohen Pappeln und Weiden mit einem Mähhäcksler vollständig geerntet und der stofflichen Verwertung (Spanplattenverarbeitung) zugeführt. Durch die relativ großen Abstände der Niederwaldkorridore zu den Dauerwaldkorridoren (Ziffer 8b) konnte bei der Ernte ein Traktor mit Anhänger neben den Mähhäcksler fahren, um die Hackschnitzel aufzunehmen. Die Dauerwaldbäume wurden durch den relativ großen Abstand gemäß Ziffer 8b nicht geschädigt. Die Erntemenge der ersten Ernte lag bei umgerechnet 2,8 t TS/ha*J trockene Holzhackschnitzel, berechnet auf die Gesamtfläche. Die Dauerwaldbäume waren im Winter nach der vierten Vegetationsperiode 1 bis 3 m hoch und wurden nicht geerntet.

Im Folgejahr nach der Ernte der Niederwaldbäume erfolgte der Stockaustrieb innerhalb der Niederwaldstreifen. Die einjährigen Triebe waren im Herbst zwischen 3 und 4 m hoch. Die Ernte der Niederwaldreihen wurde noch viermal mit vierjähriger Umtriebs-Zeit durchgeführt bevor die Anlage im 23. Jahr mit der Rodefräse teilweise gerodet wurde.

Die Erntemengen an Hackschnitzel im Niederwaldstreifen stiegen auf über 7 bis 7,5 t TS/ha*J, bezogen auf die Gesamtfläche an. Im Mittel über 20 Jahre werden 6 t TS/ha*J Hackschnitzel, bezogen auf die Gesamtfläche geerntet. Auf die Fläche des Niederwaldstreifens bezogen entspricht das umgerechnet 10 t TS/ha*J. Nach KOLLMANN entsprechen 2,4 t TS Hackschnitzel dem Heizwert von 1.000 L Heizöl. Über einen Zeitraum von 20 Jahren werden auf einer Fläche von einem Hektar ein Heizäquivalent von 83.000 L Heizöl erzeugt. Bei einem Kohlenstoffanteil der trockenen Holzmasse von 50% ergibt sich bei 6 t TS/ha*J ein C-Emissionsminderungsäquivalent von 3 t C/ha*J oder über 20 Jahre gesehen von 60 t C/ha.

Bei den Dauerwaldbäumen gab es innerhalb der 20 Jahre eine relativ geringe Ausfallrate (etwa 20-30 % der ursprünglichen Pflanzzahlen). Die erste Wertastung fand nach 5 Jahren statt. Bei der Wertastung wurden besonders geradschaftige Dauerwaldbäume nach dem Stand der Technik zur Erzielung eines vom Boden aus betrachteten 5 Meter langen astreinen Stammstücks geastet. 8 Jahre nach Bestandbegründung fanden die ersten Einzelentnahmen bei den Dauerwaldbäumen statt, um zu verhindern, dass die starkwüchsigen Exemplare in ihrem Wuchs eingeschränkt werden. Die Einzelentnahme nach 8 Jahren führte zu Abständen von Dauerwaldbäumen innerhalb eines Dauerwaldstreifen von 2 bis 6 m, so dass 300 ST/ha Dauerwaldbäume auf der Gesamtfläche verbleiben. Eine weitere Einzelentnahme der Dauerwaldbäume fand im Jahr 14 nach der Bestandsbegründung statt. Die Anzahl der Dauerwaldbäume wurde auf 220 ST/ha reduziert. Nach 20 Jahren verbleiben 216 ST/ha Dauerwaldbäume (bezogen auf die Gesamtfläche) mit einem durchschnittlichen Brusthöhendurchmesser von 16 cm und einer durchschnittlichen Höhe von 12 m. Der Holzvorrat der Dauerwaldbäume liegt nach 20 Jahren bei ca. 50 Vfm/ha, was bei einer mittleren Holzdichte von 0,6 t/Vfm einer Holztrockenmasse von 30 t TS/ha entspricht. Bei einem C-Anteil der Holztrockenmasse von 50% entsprechen die 30 t TS/ha Dauerwaldbaummasse einem C-Äquivalent von 15 t C/ha.

Nach 20 Jahren sind die Dauerwaldbäume ohne weitere Entnahmen soweit in die Höhe und in die Breite gewachsen, dass nahezu kein Stockaustrieb mehr bei den Niederwaldbäumen zu verzeichnen ist.

Die Dauerwaldbäume dominieren 20 Jahre nach Bestandbegründung den Gesamtbestand. Der Kronenschluss hat zwar nach 20 Jahren noch nicht stattgefunden, dennoch treiben aus dem Stock im 21. Jahr (1 Jahr nach der 5. Ernte) nur noch 600 ST/ha der Niederwaldbäume mit einer nennenswerten Triebhöhe von 1 bis 1,5 m (gemessen am Ende der Vegetationsperiode) vorwiegend aus den mittig gelegenen Niederwaldreihen aus. Das entspricht 12 % der anfänglich gepflanzten Anzahl an Niederwaldbäumen. Viele Niederwaldbäume (ca. 50 %) treiben gar nicht mehr aus und andere (ca. 38 %) haben einen Stockaustrieb von weniger als 1 m Höhe. Der Wuchs der Triebe ist merklich reduziert, da das Lichtangebot aufgrund der besonderen dezentralen Anordnung der Niederwaldreihen fehlt und die verwendeten Niederwaldbaumarten sehr lichtbedürftige Baumarten sind. Mit dezentral ist gemeint, dass der Abstand der Dauerwaldbäume links (Ziffer 8b) und rechts (Ziffer 8a) der Niederwaldreihen unterschiedlich groß ist. Am Ende des 22. Jahres sind die im Vorjahr 1 m bis 1,5 m hohen Triebe zu 80 % auf 1,5 bis 2 m und die im Vorjahr < 1 m hohen Triebe auf bis zu 1,5 m herangewachsen. Da sich mit fortwährender Zeit das Kronendach der Dauerwaldbäume weiter schließt und die Dauerwaldbäume nach 22 Jahren einen derart großen Wuchsvorsprung besitzen, besteht keine Gefahr, dass die Niederwaldbäume zukünftig die Dauerwaldbäume dominieren könnten. Sollte es dennoch sein, dass einzelne Niederwaldbäume stark in der Höhe nach oben schießen oder Lücken im Dauerwaldstreifen schließen, so kann das als willkommene Baumartenanreicherung gesehen werden. Die Etablierung der Dauerwaldbäume ist 22 Jahre nach Bestandsgründung erfolgreich eingetreten.

Tabelle 1 und Tabelle 2 zeigen die Trockensubstanzmengen an Laub- und Wurzelstreu sowie Begleitvegetation und die Kohlenstoff- und Humusakkumulierung, die über einen Zeitraum von 20 Jahren innerhalb der Niederwald- und Dauerwaldstreifen auftreten.

Als Anhaltspunkt für die C-Akkumulierung in den oberen 70 cm des Bodens kann man folgende Überschlagsbetrachtung bzw. -rechnung benutzen. Geht man davon aus, dass der Kohlenstoffbehalt der anfallenden Trockensubstanz aus Begleitvegetation, Laubund Wurzelstreu 50 Gew.-% an Kohlenstoff erhält und dieser Kohlenstoff zu 1/3 als organischer Kohlenstoff (ohne Wurzeln, ohne Organismen und ohne sonstigen Grobteilen sowie ohne Carbonat) in den oberen 70 cm des Bodenhorizonts durch die Verstoffwechselung der Bodenorganismen gespeichert wird, so ergibt sich z.B. für das 8. Jahr nach Bestandgründung eine C-Akkumulierung, bezogen auf die Gesamtfläche von 0,5*(13,3 + 6,5)/3 = 3,3 t C/ha*J., wobei die Zahl 13,3 der TS-Summe in [t TS/ha*J] nach 8 Jahren aus Tabelle 1 und die Zahl 6,5 der TS-Summe in [t TS/ha*J] nach 8 Jahren aus der Tabelle 2 entspricht.

Für das 20. Jahr ergibt sich z.B. eine rechnerische C-Akkumulierung von 0,5*(9,4 + 6,2)/3 = 2,6 t C/ha*J, wobei die Zahl 9,4 der TS-Summe in [t TS/ha*J] nach 20 Jahren aus Tabelle 1 und die Zahl 6,2 der TS-Summe in [t TS/ha*J] nach 20 Jahren aus der Tabelle 2 entspricht.

Es ergibt sich in Summe über die ersten 20 Jahre nach Bestandbegründung eine rechnerische C-Akkumulierung in den oberen 70 cm des Bodenhorizonts von 0,5*156,2/3= 26 t C/ha im Falle des Niederwaldstreifen und von 0,5*118,2/3 = 19,7 t C/ha im Falle des Dauerwaldstreifens. Über die gesamte Fläche gesehen liegt die C-Akkumulierung, welche durch die Verstoffwechselung von Begleitvegetation, Laub- und Wurzelstreu, bei 26 + 19,7 = 45,7 t C/ha.

Es ergibt sich in Summe über die ersten 8 Jahre nach Bestandbegründung eine rechnerische C-Akkumulierung in den oberen 70 cm des Bodenhorizonts von 0,5*57/3= 9,5 t C/ha im Falle des Niederwaldstreifen und von 0,5*14,4/3 = 2,4 t C/ha im Falle des Dauerwaldstreifens. Über die gesamte Fläche gesehen liegt die C-Akkumulierung, welche durch die Verstoffwechselung von Begleitvegetation, Laub- und Wurzelstreu, bei 9,5+ 2,4 = 11,9 t C/ha.

Die rechnerischen Werte der C-Akkumulierung sind ähnlich zur C-Akkumulierung, welche durch Messung nach der Verbrennungsmethode mit dem LECO-Gerät CHN 1000 nach 8 und 20 Jahren ermittelt wurden. Der gemessene organische Kohlenstoff in den oberen 70 cm des Bodenhorizonts lag vor der Bestandbegründung (über die Gesamtfläche gesehen) bei 1,0 Gew.-%, nach 8 Jahren bei 1,1 Gew.-% und nach 20 Jahren bei 1,5 Gew.-%. Die mittlere Bodendichte lag bei 1,5 t/m³. Das Volumen der oberen 70 cm des Bodenhorizonts, bezogen auf ein Hektar (1ha = 100m*100m), ist 7.000 m³. Die Masse der oberen 70 cm eines Hektar Bodens ist rechnerisch 10.500 t. Somit konnte der prozentuale Gehalt an organischem Kohlenstoff durch die Bewirtschaftung des Mittelwalds gemäß Pflanzplan aus Fig.2, bezogen auf die Gesamtfläche, von anfänglich 105 t/ha auf 116 t/ha nach 8 Jahren und auf 158 t/ha nach 20 Jahren gesteigert werden. Die gemessene C-Akkumulierung lag nach 8 Jahren bei 11 t/ha (rechnerisch: 11,9 t/ha) und nach 20 Jahren bei 53 t/ha (rechnerisch: 45,7 t/ha).

Zusätzlich zur C-Akkumulierung, welche durch die Begleitvegetation, Laub- und Wurzelstreu hervorgerufen werden, kann man die Wurzelmasse selbst in Höhe von 0,75 t C/ha*J oder 15 t C/ha, bezogen auf die Gesamtfläche über einen Zeitraum von 20 Jahren im Sinne der C-Akkumulierung ansetzen.

Die unterirdische Wurzelmasse eines Baumbestands ist nach KRAMER 20 Gew.-% und die oberirdische Baummasse macht 80% aus. Insbesondere die Niederwaldbäume bilden innerhalb der ersten 20 Jahre der Nutzung sehr viel Wurzelmasse. Die Niederwaldbewirtschaftung liefert 6 t/ha*J an Holztrockenmasse über einen Zeitraum von 20 Jahren und 1,5 t/ha*J (jeweils bezogen auf die Gesamtfläche) an Wurzelmasse. Auf 20 Jahre Kurzumtriebs-Bewirtschaftung bilden sich somit im Niederstreifen 30 t TS/ha an Wurzelmasse. Bei einem C-Anteil der Wurzeltrockenmasse von 50 % entspricht das einem C-Äquivalent von 0,75 t C/ha*J und 15 t C/ha (über 20 Jahre hinweg). Die Wurzelmasse, die die Dauerwaldbäume innerhalb von 20 Jahren ausbilden, wurde vernachlässigt.

Tabelle 3 zeigt die gesamte C-Bilanzierung des Mittelwaldes innerhalb der ersten 20 Jahre.

Die Hackschnitzel aus der Kurzumtriebs-Bewirtschaftung wirken mit 60 t C/ha Kohlenstoff emissionsmindernd, da die Verbrennung der Hackschnitzel Heizöl oder Kohle substituieren kann.

Der Humusaufbau durch die Verstoffwechselung der Begleitvegetation, Laub- und Wurzelstreu durch Bodenorganismen bindet 53 t C/ha (es wurde der tatsächlich gemessene Wert zugrunde gelegt). Die unterirdische Wurzelmasse der Niederwaldbäume binden 15 t C/ha und der Holzbestand an Dauerwaldbäumen akkumuliert ebenfalls 15 t C/ha. In Summe werden 143 t C/ha gebunden oder tragen dazu bei, dass fossile Brennstoffe substituiert werden können. Dies entspricht einer gemittelten jährlichen C-Eliminierung von 7,15 t C/ha*J oder 26 t CO₂/ha*J (Betrachtungszeitraum: 0-20 Jahre).

Für den Zeitraum nach der Kurzumtriebs-Bewirtschaftung oder hier für die Zeit > 20 Jahren gelten die Regeln zur C-Eliminierung nach gängiger Berechnung zur Bewirtschaftung von Dauerwäldern.

Es wurden zusätzlich Bodenproben eines benachbarten Ackers zum Zeitpunkt 0 und nach 20 Jahren analysiert. Das Ackerland wurde über die letzten 20 Jahre ausschließlich als Ackerland mit verschiedenen Ackerkulturen intensiv bewirtschaftet. Der organische Kohlenstoffgehalt des Ackerlandes sank von anfänglich 1,04 Gew.-% auf 0,86 Gew.-% (nach 20 Jahren).

Der organische Kohlenstoffgehalt lässt sich nach NELSON und SOMMER (1996) mit einem Faktor von 1,724 in den Humusgehalt umrechnen.

Somit sinkt der Humusgehalt des mit verschiedenen Ackerkulturen bewirtschafteten Ackerlandes von anfänglich 1,79 % auf 1,48 % nach 20 Jahren.

Der Humusgehalt des bewirtschafteten Mittelwaldes gemäß Pflanzplan aus Fig. 2 stieg von anfänglich 1,724 % auf 2,6 % im 20. Jahr. Im Zeitraum von 0 bis 20 Jahre werden im Niederwaldstreifen 44,9 t Humus/ha, (dieser Wert ist in Tabelle 1 als "Summe 20 Jahre TS-Humus-Akkumulierung" gezeigt) im Dauerwaldstreifen 34 t Humus/ha (dieser Wert ist in Tabelle. 2 als "Summe 20 Jahre TS-Humus-Akkumulierung" gezeigt) aufgebaut und über die gesamte Fläche 78,9 t Humus/ha.

Bei der Beurteilung der Werte gilt zu beachten, dass die Mächtigkeit des Bodenhorizonts mit 70 cm anstelle der sonst üblichen 30 cm gewählt wurde. Das liegt daran, dass es sich hier um einen Wald und nicht um die Beurteilung eines Ackers oder einer Wiese geht, denn die Bäume akkumulieren eben auch in einer Tiefe von 30 bis 70 cm nicht unerhebliche Kohlenstoffmengen.

Im 23. Jahr wurde ein Segment des Mittelwaldes mit der Rodefräse gerodet und der Boden wurde mit Pflug und Egge nachbearbeitet. Nach der Rodung der Nieder- und Dauerwaldbäume sank der Gehalt an organischem Kohlenstoff in den oberen 70 cm des Bodenhorizonts von 1,5 Gew.-% (20.Jahr) auf 1,1 Gew.-% (Messung im 24.Jahr) bzw. von 153 t C/ha (20. Jahr) auf 115,5 t C/ha (24. Jahr) ab. Das bedeutet, dass die innerhalb von 20 Jahren aufgebaute C-Akkumulierung durch die ca. 40-50 cm tiefe Bearbeitung mit der Rodefräse nahezu vollständig wieder zunichtegemacht wird.

Aus diesem Grunde sollte keine Rodung der Niederwaldbäume stattfinden, sondern die restlichen Niederwaldbäume verbleiben inklusive ihres Wurzelwerkes im Bestand und konservieren die somit über Jahre aufgebaute C-Akkumulierung.

Zwischen den beiden Pappelsorten und der Weidensorte gab es in Bezug auf die Trockensubstanzmengen gemäß Tabelle 1 keine signifikanten Unterschiede. Darum sind die in Tabelle 1 enthaltenen TS-Mengen als gemittelte Mengen zu sehen. Die Ermittlung der TS-Laubmengen erfolgte durch Aufsammeln, Trocknen (110°C, 24 Stunden) und Wiegen des Laubes aus einem 100 m² großen Sektor Geringe Laubmengen fielen auch auf die Seite der Dauerwaldstreifen zu Boden, insbesondere "links" vom Niederwaldstreifen (Ziffer 8a). Diese Laubmengen wurden dennoch dem Niederwaldstreifen zugerechnet. Die Ermittlung der TS-Begleitvegetationsmengen fand durch Ernte der oberirdischen Biomasse eines 100 m² großen Sektors Anfang Oktober jeden Jahres statt. Die Trockensubstanz wurde durch Trocknen auf Gewichtskonstanz (110°C, 24 Stunden) und Abwiegen bestimmt. Die TS-Wurzelstreu wurde rechnerisch aus der Trockensubstanz der Laubstreu ermittelt, da hier ein direkter Zusammenhang besteht. Die TS-Wurzelstreu wurde mit 70% der Menge an TS-Laubstreu berechnet.

**Tabelle 1: Niederwaldstreifen gemäß Beispiel 1**

| | TS*-Laub [t TS/ha*J] | Begleitvegetation [tTS/ha*J] | TS-Wurzelstreu [t TS/ha*J] | TS-Summe [t TS/ha*J] | C-Akkumulierung [t C/ha*J] | TS-Humus-Akkumulierung [t TS/ha*J] |
|---|---|---|---|---|---|---|
| Umtrieb 1 | | | | | | |
| 1. Jahr | 0,2 | 3,0 | 0,1 | 3,3 | 0,6 | 0,9 |
| 2. Jahr | 0,8 | 3,2 | 0,6 | 4,6 | 0,8 | 1,3 |
| 3. Jahr | 2,0 | 2,0 | 1,4 | 5,4 | 0,9 | 1,6 |
| 4. Jahr | 3,1 | 1,6 | 2,2 | 6,9 | 1,2 | 2,0 |
| Umtrieb 2 | | | | | 0,0 | 0,0 |
| 5. Jahr | 1,0 | 2,9 | 2,4 | 6,3 | 1,1 | 1,8 |
| 6. Jahr | 2,0 | 2,5 | 3,0 | 7,5 | 1,3 | 2,2 |
| 7. Jahr | 4,2 | 2,0 | 3,5 | 9,7 | 1,6 | 2,8 |
| 8. Jahr | 7,0 | 1,8 | 4,5 | 13,3 | 2,2 | 3,8 |
| Umtrieb 3 | | | | | 0,0 | 0,0 |
| 9. Jahr | 1,0 | 2,5 | 3,2 | 6,7 | 1,1 | 1,9 |
| 10. Jahr | 2,1 | 2,0 | 3,6 | 7,7 | 1,3 | 2,2 |
| 11. Jahr | 4,3 | 1,6 | 4,0 | 9,9 | 1,7 | 2,8 |
| 12. Jahr | 6,1 | 1,4 | 4,3 | 11,8 | 2,0 | 3,4 |
| Umtrieb 4 | | | | | 0,0 | 0,0 |
| 13. Jahr | 0,9 | 2,3 | 3,3 | 6,5 | 1,1 | 1,9 |
| 14. Jahr | 2,0 | 1,8 | 3,7 | 7,5 | 1,3 | 2,2 |
| 15. Jahr | 3,8 | 1,5 | 3,9 | 9,2 | 1,5 | 2,6 |
| 16. Jahr | 5,4 | 1,1 | 4,1 | 10,6 | 1,8 | 3,0 |
| Umtrieb 5 | | | | | 0,0 | 0,0 |
| 17Jahr | 0,8 | 1,9 | 3,0 | 5,7 | 1,0 | 1,6 |
| 18. Jahr | 1,3 | 1,6 | 3,4 | 6,3 | 1,1 | 1,8 |
| 19. Jahr | 2,9 | 1,4 | 3,6 | 7,9 | 1,3 | 2,3 |
| 20. Jahr | 4,7 | 0,9 | 3,8 | 9,4 | 1,6 | 2,7 |
| | | | | | | |
| Summe 20J | 55,6 | 39,0 | 61,6 | 156,2 | 26,0 | 44,9 |
| | | | | | | |
| * TS = Trockensubstanz | | | | | | |

**Tabelle 2: Dauerwaldstreifen gemäß Beispiel 1**

| | TS*-Laub [t TS/ha*J] | Begleitvegetation [t TS/ha*J] | TS-Wurzelstreu [t TS/ha*J] | TS-Summe [t TS/ha*J] | C-Akkumulierung [t C/ha*J] | TS-Humus-Akkumulierung [t TS/ha*J] |
|---|---|---|---|---|---|---|
| 1. Jahr | 0,005 | 3,5 | 0,0 | 3,5 | 0,6 | 1,0 |
| 2. Jahr | 0,008 | 4,6 | 0,0 | 4,6 | 0,8 | 1,3 |
| 3. Jahr | 0,013 | 5,0 | 0,0 | 5,0 | 0,8 | 1,4 |
| 4. Jahr | 0,04 | 5,2 | 0,0 | 5,2 | 0,9 | 1,5 |
| 5. Jahr | 0,1 | 5,1 | 0,0 | 5,2 | 0,9 | 1,5 |
| 6. Jahr | 0,2 | 4,9 | 0,1 | 5,2 | 0,9 | 1,5 |
| 7. Jahr | 0,5 | 5,3 | 0,4 | 6,2 | 1,0 | 1,8 |
| 8. Jahr | 0,8 | 5,1 | 0,6 | 6,5 | 1,1 | 1,9 |
| 9. Jahr | 1,0 | 4,8 | 0,7 | 6,5 | 1,1 | 1,9 |
| 10. Jahr | 1,4 | 4,7 | 1,0 | 7,1 | 1,2 | 2,0 |
| 11. Jahr | 1,5 | 4,3 | 1,1 | 6,9 | 1,1 | 2,0 |
| 12. Jahr | 1,6 | 3,9 | 1,1 | 6,6 | 1,1 | 1,9 |
| 13. Jahr | 1,8 | 3,5 | 1,3 | 6,6 | 1,1 | 1,9 |
| 14. Jahr | 1,9 | 3,1 | 1,3 | 6,3 | 1,1 | 1,8 |
| 15. Jahr | 2,1 | 2,8 | 1,5 | 6,4 | 1,1 | 1,8 |
| 16. Jahr | 2,3 | 2,3 | 1,6 | 6,2 | 1,0 | 1,8 |
| 17. Jahr | 2,3 | 2,1 | 1,6 | 6,0 | 1,0 | 1,7 |
| 18. Jahr | 2,5 | 1,7 | 1,8 | 6,0 | 1,0 | 1,7 |
| 19. Jahr | 2,7 | 1,5 | 1,9 | 6,1 | 1,0 | 1,7 |
| 20. Jahr | 2,9 | 1,3 | 2,0 | 6,2 | 1,0 | 1,8 |
| | | | | | | |
| Summe 20 Jahre | 25,7 | 74,7 | 17,9 | 118,2 | 19,7 | 34,0 |
| | | | | | | |
| *TS = Trockensubstanz | | | | | | |

**Tabelle 3: Kohlenstoffbilanz gemäß Beispiel 1**

| | | |
|---|---|---|
| | **C-Akkumulierung** | **C-Emissionsminderung** |
| **Zeitraum: 0- 20 Jahre** | **[t C /ha]** | **[t C /ha]** |
| | | |
| | | |
| Thermische Verwertung von Hackschnitzeln aus Kurzumtriebsbewirtschaftung | - | 60,0 |
| | | |
| Humusaufbau durch Umwandlung von Laub-, Wurzelstreu und Begleitvegatation | 53,0 | - |
| | | |
| Aufbau unterirdische Wurzelmasse im Niederwaldstreifen | 15,0 | - |
| | | |
| Bestand an Dauerwaldbäumen durch Holzzuwachs | 15,0 | - |
| | | |
| Summe 1 | 83,0 | 60,0 |
| Summe 2 | 143,0 | |

### Beispiel 2:

Beispiel 2 ist in Fig. 8 dargestellt und betrifft einen streifenweise angelegten Mittelwald, bestehend aus Dauerwaldstreifen mit gruppenweise angelegten Dauerwaldbäumen im Wechseln mit Niederwaldstreifen mit dreireihig angelegten Niederwaldbäumen. In diesem Beispiel beträgt der kürzeste Abstand benachbarter Dauerwaldkorridore 11 m und der kürzeste Abstand benachbarter Niederwaldkorridore 10 m. Außerdem sind die maximale Niederwaldstreifenbreite (BNW) von 9 m, sowie die maximale Dauerwaldstreifenbreite (BDW) von 8 m verwirklicht.

### Beispiel 3:

Beispiel 3 ist in Fig. 7 dargestellt und betrifft einen streifenweise angelegten Mittelwald, bestehend aus Dauerwaldstreifen mit gruppenweise angelegten Dauerwaldbäumen im Wechseln mit Niederwaldstreifen mit zweireihig angelegten Niederwaldbäumen. In diesem Beispiel beträgt der kürzeste Abstand benachbarter Dauerwaldkorridore 4 m und der kürzeste Abstand benachbarter Niederwalkorridore 3,5 m. Außerdem sind die minimale Niederwaldstreifenbreite (BNW) von 2,25 m, sowie die minimale Dauerwaldstreifenbreite (BDW) von 1,75 m verwirklicht. Bei dem Pflanzplan in Beispiel 3 handelt es sich um einen sehr eng angelegten Verbund von Dauerwald- und Niederwaldstreifen mit sehr vielen Übergängen und einer sehr geringen durchschnittliche Breite der Dauer- und Niederwaldstreifen von 3,75 m.

Besonders geeignet ist diese eng angelegte Pflanzverbund für Dauerwaldbaumarten, welche einen geringen Kronendurchmesser aufweisen und bevorzugt zugleich schattenverträglich sind, wie beispielsweise Fichte, Tanne, Douglasie, Hainbuche, Speierling und Eibe.

### Beispiel 4:

Beispiel 4 ist in Fig. 9 dargestellt und betrifft einen streifenweise angelegten Mittelwald bestehend aus einreihigen Dauerwaldstreifen mit gruppenweise angelegten Dauerwaldbäumen im Wechseln mit Niederwaldstreifen mit zweireihig angelegten Niederwaldbäumen. In diesem Beispiel beträgt der kürzeste Abstand zwischen einem Dauerwaldkorridor und einem unmittelbar angrenzenden Niederwaldkorridor 9 m.

In Beispiel 4 ist die maximale Auslegung des "kürzesten Abstand eines Niederwaldkorridors zu einem unmittelbar angrenzenden Dauerwaldkorridor" realisiert.

Der dargestellte Pflanzplan eignet sich im Besonderen für den Aufbau eines Wirtschaftsdauerwaldes mit Dauerwaldbaumarten, die einen großen Kronendurchmesser aufweisen. Die maschinelle Ernte der Niederwaldbäume ist im dargestellten Pflanzplan aufgrund der großen Abstände gemäß Ziffer 8a besonders leicht zu bewerkstelligen.

## Patentansprüche

1. Mittelwald mit mindestens drei Dauerwaldstreifen aufweisend Dauerwaldbäume und mindestens zwei Niederwaldstreifen aufweisend Niederwaldbäume;
wobei Niederwaldstreifen und Dauerwaldstreifen abwechselnd angeordnet sind, so dass wiederkehrend mindestens ein Niederwaldstreifen zwischen zwei unmittelbar an diesen angrenzenden Dauerwaldstreifen angeordnet ist;
wobei die Dauerwaldbäume in den Dauerwaldstreifen jeweils einen Dauerwaldkorridor bilden;
wobei die Niederwaldbäume in den Niederwaldstreifen jeweils einen Niederwaldkorridor bilden;
wobei der kürzeste Abstand benachbarter Dauerwaldkorridore 4 bis 11 m beträgt,
**dadurch gekennzeichnet, dass**
der kürzeste Abstand zwischen einer Außengrenze eines Dauerwaldkorridors und einer am nächsten gelegenen Außengrenze eines unmittelbar angrenzenden Niederwaldkorridors 2,0 bis 7 m beträgt.

2. Mittelwald gemäß Anspruch 1, wobei die durchschnittliche Dauerwaldstreifenbreite (DBDW) kleiner ist als die durchschnittliche Niederwaldstreifenbreite (DBNW).

3. Mittelwald gemäß Anspruch 1 oder 2, wobei die Dauerwaldstreifenbreite (BDW) 1,75 bis 8,00 m beträgt und wobei die Niederwaldstreifenbreite (BNW) 2,25 bis 9,00 m beträgt.

4. Mittelwald gemäß einem der vorhergehenden Ansprüche, wobei mindestens 60% aller angepflanzten Bäume Niederwaldbäume sind und wobei höchstens 40% aller angepflanzten Bäume Dauerwaldbäume sind, bezogen auf die Gesamtanzahl der angepflanzten Bäume bei Bestandsbegründung.

5. Mittelwald gemäß einem der vorhergehenden Ansprüche, wobei bei der Begründung der Niederwaldstreifen mindestens eine Niederwaldbaumart angepflanzt wird, ausgewählt aus der Gruppe bestehend aus Pappeln, Weiden, Holunder und Goldregen und bei der Begründung der Dauerwaldstreifen mindestens eine Baumart angepflanzt wird, die nicht der Gruppe der Niederwaldbaumarten angehört.

6. Mittelwald gemäß einem der vorhergehenden Ansprüche, wobei der kürzeste Abstand zwischen benachbarten Niederwaldkorridoren kürzer ist als der kürzeste Abstand zwischen benachbarten Dauerwaldkorridoren.

7. Mittelwald gemäß einem der vorhergehenden Ansprüche mit einem ersten und einem zweiten Niederwaldstreifen, welche unmittelbar an einen Dauerwaldstreifen angrenzen, wobei der Außengrenze-Abstand zwischen dem Dauerwaldkorridor des Dauerwaldstreifens und dem Niederwaldkorridor des ersten unmittelbar angrenzenden Niederwaldstreifens anders ist als der Außengrenze-Abstand zwischen dem Dauerwaldkorridor des Dauerwaldstreifens und dem Niederwaldkorridor des zweiten unmittelbar angrenzenden Niederwaldstreifens.

8. Verfahren zur Begründung eines Mittelwalds mit den folgenden Verfahrensschritten:
Bereitstellen von mindesten drei Dauerwaldstreifen aufweisend Dauerwaldbäume;
Bereitstellen von mindestens zwei Niederwaldstreifen aufweisend Niederwaldbäume;
wobei Niederwaldstreifen und Dauerwaldstreifen abwechselnd angeordnet werden, so dass wiederkehrend mindestens ein Niederwaldstreifen zwischen zwei unmittelbar an diesen angrenzenden Dauerwaldstreifen angeordnet ist;
wobei die Dauerwaldbäume in den Dauerwaldstreifen jeweils einen Dauerwaldkorridor bilden;
wobei die Niederwaldbäume in den Niederwaldstreifen jeweils einen Niederwaldkorridor bilden;
wobei der kürzeste Abstand benachbarter Dauerwaldkorridore 4 bis 11 m beträgt,
**dadurch gekennzeichnet, dass**
der kürzeste Abstand zwischen einer Außengrenze eines Dauerwaldkorridors und einer am nächsten gelegenen Außengrenze eines unmittelbar angrenzenden Niederwaldkorridors 2,0 bis 7 m beträgt.

9. Verfahren zur Begründung eines Mittelwalds gemäß Anspruch 8, wobei bei der Begründung der Dauerwaldstreifen durch die Niederwaldbäume in den mindestens zwei Niederwaldstreifen, insbesondere das Kronendach der Niederwaldbäume in den mindestens zwei Niederwaldstreifen, weniger als 50 % Schatten auf die Dauerwaldbäume in den Dauerwaldstreifen geworfen wird.

10. Verfahren zur Begründung eines Wirtschaftsdauerwalds mit den folgenden Verfahrensschritten:
(i) Begründung eines Mittelwalds gemäß einem der vorgehenden Ansprüche 1 bis 8; und
(ii) wiederkehrende Ernte der Niederwaldbäume der mindestens zwei Niederwaldstreifens mit Umtriebs-Zeiten von 3 bis 5 Jahren;
**dadurch gekennzeichnet, dass**
die in dem Mittelwald angesiedelten Dauerwaldbäume während dem Verfahren nicht vollständig geerntet werden, sondern maximal bis zum Oberholz-Zielabstand von 4 bis 11 m einzeln entnommen werden, so dass mit zunehmender Zeit die Niederwaldwaldbäume durch die Dominanz der Dauerwaldbäume ausgedunkelt werden und das Verhältnis des Holzvorrates in Volumenfestmeter (Vfm) von Dauerwaldbäumen zu Niederwaldbäumen mindestens 1 ist, so dass ein Wirtschaftsdauerwald begründet wird.

## Claims

1. Coppice-with-standard with at least three permanent forest strips comprising permanent forest trees and at least two coppice strips comprising coppice trees;
wherein coppice strips and permanent forest strips are arranged alternately, so that recurrently at least one coppice strip is arranged between two permanent forest strips immediately adjacent thereto;
wherein the permanent forest trees in the permanent forest strips each form a permanent forest corridor;
wherein the coppice trees in the coppice strips each form a coppice corridor; wherein the shortest distance between adjacent permanent forest corridors is 4 to 11 m,
**characterized in that**
the shortest distance between an outer boundary of a permanent forest corridor and the closest outer boundary of an immediately adjacent coppice corridor is 2.0 to 7 m.

2. Coppice-with-standard according to claim 1, wherein the average permanent forest strip width (AWPF) is smaller than the average coppice strip width (AWC).

3. Coppice-with-standard according to claim 1 or 2, wherein the permanent forest strip width (WPF) is 1.75 to 8.00 m and wherein the coppice strip width (WC) is 2.25 to 9.00 m.

4. Coppice-with-standard according to one of the preceding claims, wherein at least 60% of all planted trees are coppice trees and wherein at most 40% of all planted trees are permanent forest trees, based on the total number of trees planted when establishing the stock.

5. Coppice-with-standard according to one of the preceding claims, wherein, when establishing the coppice strips, at least one coppice tree species is planted selected from the group consisting of poplars, willows, elder, and laburnum, and, when establishing the permanent forest strips, at least one tree species is planted which does not belong to the group of coppice tree species.

6. Coppice-with-standard according to one of the preceding claims, wherein the shortest distance between adjacent coppice corridors is shorter than the shortest distance between adjacent permanent forest corridors.

7. Coppice-with-standard according to one of the preceding claims, comprising a first and a second coppice strip, immediately adjacent to a permanent forest strip,
wherein the outer-boundary-distance between the permanent forest corridor of the permanent forest strip and the coppice corridor of the first immediately adjacent coppice strip is different from the outer-boundary-distance between the permanent forest corridor of the permanent forest strip and the coppice corridor of the second immediately adjacent coppice strip.

8. Process for establishing a coppice-with-standard with the following process steps:
providing at least three permanent forest strips comprising permanent forest trees;
providing at least two coppice strips comprising coppice trees;
wherein coppice strips and permanent forest strips are arranged alternately, so that recurrently at least one coppice strip is arranged between two permanent forest strips immediately adjacent thereto;
wherein the permanent forest trees in the permanent forest strips each form a permanent forest corridor
wherein the coppice trees in the coppice strips each form a coppice corridor;
wherein the shortest distance between adjacent permanent forest corridors is 4 to 11 m
**characterized in that**
the shortest distance between an outer boundary of a permanent forest corridor and the closest outer boundary of an immediately adjacent coppice corridor is 2.0 to 7 m.

9. Process for establishing a coppice-with-standard according to claim 8, wherein when establishing the permanent forest strips, less than 50 % shade is cast on the permanent forest trees in the permanent forest strips by the coppice trees, in particular the crown-canopy of the coppice trees, in the at least two coppice strips.

10. Process for establishing a commercial-permanent-forest with the following process steps:
(i) establishing a coppice-with-standard according to one of the preceding claims 1 to 8; and
(ii) recurrent harvesting of the coppice trees of the at least two coppice strips with rotation periods of 3 to 5 years;
**characterized in that**
the permanent forest trees established in the coppice-with-standard are not harvested completely during the process, but are removed individually up to a maximum overwood-target distance of 4 to 11 m,
so that over time the coppice trees are darkened-out by the dominance of the permanent forest trees and the ratio of the wood stock in volume solid metres (VSM) of permanent forest trees to coppice trees is at least 1, so that a commercial-permanent-forest is established.

## Revendications

1. Taillis sous futaie avec au moins trois bandes de futaie permanente comprenant des arbres de futaie permanente et au moins deux bandes de taillis comprenant des arbres de taillis ;
les bandes de taillis et les bandes de futaie permanente étant disposées en alternance, de sorte qu'au moins une bande de taillis est disposée de manière récurrente entre deux bandes de futaie permanente directement adjacentes à celle-ci ;
les arbres de futaie permanente dans les bandes de futaie permanente formant respectivement un corridor de futaie permanente ;
les arbres de taillis dans les bandes de taillis formant respectivement un corridor de taillis ;
la distance la plus courte entre des corridors de futaie permanente voisins étant de 4 à 11 m,
**caractérisé en ce que**
la distance la plus courte entre une limite extérieure d'un corridor de futaie permanente et une limite extérieure la plus proche d'un corridor de taillis directement adjacent est de 2,0 à 7 m.

2. Taillis sous futaie selon la revendication 1, dans lequel la largeur moyenne de bande de futaie permanente (DBDW) est inférieure à la largeur moyenne de bande de taillis (DBNW).

3. Taillis sous futaie selon la revendication 1 ou 2, dans lequel la largeur de bande de futaie permanente (BDW) est de 1,75 à 8,00 m et dans lequel la largeur de bande de taillis (BNW) est de 2,25 à 9,00 m.

4. Taillis sous futaie selon l'une quelconque des revendications précédentes, dans lequel au moins 60 % de tous les arbres plantés sont des arbres de taillis et dans lequel au plus 40 % de tous les arbres plantés sont des arbres de futaie permanente, par rapport au nombre total d'arbres plantés lors de la création du peuplement forestier.

5. Taillis sous futaie selon l'une quelconque des revendications précédentes, dans lequel, lors de la création des bandes de taillis, au moins une essence de taillis est plantée, choisie dans le groupe constitué par les peupliers, les saules, le sureau et le cytise, et lors de la création des bandes de futaie permanente, au moins une essence d'arbre n'appartenant pas au groupe des essences de taillis est plantée.

6. Taillis sous futaie selon l'une quelconque des revendications précédentes, dans lequel la distance la plus courte entre des corridors de taillis voisins est inférieure à la distance la plus courte entre des corridors de futaie permanente voisins.

7. Taillis sous futaie selon l'une quelconque des revendications précédentes avec une première et une deuxième bande de taillis immédiatement adjacentes à une bande de futaie permanente, la distance de limite extérieure entre le corridor de futaie permanente de la bande de futaie permanente et le corridor de taillis de la première bande de taillis immédiatement adjacente étant différente de la distance de limite extérieure entre le corridor de futaie permanente de la bande de futaie permanente et le corridor de taillis de la deuxième bande de taillis immédiatement adjacente.

8. Procédé de création d'un taillis sous futaie comprenant les étapes de procédé suivantes :
la mise en place d'au moins trois bandes de futaie permanente comprenant des arbres de futaie permanente ;
la mise en place d'au moins deux bandes de taillis comprenant des arbres de taillis ;
les bandes de taillis et les bandes de futaie permanente étant disposées en alternance, de sorte qu'au moins une bande de taillis est disposée de manière récurrente entre deux bandes de futaie permanente directement adjacentes à celle-ci ;
les arbres de futaie permanente dans les bandes de futaie permanente formant respectivement un corridor de futaie permanente ;
les arbres de taillis dans les bandes de taillis formant respectivement un corridor de taillis ;
la distance la plus courte entre des corridors de futaie permanente voisins étant de 4 à 11 m,
**caractérisé en ce que**
la distance la plus courte entre une limite extérieure d'un corridor de futaie permanente et une limite extérieure la plus proche d'un corridor de taillis directement adjacent est de 2,0 à 7 m.

9. Procédé de création d'un taillis sous futaie selon la revendication 8, dans lequel, lors de la création des bandes de futaie permanente, moins de 50 % d'ombre est projetée sur les arbres de futaie permanente dans les bandes de futaie permanente par les arbres de taillis dans les au moins deux bandes de taillis, en particulier la canopée des arbres de taillis dans les au moins deux bandes de taillis.

10. Procédé de création d'une futaie permanente de production comprenant les étapes de procédé suivantes :
(i) création d'un taillis sous futaie selon l'une quelconque des revendications 1 à 8 précédentes ; et
(ii) récolte récurrente des arbres de taillis des au moins deux bandes de taillis avec des temps de révolution de 3 à 5 ans ;
**caractérisé en ce que**
les arbres de futaie permanente implantés dans le taillis sous futaie ne sont pas entièrement récoltés pendant le procédé, mais sont prélevés individuellement au maximum jusqu'à la distance cible de 4 à 11 m de l'étage dominant, de sorte qu'avec le temps, les arbres de taillis s'assombrissent en raison de la dominance des arbres de futaie permanente et que le rapport du stock de bois en mètres cubes de volume (Vfm) des arbres de futaie permanente et des arbres de taillis est au moins égal à 1, de sorte qu'une futaie permanente de production est établie.
